# EUROPÄISCHE PATENTSCHRIFT

(11) **EP 4 486 164 B1**
(45) Veröffentlichungstag und Bekanntmachung des Hinweises auf die Patenterteilung: **29.10.2025**
(21) Anmeldenummer: 24708448.6
(22) Anmeldetag: 29.02.2024
(51) Int. Cl.: A44B 11/00, A44B 11/25, H01F 7/02, B62J 7/08, B62J 11/00

(54) **VERBINDUNGSVORRICHTUNG MIT EINEM NÄHBAREN VERBINDUNGSTEIL**
CONNECTION DEVICE WITH A SEWABLE CONNECTION PART
DISPOSITIF D'ATTACHE COMPRENANT UNE PIÈCE D'ATTACHE POUVANT ÊTRE COUSUE

(30) Priorität: 01.03.2023 DE 102023105098
(43) Veröffentlichungstag der Anmeldung: 08.01.2025
(73) Patentinhaber: Fidlock GmbH, 30659 Hannover (DE)
(72) Erfinder: LÜHRMANN, Matthias, 30625 Hannover (DE); RICHTER, David, 30167 Hannover (DE); FIEDLER, Joachim, 30519 Hannover (DE)
(74) Vertreter: Maikowski & Ninnemann Patentanwälte Partnerschaft mbB
(86) Internationale Anmeldenummer: PCT/EP2024/055241
(87) Internationale Veröffentlichungsnummer: WO 2024/180181

(56) Entgegenhaltungen:
- EP-A1- 3 381 315
- CN-U- 201 523 726
- DE-A1- 3 736 254
- DE-B3- 102021 213 556

## Beschreibung

Die Erfindung betrifft eine Verbindungsvorrichtung nach dem Oberbegriff des Anspruchs 1.

Eine derartige Verbindungsvorrichtung umfasst ein einer ersten Baugruppe zugeordnetes, erstes Verbindungsteil, das einen ersten Grundkörper und eine Eingriffseinrichtung mit zumindest einem Eingriffsvorsprung aufweist. Die Verbindungsvorrichtung umfasst zudem ein einer zweiten Baugruppe zugeordnetes, an das erste Verbindungsteil einsetzbares, zweites Verbindungsteil, das einen zweiten Grundkörper mit zumindest einem starr an dem zweiten Grundkörper angeordneten Eingriffsabschnitt aufweist. Der zumindest eine Eingriffsabschnitt ist mit der Eingriffseinrichtung des ersten Verbindungsteils in Eingriff bringbar, sodass in einer verbundenen Stellung das erste Verbindungsteil und das zweite Verbindungsteil aneinander gehalten sind.

Die Verbindungvorrichtung ist als magnetische Verbindungeinrichtung ausgestaltet. Dazu weisen das erste Verbindungsteil eine erste Magneteinrichtung und das zweite Verbindungsteil eine zweite Magneteinrichtung auf. Die erste Magneteinrichtung und die zweite Magneteinrichtung wirken zum Unterstützen des Ansetzens des ersten Verbindungsteils und des zweiten Verbindungsteils aneinander magnetisch anziehend zusammen.

Bei einer aus der EP 3 616 553 A1 bekannten Verschlussvorrichtung zum lösbaren Verbinden zweier Teile kann ein erstes Verbindungsteil an ein zweites Verbindungsteil angesetzt werden, um die Verbindungsteile miteinander zu verbinden. An einem der Verbindungsteile ist hierbei ein Schnürsenkel angeordnet, der durch Verbinden der Verbindungsteile miteinander gespannt werden kann.

Aus der EP 3 192 388 B1 ist eine Verschlussvorrichtung bekannt, bei der ein erstes Verbindungsteil einen starren Eingriffsvorsprung aufweist und mit einem zweiten Verbindungsteil verbunden werden kann. An dem zweiten Verbindungsteil ist ein Gurt verstellbar angeordnet.

Bei der Verbindungsvorrichtung ist das erste Verbindungsteil einer ersten Baugruppe zugeordnet. Das zweite Verbindungteil ist demgegenüber einer zweiten Baugruppe zugeordnet. Durch Schließen der Verbindungsvorrichtung, also durch Ansetzen der Verbindungsteile aneinander, können die Baugruppen miteinander verbunden werden. Eine oder beide der Baugruppen können beispielsweise durch einen Stoffabschnitt, zum Beispiel aus einem textilen Stoff, einem Lederstoff oder auch einem Kunststoffflächenabschnitt, zum Beispiel durch einen Gurt oder einen Abschnitt eines Bekleidungsstücks, ausgestaltet sein, wobei dies nicht zwingend ist und auch denkbar ist, dass ein oder beide der Baugruppen durch einen starren Gegenstand ausgebildet sind.

Aus der JPS57186307A ist eine Verbindungsvorrichtung bekannt, bei der Verbindungsteile mit zugeordneten Stoffabschnitten vernäht sind. Eines der Verbindungsteile weist einen Zapfen auf, der zum Verbinden der Verbindungsteile in eine zugeordnete Öffnung an dem anderen Verbindungsteil eingesetzt werden kann.

Aus der CN110063548A ist ein Knopf bekannt, der an einem Stoffabschnitt angeordnet und mit dem Stoffabschnitt vernäht ist. An dem Knopf ist ein Magnetelement angeordnet. Dokument DE 37 36 254 A1 offenbart eine Verbindungsvorrichtung entsprechend des Oberbegriffs von Anspruch 1.

Der Erfindung liegt die Aufgabe zugrunde, eine Verbindungvorrichtung zur Verfügung zu stellen, die eine zuverlässige Verbindung von Baugruppen miteinander ermöglicht, bei einfacher, platzsparender, kostengünstiger Herstellung der Verbindung zwischen den Baugruppen und den zugeordneten Verbindungsteilen.

Diese Aufgabe wird durch einen Gegenstand mit den Merkmalen des Anspruchs 1 gelöst.

Demnach weist der erste Grundkörper einen ersten Nähbereich zum Herstellen einer ersten Naht zur Verbindung mit der ersten Baugruppe auf, wobei der erste Nähbereich entlang einer ersten Ebene erstreckt ist und, betrachtet entlang der ersten Ebene, zumindest in einem Abschnitt einen kleineren Abstand zu der ersten Magneteinrichtung aufweist als der zumindest eine Eingriffsvorsprung. Zusätzlich oder alternativ weist der zweite Grundkörper einen zweiten Nähbereich zum Herstellen einer zweiten Naht zur Verbindung mit der zweiten Baugruppe auf, wobei der zweite Nähbereich entlang einer zweiten Ebene erstreckt ist und, betrachtet entlang der zweiten Ebene, zumindest in einem Abschnitt einen kleineren Abstand zu der zweiten Magneteinrichtung aufweist als der zumindest eine Eingriffsabschnitt.

Bei der Verbindungsvorrichtung sind das erste Verbindungsteil mit der ersten Baugruppe und/oder das zweite Verbindungsteil mit der zweite Baugruppe vernähbar. So kann das erste Verbindungsteil einen ersten Nähbereich aufweisen, an dem, durch den hindurch oder innerhalb dessen mittels einer Nadel und einem Faden genäht werden kann, um eine Nahtverbindung zwischen dem ersten Verbindungsteil und der zugeordneten, ersten Baugruppe herzustellen. In bestimmungsgemäßer Verwendung (nach Verbindung mit den zugeordneten Baugruppen) besteht eine Nahtverbindung zwischen dem ersten Verbindungsteil und der zugeordneten ersten Baugruppe über die unter Verwendung des ersten Nähbereichs hergestellte Naht. Zusätzlich oder alternativ kann das zweite Verbindungteil einen zweiten Nähbereich aufweisen, an dem mit einem Faden genäht werden kann, um eine Naht zur Verbindung zwischen dem zweiten Verbindungsteil und der zugeordneten zweiten Baugruppe herzustellen. In bestimmungsgemäß konfiguriertem Zustand besteht eine Nahtverbindung zwischen dem zweiten Verbindungsteil und der zugeordneten zweiten Baugruppe über die unter Verwendung des ersten Nähbereichs hergestellte Naht.

Dadurch, dass die Naht zur Verbindung des ersten Verbindungsteils mit der zugeordneten ersten Baugruppe und/oder die Naht zur Verbindung des zweiten Verbindungsteils mit der zugeordneten zweiten Baugruppe an dem jeweiligen Grundkörper in einer - im Vergleich zum Eingriffsvorsprung bzw. zum Eingriffsabschnitt - nahen Lagebeziehung zu der Magneteinrichtung des jeweiligen Verbindungsteils angeordnet ist, ergibt sich eine Nahtverbindung zwischen dem jeweilige Verbindungsteil und der zugeordneten Baugruppe mit kleinen räumlichen Ausmaßen. Dadurch, dass die Verbindung über den Grundkörper und nicht einen nach außen vorstehenden Flansch hergestellt wird, kann die Flächenausdehnung (auch bezeichnet als Fußabdruck), über die sich die Naht erstreckt, vergleichsweise klein sein.

Dadurch, dass die Nahtverbindung des jeweiligen Verbindungsteils mit der zugeordneten Baugruppe in räumlich vergleichsweise enger Lagebeziehung zu der jeweils zugeordneten Magneteinrichtung ausgeführt ist, ergibt sich eine Kraftübertragung zwischen dem Verbindungsteil und der zugeordneten Baugruppe in räumlich enger Lagebeziehung zu der Magneteinrichtung, die beispielsweise zentral an dem jeweiligen Verbindungsteil angeordnet ist. Die Naht ist hierbei räumlich zum Beispiel zwischen der Magneteinrichtung und dem zumindest einen Eingriffsvorsprung bzw. dem Eingriffsabschnitt gelegen, sodass sich ein günstiger Kraftfluss zwischen den Baugruppen und den dazwischen angeordneten Verbindungsteilen ergibt.

Die Verbindung des jeweiligen Verbindungsteils mit der zugeordneten Baugruppe ist einfach und kostengünstig durch Vernähen herstellbar, wobei eine solche Nahtverbindung belastbar ausgeführt sein kann und eine enge Lagebeziehung zwischen dem jeweiligen Verbindungsteil und der zugeordneten Baugruppe ermöglicht. Ein Annähen ist zudem auch auf kleinen Flächen, insbesondere auf schmalen Gurtbändern wie sie für Fahrradhelme verwendet werden, möglich.

Denkbar ist hierbei, dass am Ort der Nahtverbindung, zum Beispiel durch Auswahl und Dimensionierung des Nahtfadens, eine Sollbruchstelle geschaffen wird, die bei Übersteigen einer gewissen Belastungskraft reißt. Bei Übersteigen einer vorbestimmten Belastungskraft trennt sich somit aufgrund eines Reißens der Naht das Verbindungsteil von der zugeordneten Baugruppe, was zum Beispiel zum Ermöglichen einer Nottrennung bei übermäßiger Belastung, zum Beispiel bei Verwendung an einem Airbag, sinnvoll sein kann.

Die erste Baugruppe und/oder die zweite Baugruppe können zum Beispiel durch einen biegeschlaffen Stoffabschnitt, zum Beispiel aus einem textilen Stoff, einem Lederstoff, einem Kunststoffflächenabschnitt und einem anderen Material gefertigt sein. Die erste Baugruppe und/oder die zweite Baugruppe können beispielsweise durch einen Gurt, durch ein Band, durch ein Teil eines Kleidungsstücks, durch ein Teil einer Tasche, eines Rucksacks oder eines anderen Behälters oder eine gänzlich andere Baugruppe ausgebildet sein.

Ein solcher Stoffabschnitt kann ganz unterschiedliche Stoffstärken aufweisen, wobei bei größeren Stoffstärken oder bei einem härteren Material der Stoff zum Anbringen der Naht perforiert sein kann.

Die erste Baugruppe und/oder die zweite Baugruppe können aber auch durch einen festen Gegenstand, zum Beispiel durch ein Kunststoffteil, ausgebildet sein.

Bei der Verbindungsvorrichtung können eines oder beide der Verbindungsteile mit der jeweils zugeordneten Baugruppe über eine Nahtverbindung verbunden sein. Zum Herstellen der Nahtverbindung wird ein Nähfaden durch den Nähbereich an dem jeweiligen Grundkörper geführt, um auf diese Weise eine Naht zwischen dem jeweiligen Verbindungsteil und der zugeordneten Baugruppe herzustellen und somit das Verbindungsteil mit der Baugruppe zu verbinden.

Darunter, dass der erste Grundkörper bzw. der zweite Grundkörper einen Nähbereich aufweist, ist vorliegend zu verstehen, dass der jeweilige Grundkörper einen Bereich aufweist, in dem Nahtlöcher angeordnet sind oder angeordnet werden können. Die Nahtlöcher können an dem Nähbereich vordefiniert sein. Die Nahtlöcher können aber auch durch Durchstechen des Nähbereichs erst an dem Nähbereich geformt werden, wenn die Naht durch eine Nadel hergestellt wird, wobei der Grundkörper in dem Nähbereich hierzu so ausgestaltet ist, dass der Grundkörper mit einer Nadel durchstochen werden kann, beispielsweise indem der Grundkörper in dem Nähbereich eine durchstechbare Dünnstelle aufweist oder der Nähbereich aus einem weichen Material, zum Beispiel einem Folien- oder Stoffmaterial geformt ist. Die durchstechbare Dünnstelle sollte aus einem ausreichend zähen Material ausgebildet sein, d.h. das Durchstechen führt nicht zu sprödem Bruch.

Der Abstand zwischen der ersten Magneteinrichtung und dem ersten Nähbereich einerseits und zwischen der ersten Magneteinrichtung und dem zumindest einen Eingriffsvorsprung andererseits wird entlang der ersten Ebene gemessen. Der Abstand kann hierbei insbesondere zwischen dem Zentrum der ersten Magneteinrichtung und dem ersten Nähbereich bzw. zwischen dem Zentrum der ersten Magneteinrichtung und dem zumindest einen Eingriffsvorsprung gemessen werden. Darunter, dass zumindest ein Abschnitt des ersten Nähbereichs einen kleineren Abstand zu der ersten Magneteinrichtung aufweist als der zumindest eine Eingriffsvorsprung, ist zu verstehen, dass zumindest ein Teil des ersten Nähbereichs näher an der ersten Magneteinrichtung gelegen ist als der zumindest eine Eingriffsvorsprung (betrachtet entlang der ersten Ebene). Um dies zu bestimmen, kann um das Zentrum der ersten Magneteinrichtung in der ersten Ebene ein (gedachter) Kreis gezogen werden, der einen Radius aufweist, der dem Abstand zwischen dem Zentrum der ersten Magneteinrichtung und dem zumindest einen Eingriffsvorsprung entspricht. Ist zumindest ein Teil des ersten Nähbereichs innerhalb des Kreises gelegen, so weist dieser Teil einen kleineren Abstand zu dem Zentrum der ersten Magneteinrichtung auf als der zumindest eine Eingriffsvorsprung.

Der Abstand zwischen der ersten Magneteinrichtung und dem zumindest einen Eingriffsvorsprung wird hierbei zwischen dem Zentrum der ersten Magneteinrichtung und einer radial inneren Kante des zumindest einen Eingriffsvorsprungs gemessen.

Der Abstand zwischen der zweiten Magneteinrichtung und dem zweiten Nähbereich einerseits und zwischen der zweiten Magneteinrichtung und dem zumindest einen Eingriffsabschnitt andererseits wird entlang der zweiten Ebene gemessen. Der Abstand kann hierbei insbesondere zwischen dem Zentrum der zweiten Magneteinrichtung und dem zweiten Nähbereich bzw. zwischen dem Zentrum der zweiten Magneteinrichtung und dem zumindest einen Eingriffsabschnitt gemessen werden. Darunter, dass zumindest ein Abschnitt des zweiten Nähbereichs einen kleineren Abstand zu der zweiten Magneteinrichtung aufweist als der zumindest eine Eingriffsvorsprung, ist zu verstehen, dass zumindest ein Teil des zweiten Nähbereichs näher an der zweiten Magneteinrichtung gelegen ist als der zumindest eine Eingriffsabschnitt (betrachtet entlang der zweiten Ebene). Um dies zu bestimmen, kann um das Zentrum der zweiten Magneteinrichtung in der zweiten Ebene ein (gedachter) Kreis gezogen werden, der einen Radius aufweist, der dem Abstand zwischen dem Zentrum der ersten Magneteinrichtung und dem zumindest einen Eingriffsabschnitt entspricht. Ist zumindest ein Teil des zweiten Nähbereichs innerhalb des Kreises gelegen, so weist dieser Teil einen kleineren Abstand zu dem Zentrum der zweiten Magneteinrichtung auf als der zumindest eine Eingriffsabschnitt.

Der Abstand zwischen der zweiten Magneteinrichtung und dem zumindest einen Eingriffsabschnitt wird zwischen dem Zentrum der zweiten Magneteinrichtung und einer äußeren Kante des zumindest einen Eingriffsabschnitts gemessen.

In einer Ausgestaltung weist der erste Grundkörper eine erste Anordnung von Nahtlöchern zum Herstellen der ersten Naht zur Verbindung mit der ersten Baugruppe auf, wobei die Nahtlöcher der ersten Anordnung von Nahtlöchern entlang der ersten Ebene aneinander angereiht sind und zumindest einige der Nahtlöcher der ersten Anordnung von Nahtlöchern, betrachtet entlang der ersten Ebene, einen kleineren Abstand zu der ersten Magneteinrichtung aufweisen als der zumindest eine Eingriffsvorsprung. Zusätzlich oder alternativ weist der zweite Grundkörper eine zweite Anordnung von Nahtlöchern zum Herstellen der zweiten Naht zur Verbindung mit der zweiten Baugruppe auf, wobei die Nahtlöcher der zweiten Anordnung von Nahtlöchern entlang der zweiten Ebene aneinander angereiht sind und zumindest einige der Nahtlöcher der zweiten Anordnung von Nahtlöchern, betrachtet entlang der zweiten Ebene, einen kleineren Abstand zu der zweiten Magneteinrichtung aufweisen als der zumindest eine Eingriffsabschnitt.

Die erste Anordnung von Nahtlöchern bildet den ersten Nähbereich aus, über den die erste Naht hergestellt werden kann. Zusätzlich oder alternativ bildet die zweite Anordnung von Nahtlöchern den zweiten Nähbereich aus, über den die zweite Naht hergestellt werden kann.

Die Nahtlöcher können zum Beispiel senkrecht oder schräg zu der jeweiligen Ebene durch den jeweiligen Grundkörper hindurch erstreckt sein. Möglich ist aber auch, dass die Nahtlöcher zum Beispiel als (nicht vollständig durch den Grundkörper hindurch erstreckte) Sacklöcher an dem Grundkörper vordefiniert sind und erst bei Herstellen der Naht durch eine Nähnadel durchstochen werden.

Sind Nahtlöcher an dem ersten Grundkörper des ersten Verbindungsteils vorgesehen, sind die Nahtlöcher so zueinander angeordnet, dass sie entlang der ersten Ebene aneinander angereiht sind und dabei, betrachtet entlang der ersten Ebene, zumindest teilweise näher an der ersten Magneteinrichtung liegen als der zumindest eine Eingriffsvorsprung. Zumindest einige der Nahtlöcher nehmen somit eine solche räumliche Lage an dem ersten Grundkörper ein, dass sie näher an der ersten Magneteinrichtung liegen als der zumindest eine Eingriffsvorsprung. Einige der Nahtlöcher weisen somit einen kleineren Abstand zu der ersten Magneteinrichtung auf als der zumindest eine Eingriffsvorsprung, der, betrachtet entlang der ersten Ebene, eine weiter außen gelegene Position relativ zu der ersten Magneteinrichtung einnimmt.

Sind Nahtlöcher an dem zweiten Grundkörper des zweiten Verbindungteils vorgesehen, sind die Nahtlöcher so zueinander angeordnet, dass sie entlang der zweiten Ebene aneinander angereiht sind und dabei, betrachtet entlang der zweiten Ebene, zumindest teilweise näher an der zweiten Magneteinrichtung liegen als der zumindest eine Eingriffsabschnitt. Zumindest einige der Nahtlöcher nehmen somit eine solche räumliche Lage an dem zweiten Grundkörper ein, dass sie näher an der zweiten Magneteinrichtung gelegen sind als der zumindest eine Eingriffsabschnitt. Zumindest einige der Nahtlöcher weisen somit, betrachtet entlang der zweiten Ebene, einen kleineren Abstand zu der zweiten Magneteinrichtung auf als der zumindest eine Eingriffsabschnitt, der mit Bezug auf die zweite Magneteinrichtung weiter außen gelegen ist.

In einer Ausgestaltung ist der erste Nähbereich entlang zumindest einer geraden oder gekrümmten Linie erstreckt. Zusätzlich oder alternativ ist der zweite Nähbereich entlang zumindest einer geraden oder gekrümmten Linie erstreckt. Beispielsweise sind die Nahtlöcher der ersten Anordnung von Nahtlöchern entlang zumindest einer geraden oder gekrümmten Linie aneinander angereiht. Zusätzlich oder alternativ sind die Nahtlöcher der zweiten Anordnung von Nahtlöchern entlang zumindest einer geraden oder gekrümmten Linie aneinander angereiht. Die Nahtlöcher an dem jeweiligen Verbindungsteil können somit eine Reihe entlang einer geraden oder gekrümmten Linie bilden, wobei auch denkbar ist, dass sich Nahtlöcher entlang mehrerer gerader oder gekrümmter Linien erstrecken und somit mehrere Nähte zur Verbindung des jeweiligen Verbindungsteils mit der zugeordneten Baugruppe hergestellt werden können.

In einer Ausgestaltung ist der erste Nähbereich entlang mehrerer zueinander unter einem Winkel angeordneter Linien erstreckt. Zusätzlich oder alternativ ist der zweite Nähbereich entlang mehrerer zueinander unter einem Winkel angeordneter Linien aneinander erstreckt. Beispielsweise sind die Nahtlöcher der ersten Anordnung von Nahtlöchern entlang mehrerer zueinander unter einem Winkel angeordneter Linien aneinander angereiht. Zusätzlich oder alternativ können Nahtlöcher der zweiten Anordnung von Nahtlöchern entlang mehrerer zueinander unter einem Winkel angeordneter Linien aneinander angereiht sein. Linien können somit einen Winkelzug nach Art eines Polygonzugs ausbilden, wobei die Linien um einen Winkel ungleich 0° und ungleich 180° zueinander abgewinkelt sind. Die einzelnen Linien können hierbei geradlinig erstreckt oder auch gekrümmt sein. Insbesondere können die Linien zum Herstellen einer durchgehenden Naht aneinander anschließen.

In einer Ausgestaltung sind in dem ersten Nähbereich Nahtlöcher zum Herstellen einer umfänglich geschlossenen, ersten Naht aneinander angereiht. Zusätzlich oder alternativ sind in dem zweiten Nähbereich Nahtlöcher zum Herstellen einer umfänglich geschlossenen, zweiten Naht aneinander angereiht. Beispielsweise sind die Nahtlöcher der ersten Anordnung von Nahtlöchern zum Herstellen einer umfänglich geschlossenen, ersten Naht aneinander angereiht. Zusätzlich oder alternativ sind die Nahtlöcher der zweiten Anordnung von Nahtlöchern zum Herstellen einer umfänglich geschlossenen, zweiten Naht aneinander angereiht. Die Nahtlöcher des jeweiligen Verbindungsteils bilden somit eine Reihe aus, die umfänglich geschlossen ist. Die Nahtlöcher können beispielsweise entlang einer Kreislinie aneinander angereiht sein und somit umfänglich geschlossen sein. Die Nahtlöcher können in einem anderen Beispiel auch entlang eines Polygonzugs, beispielsweise eines vier- oder mehreckigen Polygonzugs, aneinander angereiht sein und somit umfänglich geschlossen sein. Die aneinander angereihten Nahtlöcher sind so zueinander gelegen, dass eine umfänglich geschlossene Naht hergestellt werden kann.

In einer Ausgestaltung ist der erste Nähbereich, betrachtet entlang der ersten Ebene, umfänglich um die erste Magneteinrichtung erstreckt. Zusätzlich oder alternativ ist der zweite Nähbereich, betrachtet entlang der zweiten Ebene, umfänglich um die zweite Magneteinrichtung erstreckt ist. Beispielsweise sind die Nahtlöcher der ersten Anordnung von Nahtlöchern, betrachtet entlang der ersten Ebene, umfänglich um die erste Magneteinrichtung aneinander angereiht. Zusätzlich oder alternativ sind die Nahtlöcher der zweiten Anordnung von Nahtlöchern, betrachtet entlang der zweiten Ebene, umfänglich um die zweite Magneteinrichtung einander angereiht. Die Nahtlöcher an dem jeweiligen Verbindungsteil sind somit derart aneinander angereiht, dass sie sich umfänglich um die Magneteinrichtung des jeweiligen Verbindungsteils herum erstrecken und somit eine Aneinanderreihung von Nahtlöchern um die jeweilige Magneteinrichtung herum ausbilden.

In einer Ausgestaltung ist der erste Grundkörper mit einer entlang der ersten Ebene erstreckten, ersten äußeren Seite an die erste Baugruppe ansetzbar, wobei der erste Nähbereich an der ersten äußeren Seite erstreckt ist, beispielsweise indem die Nahtlöcher der ersten Anordnung von Nahtlöchern an der ersten äußeren Seite aneinander angereiht sind. Zusätzlich oder alternativ ist der zweite Grundkörper mit einer entlang der zweiten Ebene erstreckten, zweiten äußeren Seite an die zweite Baugruppe ansetzbar, wobei der zweite Nähbereich an der zweiten äußeren Seite erstreckt ist, beispielsweise indem die Nahtlöcher der zweiten Anordnung von Nahtlöchern an der zweiten äußeren Seite aneinander angereiht sind. Das jeweilige Verbindungsteil kann an die zugeordnete Baugruppe, zum Beispiel einen Stoffabschnitt, zum Beispiel einen Gurt oder einen anderen textilen oder aus einem anderen Material gefertigten Flächenabschnitt, angesetzt werden, indem der Grundkörper des jeweiligen Verbindungsteils mit einer äußeren Seite an die zugeordnete Baugruppe angesetzt wird. An dieser äußeren Seite sind die Nahtlöcher des jeweiligen Verbindungsteils aneinander angereiht, sodass über die Nahtlöcher eine Nahtverbindung zwischen den Verbindungsteilen und der zugeordneten Baugruppe hergestellt werden kann.

Hierbei kann vorgesehen sein, dass der erste Grundkörper an einer der ersten äußeren Seite abgewandten, ersten inneren Seite eine erste Nut aufweist, in der Nahtlöcher des ersten Nähbereichs münden. Zusätzlich oder alternativ kann der zweite Grundkörper an einer der zweiten äußeren Seite abgewandten, zweiten inneren Seite eine zweite Nut aufweisen, in der Nahtlöcher des zweiten Nähbereichs münden. An einer der äußeren Seite abgewandten, inneren Seite des jeweiligen Verbindungsteils ist somit eine Nut geformt, innerhalb derer die Nahtlöcher des jeweiligen Verbindungsteils zugänglich sind. Die Nahtlöcher erstrecken sich (zumindest bei hergestellter Naht) von der äußeren Seite durch den Grundkörper hindurch bis in den Bereich der Nut an der inneren Seite, sodass die Nahtlöcher sowohl von der äußeren Seite als auch von der inneren Seite zugänglich sind und somit eine Naht durch Hindurchführen eines Nähfadens durch die Nahtlöcher hergestellt werden kann.

Die Nut an der inneren Seite des jeweiligen Verbindungsteils erstreckt sich vorzugsweise entlang der aneinander angereihten Nahtlöcher und folgt somit der Aneinanderreihung der Nahtlöcher.

Die Nut ist als Vertiefung an dem Grundkörper geformt und von der inneren Seite in den Grundkörper eingeformt. Die Nahtlöcher erstrecken sich durch den Grundkörper hindurch von der äußeren Seite hin zu der inneren Seite und münden in der Nut.

In einer Ausgestaltung ist die erste Nut an der ersten inneren Seite des Grundkörpers umfänglich um die erste Magneteinrichtung erstreckt. Zusätzlich oder alternativ ist die zweite Nut an der zweiten inneren Seite des zweiten Grundkörpers umfänglich um die zweite Magneteinrichtung erstreckt. Die Nut umgibt somit die Magneteinrichtung des jeweiligen Verbindungsteils umfänglich.

Die Verbindungsteile können zum Verbinden der Baugruppen aneinander angesetzt werden und sind in einer verbundenen Stellung so zueinander angeordnet, dass sie durch magnetische Wechselwirkung der Magneteinrichtungen und zudem durch den Eingriff des Eingriffsabschnitts des zweiten Verbindungsteils mit der Eingriffseinrichtung des ersten Verbindungsteils aneinander gehalten sind. In betriebsgemäßem Zustand sind die Verbindungsteile mit der jeweils zugeordneten Baugruppe verbunden, wobei zumindest eines der Verbindungsteile über eine an den Nahtlöchern des Verbindungsteils hergestellte Naht mit der zugeordneten Baugruppe verbunden ist. Zum Schließen der Verbindungsvorrichtung werden die Verbindungsteile unter magnetischer Unterstützung durch eine magnetische Anziehungskraft der Magneteinrichtungen aneinander angesetzt, sodass der zumindest eine Eingriffsabschnitt des zweiten Verbindungsteils mit dem zumindest einen Eingriffsvorsprung der Eingriffseinrichtung des ersten Verbindungsteils in Eingriff gelangt und somit eine Verbindung zwischen den Verbindungsteilen hergestellt wird.

Zum Schließen der Verbindungsvorrichtung können die Verbindungsteile zum Beispiel entlang einer Schließrichtung aneinander angesetzt werden. Entlang der Schließrichtung wirken die Magneteinrichtungen magnetisch anziehend zusammen, sodass die Verbindungsteile unter magnetischer Unterstützung zueinander hingezogen werden.

Hierbei kann aber auch ein Ansetzen der Verbindungsteile entlang einer von der Schließrichtung abweichenden Richtung möglich sein.

Die Verbindung zwischen den Verbindungsteilen in der verbundenen Stellung kann spielfrei oder spielbehaftet sein.

Der Eingriff des zumindest einen Eingriffsabschnitts mit dem zumindest einen Eingriffsvorsprung in der verbundenen Stellung kann formschlüssig oder kraftformschlüssig sein. Insbesondere können der zumindest eine Eingriffsabschnitt und/oder der zumindest eine Eingriffsvorsprung senkrecht zu einer Schließrichtung erstreckte Flächen oder zur Schließrichtung schräg erstreckte Flächen aufweisen, die in der verbundenen Stellung zueinander hinweisen und eine formschlüssige oder eine kraftformschlüssige, spielfreie oder spielbehaftete Verbindung herstellen.

Der Halt der Verbindungsteile in der verbundenen Stellung kann entlang der Schließrichtung und/oder entlang einer zur Schließrichtung quer oder schräg gerichteten Richtung wirken.

Beispielsweise kann eine Lastrichtung, entlang derer zum Beispiel Gurtkräfte wirken, quer oder schräg zur Schließrichtung gerichtet sein. Eine Lastrichtung kann aber auch zum Beispiel entgegen der Schließrichtung wirken.

Das Ansetzen der Verbindungsteile aneinander wird magnetisch unterstützt. Hierzu weisen das erste Verbindungsteil eine erste Magneteinrichtung und das zweite Verbindungsteil eine zweite Magneteinrichtung auf. Die erste Magneteinrichtung und die zweite Magneteinrichtung unterstützen insbesondere das Ansetzen der Verbindungsteile aneinander. Die Magneteinrichtungen wirken zum Beispiel entlang einer Schließrichtung magnetisch anziehend, sodass die Magneteinrichtungen eine magnetische Anziehungskraft entlang der Schließrichtung bewirken und die Verbindungsteile beim Ansetzen entlang der Schließrichtung hin zueinander ziehen.

Die Magneteinrichtungen können zum Beispiel jeweils durch einen Permanentmagneten ausgebildet sein. Möglich ist aber auch, eine der Magneteinrichtungen durch einen Permanentmagneten und die andere der Magneteinrichtungen durch einen magnetischen Anker und somit durch ein passivmagnetisches (ferromagnetisches) Element auszugestalten.

In einer Ausgestaltung ist der zumindest eine Eingriffsabschnitt durch einen Randabschnitt geformt, der entlang einer parallel oder schräg zur zweiten Ebene gerichteten Richtung nach außen weist und entlang der Richtung mit dem zumindest einen Eingriffsvorsprung in Eingriff bringbar ist. Der zumindest eine Eingriffsabschnitt kann durch einen an dem zweiten Grundkörper umlaufenden, nach außen weisenden Randabschnitt geformt sein. In anderer Ausgestaltung kann der zumindest eine Eingriffsabschnitt nicht umlaufend an dem Grundkörper geformt sein, sondern beispielsweise nur an einer Stirnseite. Der Randabschnitt kann den zweiten Grundkörper hierbei betrachtet entlang der zweiten Ebene nach außen begrenzen.

Dadurch, dass der zumindest eine Eingriffsabschnitt entlang der parallel oder schräg zur zweiten Ebene gerichteten Richtung mit dem zumindest einen Eingriffsvorsprung in Eingriff gebracht werden kann, gelangen der zumindest eine Eingriffsabschnitt und der zumindest eine Eingriffsvorsprung, betrachtet entlang einer zur zweiten Ebene senkrechten Richtung, zumindest zum Teil miteinander in Deckung. Über den Eingriff wird dadurch (auch) ein Halt entlang der zur zweiten Ebene senkrechten Richtung zwischen den Verbindungsteilen hergestellt.

In einer Ausgestaltung springt der zumindest eine Eingriffsabschnitt des zweiten Verbindungsteils, betrachtet entlang der zweiten Ebene, gegenüber einem weiteren Abschnitt des zweiten Grundkörpers nach außen vor. Die zweite Ebene kann zum Beispiel näherungsweise senkrecht zu einer Schließrichtung gerichtet sein, entlang derer die Verbindungsteile zum Schließen der Verbindungsvorrichtung aneinander angesetzt werden können (wobei nicht ausgeschlossen ist, dass die Verbindungsteile auch in einer von der Schließrichtung abweichenden Richtung aneinander angesetzt werden können). Quer zur Schließrichtung springt der zumindest eine Eingriffsabschnitt von einem weiteren Abschnitt des zweiten Grundkörpers des zweiten Verbindungsteils vor. Der zumindest eine Eingriffsabschnitt ist somit mit Bezug auf eine zur zweiten Ebene senkrechte Richtung hinterschnitten, indem der weitere Abschnitt relativ zum Eingriffsabschnitt zurückspringt und somit ein In-Eingriff-bringen mit dem zumindest einen Eingriffsvorsprung der Eingriffseinrichtung des ersten Verbindungsteils ermöglicht.

Eine Fläche, mit der der Eingriffsabschnitt zurückspringt, kann hierbei parallel zur zweiten Ebene oder schräg zur zweiten Ebene erstreckt sein. In der verbundenen Stellung kann ein Eingriff des Eingriffsabschnitts mit dem zumindest einen Eingriffsvorsprung der Eingriffseinrichtung des ersten Verbindungsteils formschlüssig oder kraftformschlüssig und dabei spielbehaftet oder auch spielfrei sein.

Der weitere Abschnitt kann beispielsweise einen Befestigungsabschnitt ausbilden, über den das zweite Verbindungsteil an die zugeordnete zweite Baugruppe angesetzt werden kann und an dem beispielsweise die Anordnung von Nahtlöchern geformt ist. Der Befestigungsabschnitt, der gegenüber dem Eingriffsabschnitt (betrachtet entlang der zweiten Ebene) zurückspringt, kann insbesondere die zweite äußere Seite verwirklichen, an der die Nahtlöcher aneinander angereiht sind und mit der der Grundkörper des zweiten Verbindungsteils an die zugeordnete zweite Baugruppe zur Verbindung angesetzt werden kann.

In einer Ausgestaltung läuft der zumindest eine Eingriffsabschnitt des zweiten Verbindungsteils, betrachtet entlang der zweiten Ebene, umfänglich an dem zweiten Grundkörper um. In diesem Fall kann das zweite Verbindungsteil insbesondere einen einzigen Eingriffsabschnitt aufweisen, der sich umfänglich an dem zweiten Grundkörper erstreckt und dabei (radial) nach außen vorspringt. Der Eingriffsabschnitt ist hinterschnitten, indem ein an den Eingriffsabschnitt anschließender, weiterer Abschnitt gegenüber dem Eingriffsabschnitt nach innen zurückspringt und somit ein In-Eingriff-bringen des Eingriffsabschnitts mit dem zumindest einen Eingriffsvorsprung der Eingriffseinrichtung des ersten Verbindungsteils ermöglicht.

Ist der Grundkörper des zweiten Verbindungsteils an einem den Eingriffsabschnitt ausbildenden Zapfen rotationssymmetrisch ausgebildet, steht der Eingriffsabschnitt radial nach außen vor und läuft kreisförmig an dem Zapfen um.

Der zweite Grundkörper kann aber auch nicht-rotationssymmetrisch ausgebildet sein. In diesem Fall kann der Eingriffsabschnitt beispielsweise eckig, zum Beispiel viereckig, an dem Grundkörper umlaufen.

Flächen des Eingriffsabschnitts einerseits und des zumindest einen Eingriffsvorsprungs andererseits, die in der verbundenen Stellung einander zugewandt sind und spielfrei oder spielbehaftet miteinander in Eingriff stehen, können entlang der zweiten Ebene oder schräg zur zweiten Ebene ausgerichtet sein, um eine formschlüssige oder kraftformschlüssige Verbindung herzustellen.

Die Verbindung kann hierbei über den zumindest einen Eingriffsabschnitt und den zumindest einen Eingriffsvorsprung allein hergestellt sein. Denkbar ist aber auch, dass weitere Verbindungspartner zum Herstellen der Verbindung mitwirken.

In einer Ausgestaltung weist der zweite Grundkörper zwei an voneinander wegweisenden Kanten geformte Eingriffsabschnitte auf. An dem Grundkörper sind somit (mindestens) zwei Eingriffsabschnitte geformt, die an unterschiedlichen Kanten des Grundkörpers geformt sind. Die Eingriffsabschnitte sind jeweils hinterschnitten, indem die Eingriffsabschnitte nach außen hin vorspringen und ein an den jeweiligen Eingriffsabschnitt anschließender, weiterer Abschnitt des Grundkörpers so zurückspringt, dass der jeweilige Eingriffsabschnitt mit einem zugeordneten Eingriffsvorsprung der Eingriffseinrichtung des ersten Verbindungsteils in Eingriff gebracht werden kann, um die Verbindungvorrichtung zu schließen.

In einer Ausgestaltung ist der zumindest eine Eingriffsvorsprung des ersten Verbindungsteils starr an dem ersten Grundkörper geformt. Der zumindest eine Eingriffsabschnitt des zweiten Verbindungsteils ist hierbei beispielsweise entlang einer parallel oder schräg zur ersten Ebene weisenden Eingriffsrichtung mit dem zumindest einen Eingriffsvorsprung des ersten Verbindungsteils in Eingriff bringbar. Der zumindest eine Eingriffsvorsprung des ersten Verbindungsteils ist somit starr und nicht elastisch an dem ersten Grundkörper des ersten Verbindungsteils geformt.

Zum Schließen der Verbindungvorrichtung kann der zumindest eine Eingriffsvorsprung mit dem starr an dem zweiten Grundkörper des zweiten Verbindungsteils geformten, zumindest einen Eingriffsabschnitt in Eingriff gebracht werden, wobei dies vorzugsweise dadurch erfolgt, dass der zumindest eine Eingriffsabschnitt in eine parallel oder schräg zur ersten Ebene weisende Eingriffsrichtung in Eingriff mit dem zumindest einen Eingriffsvorsprung geschoben wird. In der verbundenen Stellung ist der zumindest eine Eingriffsabschnitt somit (spielfrei oder spielbehaftet) mit dem zumindest einen Eingriffsvorsprung in Eingriff, sodass die Verbindungsteile entlang einer zur ersten Ebene senkrechten oder schrägen Richtung über den Eingriff des zumindest einen Eingriffsabschnitts mit dem Eingriffsvorsprung in Position zueinander gehalten werden. Einander zugewandte Flächen des zumindest einen Eingriffsabschnitts und des zumindest einen Eingriffsvorsprungs können hierbei entlang der ersten Ebene oder auch schräg zur ersten Ebene ausgerichtet sein.

Bei der Verbindungsvorrichtung sind somit in einer Ausgestaltung ein oder mehrere Eingriffsvorsprünge starr an dem ersten Grundkörper des ersten Verbindungsteils geformt. Mit dem zumindest einen Eingriffsvorsprung kann das zweite Verbindungsteil in Eingriff gebracht werden, indem der zumindest eine Eingriffsabschnitt des zweiten Verbindungsteils mit dem zumindest einen Eingriffsvorsprung des ersten Verbindungsteils in Eingriff gebracht wird. Das Ansetzen des ersten Verbindungsteils und des zweiten Verbindungsteils aneinander erfolgt hierbei beispielsweise entlang einer Schließrichtung, entlang derer Magneteinrichtungen der Verbindungsteile eine magnetische Anziehungskraft zur Verfügung stellen, sodass die Verbindungsteile entlang der Schließrichtung zueinander hin gezogen werden. Das Ineingriffbringen des zumindest einen Eingriffsabschnitts des zweiten Verbindungsteils mit dem zumindest einen Eingriffsvorsprung des ersten Verbindungsteils erfolgt demgegenüber entlang einer Eingriffsrichtung, die quer oder schräg zur Schließrichtung gerichtet ist. In der verbundenen Stellung steht der zumindest eine Eingriffsabschnitt mit dem zumindest einen Eingriffsvorsprung formschlüssig oder kraftformschlüssig in Eingriff, sodass die Verbindungsteile aneinander gehalten sind.

In einer Ausgestaltung weist das erste Verbindungsteil einen starr an dem ersten Grundkörper angeordneten Blockierabschnitt auf, der ausgebildet ist, in der verbundenen Stellung mit dem zweiten Verbindungsteil zusammenzuwirken, um den Eingriff des zumindest einen Eingriffsabschnitts mit dem zumindest einen Eingriffsvorsprung entgegen der Eingriffsrichtung zu blockieren. Beim Ansetzen der Verbindungsteile gelangt der zumindest eine Eingriffsabschnitt des zweiten Verbindungsteils in die Eingriffsrichtung in Eingriff mit dem zumindest einen Eingriffsvorsprung des ersten Verbindungsteils, sodass in der verbundenen Stellung eine formschlüssige oder kraftformschlüssige Verbindung zwischen den Verbindungsteilen besteht und die Verbindungsteile somit durch den Eingriff des zumindest einen Eingriffsabschnitts mit dem zumindest einen Eingriffsvorsprung belastbar aneinander gehalten sind. Der Eingriff zwischen dem zumindest einen Eingriffsabschnitt des zweiten Verbindungsteils und dem zumindest einen Eingriffsvorsprung des ersten Verbindungsteils wird hierbei in der verbundenen Stellung durch den starr an dem ersten Grundkörper des ersten Verbindungsteils geformten Blockierabschnitt des ersten Verbindungsteils gesichert, indem der Blockierabschnitt blockierend entgegen der Eingriffsrichtung mit einem zugeordneten Abschnitt des zweiten Verbindungsteils zusammenwirkt und der zumindest eine Eingriffsabschnitt somit nicht, zumindest nicht ohne Aufheben der Blockierung, entgegen der Eingriffsrichtung zu dem zumindest einen Eingriffsvorsprung bewegt werden kann. Aufgrund der blockierenden Wirkung des Blockierabschnitts ist der zumindest eine Eingriffsabschnitt somit in seinem Eingriff mit dem zumindest einen Eingriffsvorsprung gesperrt.

Die Verbindungsteile werden aufgrund der Magnetwirkung der Magneteinrichtungen in der verbundenen Stellung so zueinander gehalten, dass die Verbindungsteile durch den Blockierabschnitt des ersten Verbindungsteils entgegen der Eingriffsrichtung zueinander blockiert sind. Durch eine (reine) Verschiebebewegung entgegen der Eingriffsrichtung können die Verbindungsteile somit nicht voneinander gelöst werden.

In einer Ausgestaltung ist das zweite Verbindungsteil zum Lösen der Verbindungsteile voneinander relativ zu dem ersten Verbindungsteil verkippbar, um das zweite Verbindungsteil so in einer durch die Schließrichtung und die Eingriffsrichtung aufgespannten Kippebene zu dem ersten Verbindungsteil zu bewegen, dass das zweite Verbindungsteil entgegen der Eingriffsrichtung zu dem Blockierabschnitt bewegt werden kann. Durch Verkippen des zweiten Verbindungsteils relativ zu dem ersten Verbindungsteil kann die Blockierwirkung des Blockierabschnitts aufgehoben werden, sodass das zweite Verbindungsteil über den Blockierabschnitt hinwegbewegt und somit der zumindest eine Eingriffsabschnitt des zweiten Verbindungsteils außer Eingriff von dem zumindest einen Eingriffsvorsprung des ersten Verbindungsteils gebracht werden kann.

Durch die Blockierwirkung des starr an dem ersten Grundkörper des ersten Verbindungsteils angeordneten Blockierabschnitts wird erreicht, dass das zweite Verbindungsteil nicht linear entgegen der Eingriffsrichtung zu bewegen ist, sondern zum Trennen der Verbindungsteile voneinander in einer durch die Schließrichtung und die Eingriffsrichtung aufgespannten Kippebene zu verkippen ist. Die Kippbewegung kann hierbei um eine definierte Kippachse erfolgen. Die Kippbewegung kann aber auch entlang einer in der Kippebene gelegenen, gekrümmten Bewegungsbahn erfolgen, wobei infolge der Kippbewegung das zweite Verbindungsteil relativ zum ersten Verbindungsteil verkippt wird. Die Kippbewegung kann hierbei durch eine geradlinige Bewegung entgegen der Eingriffsrichtung und/oder entgegen der Schließrichtung überlagert sein.

Angemerkt sei, dass die Verbindungsteile zum Trennen der Verbindungsteile zueinander verkippbar sind. Auch das Herstellen der Verbindung zwischen den Verbindungsteilen erfolgt beispielsweise nicht in einer geradlinigen Schließbewegung, sondern dadurch, dass die Verbindungsteile taumelnd unter Verkippung zueinander aneinander angesetzt und miteinander in Eingriff bewegt werden. Auch beim Herstellen der Verbindung kann das zweite Verbindungsteil zu dem ersten Verbindungsteil kippen, um das Ineingriffbringen des zumindest einen Eingriffsabschnitts des zweiten Verbindungsteils mit dem zumindest einen Eingriffsvorsprung des ersten Verbindungsteils zu ermöglichen.

In der verbundenen Stellung ist das zweite Verbindungsteil in einer Ausgestaltung um die Schließrichtung zu dem ersten Verbindungsteil verdrehbar. Dies kann zum einen ein winkeltolerantes Ansetzen der Verbindungsteile aneinander ermöglichen. Zudem ist dadurch möglich, das zweite Verbindungsteil relativ zu dem ersten Verbindungsteil zu verdrehen, wenn sich die Verbindungsteile in der verbundenen Stellung befinden. Bei einem Verdrehen behalten der zumindest eine Eingriffsabschnitt und der zumindest eine Eingriffsvorsprung hierbei ihren Eingriff bei. Zudem bleibt auch die Blockierung des Eingriffs durch den Blockierabschnitt bei einem Verdrehen bestehen. Ein Verdrehen der Verbindungsteile um die Schließrichtung zueinander in der verbundenen Stellung führt somit nicht zu einem Trennen der Verbindungsteile voneinander.

Die Drehbarkeit zwischen den Verbindungsteilen in der verbundenen Stellung kann eine beliebige rotatorische Bewegung um einen beliebigen Winkel ermöglichen. Denkbar ist aber auch, dass die Bewegung der Verbindungsteile zum Beispiel durch Anschläge oder dergleichen auf einen vorbestimmten Drehwinkel beschränkt ist. Der Drehwinkel ist hierbei vorzugsweise größer als 10°, weiter vorzugsweise größer als 20°, besonders bevorzugt größer als 45° oder gar größer als 90°.

Dadurch, dass der zumindest eine Eingriffsvorsprung starr und unverformbar (bei einer bestimmungsgemäß wirkenden Last) an dem ersten Grundkörper des ersten Verbindungsteils geformt ist, kann der Eingriffsvorsprung bei Eingriff mit dem zumindest einen Eingriffsabschnitt des zweiten Grundkörpers Kräfte zuverlässig aufnehmen und ableiten. Der zumindest eine Eingriffsvorsprung ist hierbei vorzugsweise einstückig mit dem ersten Grundkörper des ersten Verbindungsteils geformt, wobei der erste Grundkörper insgesamt starr und unverformbar ausgestaltet ist.

Unter "unverformbar" soll in diesem Zusammenhang eine im Wesentlichen steife Geometrie und Materialwahl des Grundkörpers verstanden werden, die bewirkt, dass sich der Grundkörper des ersten Verbindungsteils mit dem daran geformten Eingriffsvorsprung bei einer bestimmungsgemäßen Last nicht verformt, der Grundkörper also nicht elastisch ausgebildet ist. Beispielsweise kann der Grundkörper des ersten Verbindungsteils aus Metall oder einem harten Kunststoffmaterial ausgebildet sein.

Ebenso ist der Grundkörper des zweiten Verbindungsteils mit dem daran geformten zumindest einen Eingriffsabschnitt starr und unverformbar und dazu zum Beispiel aus Metall oder einem harten Kunststoffmaterial ausgebildet.

In einer Ausgestaltung ist das zweite Verbindungsteil zum Verkippen relativ zu dem ersten Verbindungsteil an einer von dem zumindest einen Eingriffsvorsprung abgewandten Seite entgegen der Schließrichtung von dem ersten Verbindungsteil abhebbar. Das zweite Verbindungsteil steht in der verbundenen Stellung über den starr an dem zweiten Grundkörper geformten, zumindest einen Eingriffsabschnitt mit dem zumindest einen Eingriffsvorsprung am ersten Grundkörper des ersten Verbindungsteils in Eingriff, wobei dieser Eingriff in einem - in Bezug auf die Eingriffsrichtung gesehen - vorderen Bereich des zweiten Verbindungsteils erfolgt. Mit einem mit Bezug auf die Eingriffsrichtung hinteren Bereich kann das zweite Verbindungsteil in der verbundenen Stellung entgegen der Schließrichtung von dem ersten Verbindungsteil abgehoben werden, um auf diese Weise das zweite Verbindungsteil relativ zu dem ersten Verbindungsteil zu verkippen und dadurch die Blockierwirkung des Blockierabschnitts des ersten Verbindungsteils aufzuheben, sodass das zweite Verbindungsteil zu dem Blockierabschnitt des ersten Verbindungsteils bewegt und der zumindest eine Eingriffsabschnitt entgegen der Eingriffsrichtung außer Eingriff von dem zumindest einen Eingriffsvorsprung gebracht werden kann.

Um die Handhabung für einen Nutzer zu erleichtern, kann das zweite Verbindungsteil beispielsweise einen Betätigungsabschnitt aufweisen, an dem ein Nutzer zum Verkippen des zweiten Verbindungsteils relativ zu dem ersten Verbindungsteil angreifen kann. Der Betätigungsabschnitt kann beispielsweise durch eine Lasche im hinteren Bereich des zweiten Verbindungsteils gebildet sein, an der ein Nutzer ziehen kann, um das zweite Verbindungsteil mit dem hinteren Bereich entgegen der Schließrichtung von dem ersten Verbindungsteil abzuheben. Der Betätigungsabschnitt kann aber auch beispielsweise durch eine Griffmulde oder einen anderen Griffabschnitt geformt sein, an dem ein Nutzer angreifen kann, um auf diese Weise das zweite Verbindungsteil relativ zum ersten Verbindungsteil zu verkippen.

In einer Ausgestaltung weist das erste Verbindungsteil zwei Eingriffsvorsprünge auf, die quer zur Schließrichtung und quer zur Eingriffsrichtung zueinander beabstandet sind.

Der zumindest eine Eingriffsabschnitt kann eine gekrümmte (bogenförmige) Form aufweisen. Der zumindest eine Eingriffsabschnitt kann hierbei umlaufend an dem zweiten Grundkörper geformt sein oder kann alternativ nur über einen Bogenabschnitt, zum Beispiel über einen Bogenabschnitt kleiner 180°, an dem zweiten Grundkörper geformt sein. Läuft der Eingriffsabschnitt an dem zweiten Grundkörper um, so kann der Eingriffsabschnitt kreisförmig umlaufend geformt sein oder auch eine andere Form, zum Beispiel eine eckige Form, zum Beispiel eine mehreckige Form, beispielsweise eine viereckige oder sechseckige Form, aufweisen.

In einer Ausgestaltung ist der zumindest eine Eingriffsvorsprung des ersten Verbindungsteils an einem an dem ersten Grundkörper angeordneten, federelastisch verformbaren Federverriegelungselement angeordnet. Der zumindest eine Eingriffsvorsprung kann somit federelastisch relativ zu dem ersten Grundkörper ausgelenkt werden.

Das Federverriegelungselement kann zum Beispiel durch einen entlang der ersten Ebene elastisch verformbaren C-Ring geformt sein. Der C-Ring kann insbesondere so elastisch verformbar sein, dass der C-Ring in der ersten Ebene elastisch geweitet werden kann, um den zumindest einen Eingriffsabschnitt des zweiten Verbindungsteils in Eingriff mit dem durch den C-Ring geformten Federverriegelungselement zu bringen.

Insbesondere können das erste Verbindungsteil und das zweite Verbindungsteil entlang einer Schließrichtung aneinander ansetzbar sein, um den zumindest einen Eingriffsabschnitt des zweiten Verbindungsteils entlang der Schließrichtung mit dem Federverriegelungselement in Eingriff zu bringen, wobei der zumindest eine Eingriffsabschnitt des zweiten Verbindungsteils durch Bewegung entlang einer quer oder schräg zur Schließrichtung weisenden Öffnungsrichtung außer Eingriff von dem Federverriegelungselement bringbar ist, um das erste Verbindungteil und das zweite Verbindungsteil zum Öffnen der Verbindungsvorrichtung voneinander zu trennen.

Bei dieser Ausgestaltung ist der zumindest eine Eingriffsvorsprung nicht starr an dem ersten Grundkörper angeordnet, sondern ist an einem federelastischen Federverriegelungselement geformt und somit elastisch zu dem ersten Grundkörper bewegbar. Über das Federverriegelungselement kann das erste Verbindungsteil mit dem zumindest einen Eingriffsabschnitt des zweiten Verbindungsteils verrastet werden, indem das zweite Verbindungsteil entlang einer Schließrichtung an das erste Verbindungsteil angesetzt wird und dadurch der zumindest eine Eingriffsabschnitt mit dem Federverriegelungselement in Eingriff gebracht wird. In der verbundenen Stellung umgreift das Federverriegelungselement einen den zumindest einen Eingriffsabschnitt tragenden Zapfen des zweiten Verbindungsteils um die Schließrichtung und stellt somit eine Rastverbindung zwischen den Verbindungsteilen her.

Einander zugewandte Flächen des zumindest einen Eingriffsabschnitts und des zumindest einen Eingriffsvorsprungs können senkrecht zur Schließrichtung oder auch schräg zur Schließrichtung gestellt sein.

Während die Verbindungsteile entlang der Schließrichtung unter magnetischer Unterstützung durch die Magneteinrichtungen aneinander angesetzt werden können, um die Verbindungsvorrichtung zu schließen, können die Verbindungsteile durch Relativbewegung voneinander getrennt werden, indem das zweite Verbindungsteil entlang der Öffnungsrichtung relativ zu dem ersten Verbindungsteil bewegt wird. Dadurch wird der zumindest eine Eingriffsabschnitt des zweiten Verbindungsteils außer Eingriff von dem zumindest einen Eingriffsvorsprung an dem Federverriegelungselement gebracht und somit die Rastverbindung zwischen den Verbindungsteilen aufgehoben. Durch die Bewegung in die Öffnungsrichtung wird das zweite Verbindungsteil aus dem Federverriegelungselement herausgeschoben und außer Eingriff von dem Federverriegelungselement gebracht.

An dem Federverriegelungselement können ein oder mehrere Eingriffsvorsprünge geformt sein. Beispielsweise kann an jedem Schenkel des zum Beispiel durch einen C-Ring geformten Federverriegelungselements ein Eingriffsvorsprung geformt sein. Ein weiterer Eingriffsvorsprung kann zum Beispiel an einem mittig zwischen den Schenkeln angeordneten Abschnitt des Federverriegelungselements geformt sein.

In einer Ausgestaltung ist der zumindest eine Eingriffsvorsprung des ersten Verbindungsteils bewegbar an dem ersten Grundkörper angeordnet. Insbesondere kann der zumindest eine Eingriffsvorsprung des ersten Verbindungsteils entlang einer Verriegelungsrichtung relativ zu dem ersten Grundkörper bewegbar sein und entlang der Verriegelungsrichtung mit dem zumindest einen Eingriffsabschnitt in Eingriff bringbar sein. Sind das erste Verbindungsteil und das zweite Verbindungsteil in der verbundenen Stellung aneinander angesetzt, so ist der zumindest eine Eingriffsvorsprung des ersten Verbindungsteils in Eingriff mit dem zumindest einen Eingriffsabschnitt des zweiten Verbindungsteils, sodass die Verbindungsteile aneinandergehalten sind.

In einer Ausgestaltung weist das erste Verbindungsteil ein entlang der Verriegelungsrichtung an dem ersten Grundkörper bewegbares Riegelelement auf, an dem der zumindest eine Eingriffsvorsprung angeordnet ist. In der verbundenen Stellung steht das Riegelelement über den daran angeordneten Eingriffsvorsprung mit dem zumindest einen Eingriffsabschnitt des zweiten Verbindungsteils in Eingriff, sodass dadurch eine Verbindung zwischen den Verbindungsteilen hergestellt ist. Durch Bewegen des Riegelelements kann der Eingriff aufgehoben werden, um die Verbindungsteile zum Öffnen der Verbindungsvorrichtung voneinander zu trennen.

Das Riegelelement kann insbesondere in sich starr geformt sein. Das Riegelelement ist dabei aber entlang der Verriegelungsrichtung relativ zu dem ersten Grundkörper des ersten Verbindungsteils zu beweglich, sodass das Riegelelement eine Relativbewegung zu dem Grundkörper des ersten Verbindungsteils ausführen kann.

Das Riegelelement kann beispielsweise relativ zu dem ersten Grundkörper des ersten Verbindungsteils federvorgespannt sein. Eine Federvorspannung kann insbesondere in Richtung eines Eingriffs des zumindest einen Eingriffsvorsprungs des Riegelelements mit dem zumindest einen Eingriffsabschnitt des zweiten Verbindungsteils wirken.

In einer Ausgestaltung weist das Riegelelement eine dritte Magneteinrichtung auf, die dazu ausgestaltet ist, magnetisch anziehend mit der zweiten Magneteinrichtung des zweiten Verbindungsteils zusammenzuwirken, um den zumindest einen Eingriffsvorsprung entlang der Verriegelungsrichtung in Eingriff mit dem zumindest einen Eingriffsabschnitt zu bringen. Die dritte Magneteinrichtung wirkt somit magnetisch anziehend mit der zweiten Magneteinrichtung des zweiten Verbindungsteils zusammen. Werden die Verbindungsteile aneinander angenähert, so wird das Riegelelement in Richtung eines Eingriffs mit dem Eingriffsabschnitt des zweiten Verbindungsteils belastet, sodass der Eingriff zwischen dem Eingriffsvorsprung und dem Eingriffsabschnitt bei Ansetzen der Verbindungsteile aneinander selbsttätig hergestellt wird. In der verbundenen Stellung wird das Riegelelement mit dem Eingriffsvorsprung aufgrund der magnetischen Anziehung in Eingriff mit dem Eingriffsabschnitt des zweiten Verbindungsteils gehalten.

Die dritte Magneteinrichtung kann zum Beispiel durch einen Permanentmagneten ausgestaltet sein, der magnetisch anziehend mit der zweiten Magneteinrichtung des zweiten Verbindungsteils zusammenwirkt.

Hierbei kann vorgesehen sein, dass die dritte Magneteinrichtung des Riegelelements magnetisch abstoßend mit der ersten Magneteinrichtung des ersten Verbindungsteils zusammenwirkt, sodass bei geöffneter Verbindungsvorrichtung das Riegelelement in einer entriegelten Stellung gehalten wird. Werden die Verbindungsteile zum Schließen der Verbindungsvorrichtung aneinander angenähert, so übersteigt die magnetische Anziehung zwischen der ersten Magneteinrichtung des ersten Verbindungsteils und der dritten Magneteinrichtung des Riegelelements ab einem gewissen Punkt die magnetische Abstoßung zwischen der dritten Magneteinrichtung und der ersten Magneteinrichtung, sodass das Riegelelement mit dem daran angeordneten Eingriffsvorsprung in Eingriff mit dem Eingriffsabschnitt des zweiten Verbindungsteils gezogen wird.

Die dritte Magneteinrichtung kann auch durch einen magnetisch passiven, insbesondere ferromagnetischen Anker ausgestaltet sein, der magnetisch anziehend mit der (in diesem Fall durch einen Permanentmagneten ausgebildeten) zweiten Magneteinrichtung des zweiten Verbindungsteils zusammenwirkt.

Die Verbindungsteile können zum Schließen der Verbindungsvorrichtung insbesondere entlang einer Schließrichtung aneinander ansetzbar sein. Die Verriegelungsrichtung, entlang derer der zumindest eine Eingriffsvorsprung relativ zu dem ersten Grundkörper des ersten Verbindungsteils bewegbar ist, kann insbesondere quer zu dieser Schließrichtung gerichtet sein.

Unabhängig von der konkreten Ausgestaltung des ersten Verbindungsteils und des zweiten Verbindungsteils, insbesondere des zumindest einen Eingriffsvorsprungs der Eingriffseinrichtung des ersten Verbindungsteils und des zumindest einen Eingriffsabschnitts des zweiten Verbindungsteils, können die Verbindungsteile so ausgestaltet sein, dass das zweite Verbindungsteil in der verbundenen Stellung um eine zur ersten Ebene senkrechte Richtung zu dem ersten Verbindungsteil verdrehbar ist. In der verbundenen Stellung können die Verbindungsteile somit zueinander verdreht werden.

Auch andere Ausgestaltungen der Verbindungsteile sind denkbar und möglich, wobei der zumindest eine Eingriffsvorsprung starr oder beweglich zu dem ersten Grundkörper des ersten Verbindungsteils angeordnet sein kann.

Ein System umfasst eine erste Baugruppe, eine zweite Baugruppe und eine Verbindungsvorrichtung nach der vorangehend beschriebenen Art. Dabei ist vorgesehen, dass der erste Grundkörper des ersten Verbindungsteils durch eine erste Naht an dem ersten Nähbereich mit der ersten Baugruppe vernäht ist und/oder dass der zweite Grundkörper des zweiten Verbindungsteils durch eine zweite Naht an dem zweiten Nähbereich mit der zweiten Baugruppe vernäht ist.

Die erste Naht weist vorzugsweise, betrachtet entlang der ersten Ebene, zumindest in einem Abschnitt einen kleineren Abstand zu der ersten Magneteinrichtung auf als der zumindest eine Eingriffsvorsprung. Zusätzlich oder alternativ weist die zweite Naht, betrachtet entlang der zweiten Ebene, zumindest in einem Abschnitt einen kleineren Abstand zu der zweiten Magneteinrichtung auf als der zumindest eine Eingriffsabschnitt.

Die vorangehend für die Verbindungsvorrichtung beschriebenen Vorteile und vorteilhaften Ausgestaltungen finden analog auch auf das System Anwendung, sodass auf die vorangehenden Erläuterungen hierzu verwiesen werden soll.

Die nachstehend aufgelisteten Verwendungsmöglichkeiten sollen die vielfältige Verwendbarkeit der Verbindungsvorrichtung illustrieren, sind aber nicht beschränkend und insbesondere auch nicht abschließend zu verstehen. So kann die Verbindungsvorrichtung verwendet werden für:
- Helmverschluss
- Pferdehalfter,
- abnehmbare (Brust-)Beutel,
- Taschen, Rucksäcke
- für Rolltops, zum Verschließen mit (elastischem) Gurtband
- Jackenverschlüsse (z.B. am Ärmel, Revers, Knopfleiste, oder hochbinden der Hemdärmel)
- Rollos in Wohnmobilen, Sichtschutz Caravan
- Verdecke
- Sonnensegel, Planen, Campingzelte, Zeltabspannungen
- Befestigen oder Verschließen von Gepäcktaschen bzw. Satteltaschen (Bike, Motorrad)
- Gepäck- und Ladungssicherung, oder Sicherung Fahrrad/ Kinderwagen in und an Fahrzeugen öfftl. Verkehrsmitteln
- Sortierung- & Sicherungssystem für Handwerker im Fahrzeug
- Bandverschluss, Rückhaltesysteme und Verschlussvorrichtungen für Trageeinrichtungen
- Brustgurte, Hüftgurte, Schultergurte
- abnehmbare Handgriffe oder Trageriemen an Taschen
- Sonnenschutz zum Aufklappen, z.B. an Kinderwagen
- Bewegliche und abnehmbare oder öffenbare Anbindung von Rucksack-Trageriemen
- Aufhängung für Kleiderbügel
- Möbel, zum Beispiel zum Befestigen von Sitzelementen
- Schlafsäcke, Isomatten, Yogamatten (zum Zusammenrollen und Befestigen)
- Handtuchhalter
- Schlüsselhalter
- Gürtel
- Handwerkergürtel mit Werkzeugtool zum Einhängen
- abnehmbare Tragegurte z.B. an Werkzeugen und Gartengeräten, Henkel bei Taschen und Elektrogeräten
- Handschuhe, Schuhe, Golfbags (zum Verschließen oder aneinander Befestigen)
- einen Mückenschutz im Kinderwagen oder Zelt
- ein Kofferband, zum Beispiel als Befestigung von Sachen im Fahrradkorb
- für Komponenten und Zubehör am Fahrrad (Tacho, Licht, Computer, elektronische Geräte etc.).

Der der Erfindung zugrunde liegende Gedanke soll nachfolgend anhand der in den Figuren dargestellten Ausführungsbeispiele näher erläutert werden. Es zeigen:
- Fig. 1A: eine Explosionsansicht eines Ausführungsbeispiels einer Verbindungsvorrichtung;
- Fig. 1B: die Explosionsansicht in anderer perspektivischer Darstellung;
- Fig. 2A: eine Ansicht der Verbindungsvorrichtung, in einer verbundenen Stellung der Verbindungsteile;
- Fig. 2B: eine Ansicht auf die Verbindungsvorrichtung von unten;
- Fig. 2C: eine Seitenansicht der Verbindungsvorrichtung;
- Fig. 2D: eine stirnseitige Ansicht der Verbindungsvorrichtung;
- Fig. 2E: eine Draufsicht auf die Verbindungsvorrichtung;
- Fig. 2F: eine Schnittansicht entlang der Linie A-A gemäß Fig. 2E;
- Fig 2G: eine Schnittansicht entlang der Linie B-B gemäß Fig. 2E;
- Fig. 3A: eine Ansicht der Verbindungsvorrichtung, in einer geöffneten Stellung der Verbindungsteile;
- Fig. 3B: eine Ansicht auf die Verbindungsvorrichtung von unten;
- Fig. 3C: eine Seitenansicht der Verbindungsvorrichtung;
- Fig. 3D: eine stirnseitige Ansicht der Verbindungsvorrichtung;
- Fig. 3E: eine Draufsicht auf die Verbindungsvorrichtung;
- Fig. 3F: eine Schnittansicht entlang der Linie C-C gemäß Fig. 3E;
- Fig 3G: eine Schnittansicht entlang der Linie D-D gemäß Fig. 3E;
- Fig. 4A: eine Ansicht der Verbindungsvorrichtung, beim Ansetzen der Verbindungsteile aneinander zum Schließen der Verbindungsvorrichtung;
- Fig. 4B: eine Ansicht auf die Verbindungsvorrichtung von unten;
- Fig. 4C: eine Seitenansicht der Verbindungsvorrichtung;
- Fig. 4D: eine stirnseitige Ansicht der Verbindungsvorrichtung;
- Fig. 4E: eine Draufsicht auf die Verbindungsvorrichtung;
- Fig. 4F: eine Schnittansicht entlang der Linie E-E gemäß Fig. 4E;
- Fig 4G: eine Schnittansicht entlang der Linie F-F gemäß Fig. 4E;
- Fig. 5A: eine Ansicht der Verbindungsvorrichtung, beim Öffnen der Verbindungsvorrichtung;
- Fig. 5B: eine Ansicht auf die Verbindungsvorrichtung von unten;
- Fig. 5C: eine Seitenansicht der Verbindungsvorrichtung;
- Fig. 5D: eine stirnseitige Ansicht der Verbindungsvorrichtung;
- Fig. 5E: eine Draufsicht auf die Verbindungsvorrichtung;
- Fig. 5F: eine Schnittansicht entlang der Linie G-G gemäß Fig. 5E;
- Fig 5G: eine Schnittansicht entlang der Linie H-H gemäß Fig. 5E;
- Fig. 6A: eine Explosionsansicht eines Ausführungsbeispiels eines zweiten Verbindungsteils einer Verbindungsvorrichtung;
- Fig. 6B: die Explosionsansicht gemäß Fig. 6A, in anderer perspektivischer Darstellung;
- Fig. 7A: eine Explosionsansicht eines weiteren Ausführungsbeispiels eines zweiten Verbindungsteils einer Verbindungsvorrichtung;
- Fig. 7B: die Explosionsansicht gemäß Fig. 7A, in anderer perspektivischer Darstellung;
- Fig. 8A: eine Explosionsansicht eines Ausführungsbeispiel einer Verbindungsvorrichtung, mit dem zweiten Verbindungsteil gemäß Fig. 6A, 6B;
- Fig. 8B: die Explosionsansicht gemäß Fig. 8A, in anderer perspektivischer Darstellung;
- Fig. 9A: die Verbindungsvorrichtung gemäß Fig. 8A, 8B, in einer verbundenen Stellung eines ersten Verbindungsteils und des zweiten Verbindungsteils, in perspektivischer Darstellung;
- Fig. 9B: eine stirnseitige Ansicht der Verbindungsvorrichtung;
- Fig. 9C: eine Ansicht der Verbindungsvorrichtung von unten;
- Fig. 9D: eine Seitenansicht der Verbindungsvorrichtung;
- Fig. 9E: eine Draufsicht auf die Verbindungsvorrichtung;
- Fig. 9F: eine Schnittansicht entlang der Linie A-A gemäß Fig. 9E;
- Fig. 10A: eine perspektivische Ansicht der Verbindungsvorrichtung, in einer geöffneten Stellung;
- Fig. 10B: eine stirnseitige Ansicht der Verbindungsvorrichtung;
- Fig. 10C: eine Ansicht der Verbindungsvorrichtung von unten;
- Fig. 10D: eine Seitenansicht der Verbindungsvorrichtung;
- Fig. 10E: eine Draufsicht auf die Verbindungsvorrichtung;
- Fig. 10F: eine Schnittansicht entlang der Linie B-B gemäß Fig. 10E;
- Fig. 11A: eine Ansicht eines Ausführungsbeispiels eines zweiten Verbindungsteils einer Verbindungsvorrichtung;
- Fig. 11B, 11C: stirnseitige Ansichten des Verbindungsteils;
- Fig. 11D: eine Ansicht des Verbindungsteils von unten;
- Fig. 11E: eine Seitenansicht des Verbindungsteils;
- Fig. 11F: eine Ansicht des Verbindungsteils von oben;
- Fig. 11G: eine Schnittansicht entlang der Linie C-C gemäß Fig. 11F;
- Fig. 12A: eine Ansicht eines Ausführungsbeispiels eines zweiten Verbindungsteils einer Verbindungsvorrichtung;
- Fig. 12B, 12C: stirnseitige Ansichten des Verbindungsteils;
- Fig. 12D: eine Ansicht des Verbindungsteils von unten;
- Fig. 12E: eine Seitenansicht des Verbindungsteils;
- Fig. 12F: eine Ansicht des Verbindungsteils von oben;
- Fig. 12G: eine Schnittansicht entlang der Linie D-D gemäß Fig. 12F;
- Fig. 13A: eine Ansicht eines Ausführungsbeispiels eines ersten Verbindungsteils einer Verbindungsvorrichtung;
- Fig. 13B, 13C: stirnseitige Ansichten des Verbindungsteils;
- Fig. 13D: eine Ansicht des Verbindungsteils von unten;
- Fig. 13E: eine Seitenansicht des Verbindungsteils;
- Fig. 13F: eine Ansicht des Verbindungsteils von oben;
- Fig. 13G: eine Schnittansicht entlang der Linie E-E gemäß Fig. 13F;
- Fig. 14: eine Explosionsansicht des Verbindungsteils gemäß Fig. 13A-13G;
- Fig. 15A: eine Explosionsansicht eines weiteren Ausführungsbeispiels einer Verbindungsvorrichtung;
- Fig. 15B: die Explosionsansicht, in anderer perspektivischer Darstellung;
- Fig. 16A: eine perspektivische Ansicht der Verbindungsvorrichtung, in einer verbundenen Stellung;
- Fig. 16B: eine Ansicht der Verbindungsvorrichtung von unten;
- Fig. 16C-16E: Seitenansichten der Verbindungsvorrichtung;
- Fig. 16F: eine Draufsicht auf die Verbindungsvorrichtung;
- Fig. 16G: eine Schnittansicht entlang der Linie A-A gemäß Fig. 16F;
- Fig. 16H: eine Schnittansicht entlang der Linie B-B gemäß Fig. 16F;
- Fig. 17A: eine perspektivische Ansicht der Verbindungsvorrichtung, in einer geöffneten Stellung;
- Fig. 17B: eine Ansicht der Verbindungsvorrichtung von unten;
- Fig. 17C-17E: Seitenansichten der Verbindungsvorrichtung;
- Fig. 17F: eine Draufsicht auf die Verbindungsvorrichtung;
- Fig. 17G: eine Schnittansicht entlang der Linie C-C gemäß Fig. 17F;
- Fig. 17H: eine Schnittansicht entlang der Linie D-D gemäß Fig. 17F;

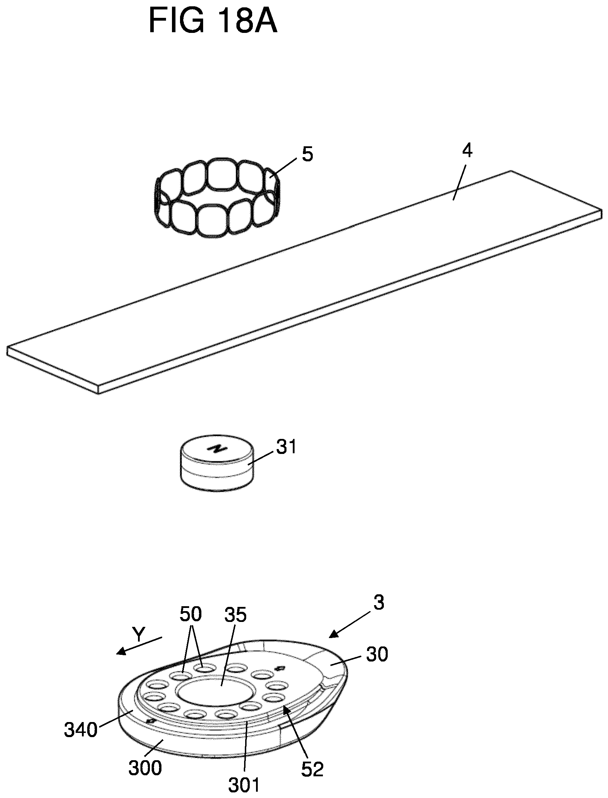

- Fig. 18A: eine Explosionsansicht eines weiteren Ausführungsbeispiels eines zweiten Verbindungsteils einer Verbindungsvorrichtung;

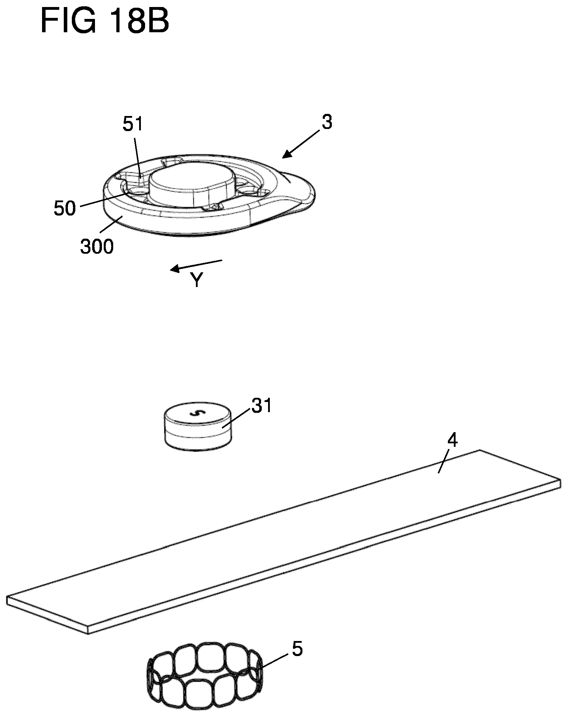

- Fig. 18B: die Explosionsansicht gemäß Fig. 18A in anderer perspektivischer Darstellung;
- Fig. 19A: das Verbindungsteil gemäß Fig. 18A, 18B in einer perspektivischen Darstellung;
- Fig. 19B: eine Ansicht des Verbindungsteils von unten;
- Fig. 19C: eine Seitenansicht des Verbindungsteils;
- Fig. 19D: eine Draufsicht auf das Verbindungsteil;
- Fig. 19E: eine Schnittansicht entlang der Linie B-B gemäß Fig. 19D;
- Fig. 20A: eine Explosionsansicht eines wiederum anderen Ausführungsbeispiels eines zweiten Verbindungsteils seiner Verbindungsvorrichtung;
- Fig. 20B: die Explosionsansicht in anderer perspektivischer Darstellung;
- Fig. 21A: eine perspektivische Ansicht des Verbindungsteils;
- Fig. 21B: eine Ansicht des Verbindungsteils von unten;
- Fig. 21C: eine Seitenansicht des Verbindungsteils;
- Fig. 21D: eine Draufsicht auf das Verbindungsteil;
- Fig. 21E: eine Schnittansicht entlang der Linie C-C gemäß Fig. 21D;
- Fig. 22A: eine Schnittansicht eines weiteren Ausführungsbeispiels einer Verbindungsvorrichtung, in einer geöffneten Stellung;
- Fig. 22B: die Verbindungsvorrichtung beim Ansetzen zweier Verbindungsteile aneinander;
- Fig. 22C: die Verbindungsvorrichtung in einer verbundenen Stellung der Verbindungsteile;
- Fig. 23A: eine Schnittansicht eines weiteren Ausführungsbeispiels einer Verbindungsvorrichtung, in einer geöffneten Stellung;
- Fig. 23B: die Verbindungsvorrichtung beim Ansetzen zweier Verbindungsteile aneinander;
- Fig. 23C: die Verbindungsvorrichtung beim weiteren Ansetzen der Verbindungsteile aneinander; und
- Fig. 23D: die Verbindungsvorrichtung in einer verbundenen Stellung der Verbindungsteile.

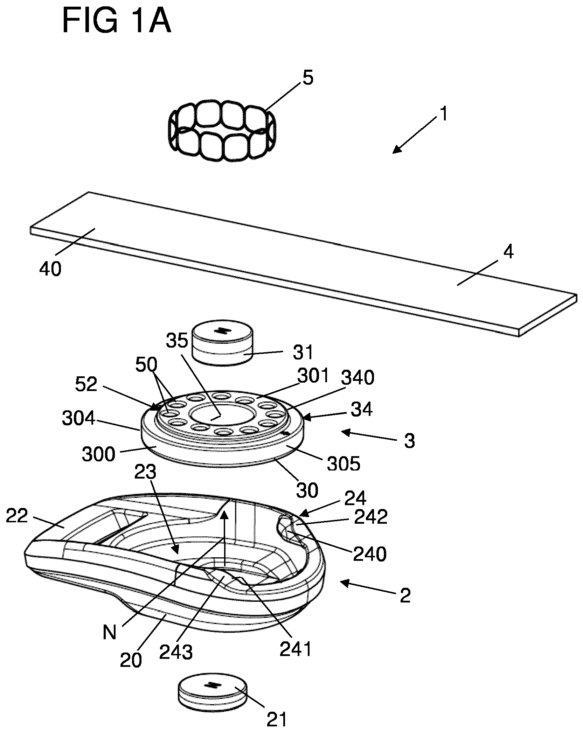

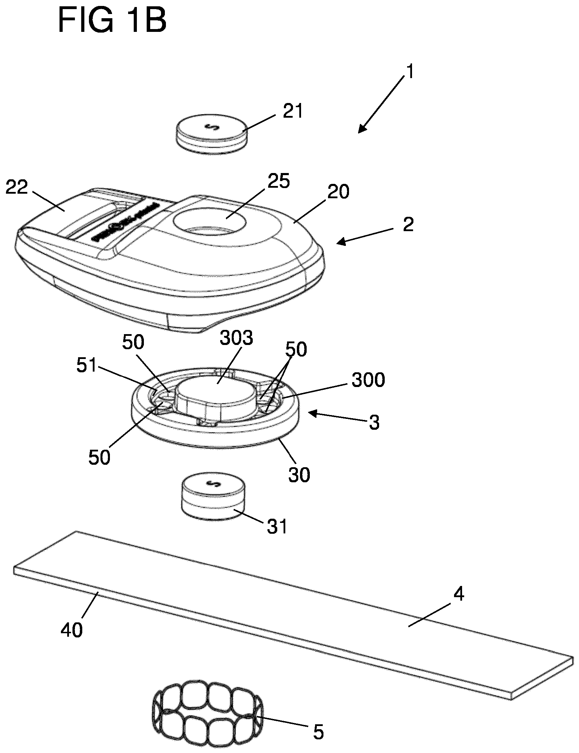

In einem in Fig. 1A, 1B bis 5A-5G dargestellten Ausführungsbeispiel weist eine Verbindungsvorrichtung 1 ein erstes Verbindungsteil 2 (sogenanntes Female-Teil) und ein an das erste Verbindungsteil 2 anzusetzendes, zweites Verbindungsteil 3 (sogenanntes Male-Teil) auf.

Die Verbindungsteile 2, 3 können generell entlang einer Schließrichtung X aneinander angesetzt werden, wobei die Verbindungsteile 2, 3 jeweils eine Magneteinrichtung 21, 31 in Form eines Permanentmagneten (oder alternativ einerseits in Form eines Permanentmagneten und andererseits in Form eines magnetischen Ankers) aufweisen, die magnetisch anziehend zusammenwirken und die Verbindungsteile 2, 3 entlang der Schließrichtung X zueinander hinziehen.

Angemerkt sei, dass das Ansetzen der Verbindungsteile 2, 3 auch in eine von der Schließrichtung X abweichende, zum Beispiel schräg zur Schließrichtung X gerichtete Richtung möglich sein kann. Die Magneteinrichtungen 21, 31 wirken entlang der Schließrichtung X magnetisch anziehend zusammen und ziehen die Verbindungsteile 2, 3 entlang der Schließrichtung X zueinander hin.

Wie aus den Explosionsansicht gemäß Fig. 1A und 1B ersichtlich, weist das erste Verbindungsteil 2 einen Grundkörper 20 auf, der eine Aufnahmeöffnung 23 zum Aufnehmen des zweiten Verbindungsteils 3 ausbildet. An dem Grundkörper 20 ist eine Gurtbandaufnahme 22 in Form eines Stegs und einer daran anschließenden Öffnung angeordnet, an der ein Gurt befestigt werden kann oder befestigt ist. An einer der Aufnahmeöffnung 23 abgewandten Seite bildet der Grundkörper 20 eine Befestigungsöffnung 25 zum Aufnehmen der Magneteinrichtung 21 aus.

Die Aufnahmeöffnung 23 ist als Vertiefung an dem Grundkörper 20 geformt. Innerhalb der Aufnahmeöffnung 23 ist eine Bodenfläche 230 in Form einer ebenen, senkrecht zur Schließrichtung X erstreckten Fläche ausgebildet, mit der das zweite Verbindungsteil 3 bei Einsetzen in die Aufnahmeöffnung 23 zum Herstellen einer Verbindung der Verbindungsteile 2, 3 in flächige Anlage gebracht werden kann.

In die Bodenfläche 230 ist eine Aussparung 231 in Form einer Vertiefung eingeformt, in die - wie nachfolgend noch beschrieben werden soll - in verbundener Stellung der Verbindungsteile 2, 3 ein Blockierelement 303 an einem Basisabschnitt 300 des zweiten Verbindungsteils 3 eingreift.

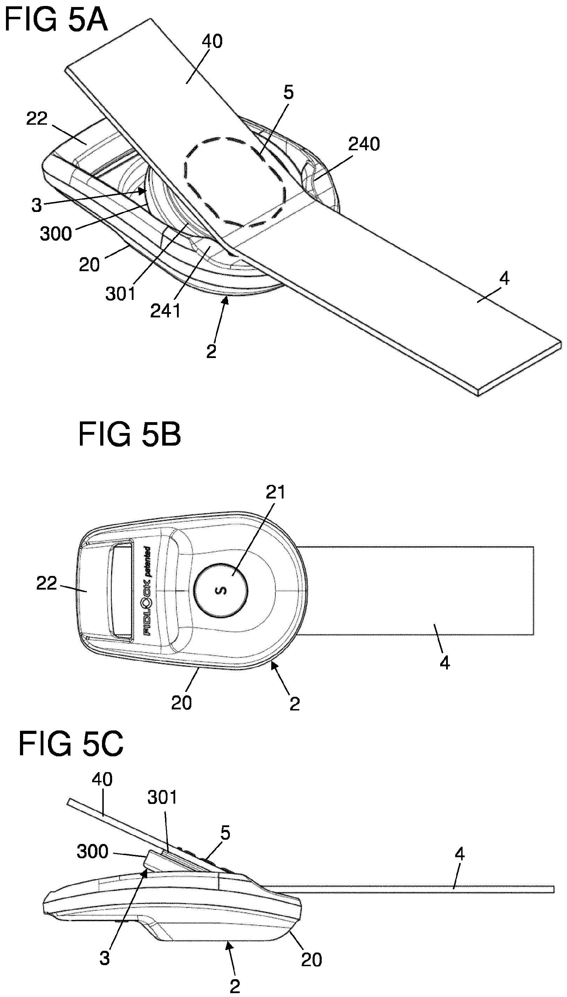

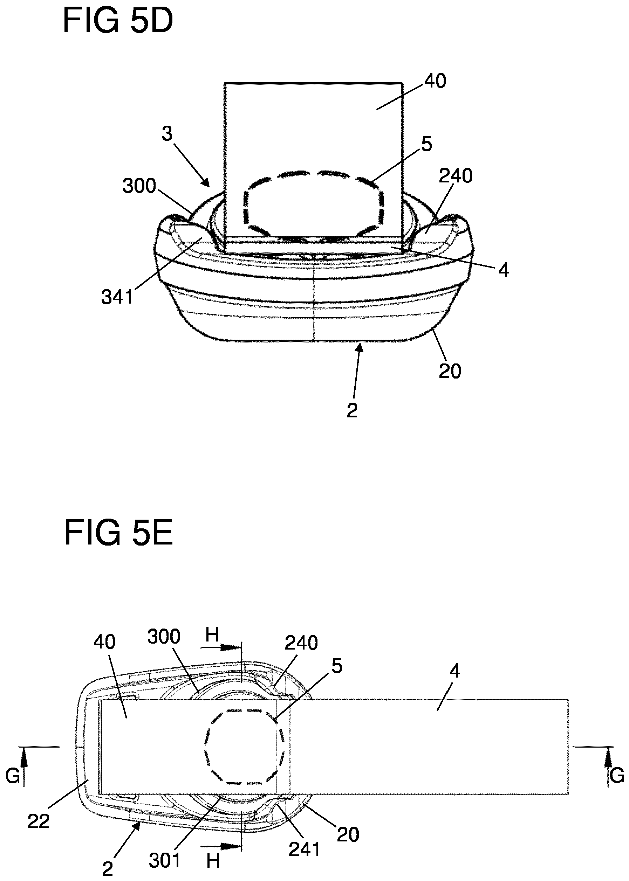

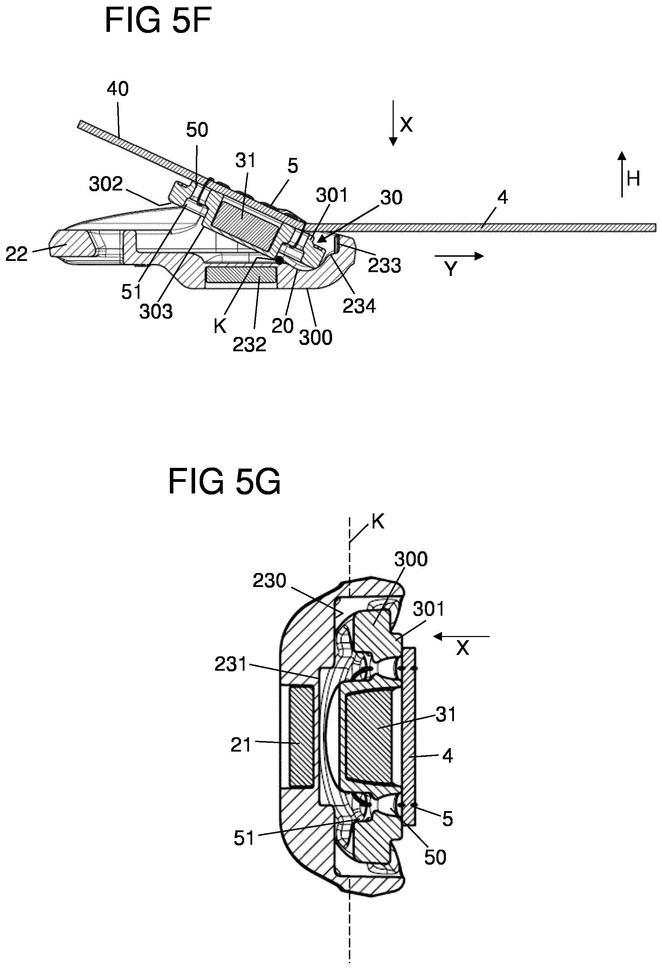

Die Aufnahmeöffnung 23 wird an einem vorderen Ende durch einen Stützabschnitt 233 begrenzt, der als Abstützung und Lastaufnahme für das zweite Verbindungsteil 3 in der verbundenen Stellung dient. Zwischen dem Stützabschnitt 233 und der Bodenfläche 230 ist eine Eintauchöffnung 232 geformt, die dazu dient, das Herstellen der Verbindung genauso wie das Trennen der Verbindungsteile 2, 3 zu erleichtern, indem ein Kantenabschnitt 305 des Basisabschnitts 300 des zweiten Verbindungsteils 3 beim Herstellen der Verbindung und auch beim Trennen der Verbindung in die Eintauchöffnung 232 eintauchen kann, wie dies zum Beispiel in Fig. 5F ersichtlich ist und nachfolgend noch beschrieben werden soll.

Die Eintauchöffnung 232 ist als Vertiefung relativ zur Bodenfläche 230 geformt und schließt derart an die Bodenfläche 230 an, dass die Eintauchöffnung 232 zwischen dem Stützabschnitt 233 und der Bodenfläche 230 gelegen ist. Am Übergang zwischen der Eintauchöffnung 232 und der Bodenfläche 230 ist eine abgeschrägte Übergangsfläche 237 geformt, die als Führung für das zweite Verbindungsteil 3 zum Herstellen der Verbindung genauso wie beim Trennen der Verbindung dient.

An dem starr ausgebildeten Grundkörper 20 sind an zwei seitlichen, erhabenen Abschnitten 242, 243 starr mit dem Grundkörper 20 geformte Eingriffsvorsprünge 240, 241 angeordnet, die - betrachtet entlang einer entlang der Schließrichtung X weisenden Höhenrichtung H - oberhalb der Bodenfläche 230 gelegen sind und dazu dienen, eine formschlüssige oder kraftformschlüssige Verbindung zwischen den Verbindungsteilen 2, 3 in verbundener Stellung herzustellen. Die Eingriffsvorsprünge 240, 241 sind entlang einer Querrichtung Q zueinander beabstandet. Die Eingriffsvorsprünge 240, 241 bilden gemeinsam eine Eingriffseinrichtung 24 aus, die einen formschlüssigen oder kraftformschlüssigen Eingriff mit dem zweiten Verbindungsteil 3 ermöglicht. Wie dies nachfolgend noch erläutert werden soll, ist der Basisabschnitt 300 des zweiten Verbindungsteils 3 in verbundener Stellung mit einem daran geformten Eingriffsabschnitt 340 zwischen den Eingriffsvorsprüngen 240, 241 und der Bodenfläche 230 aufgenommen und zudem an einer vorderen Kante 305 an dem Stützabschnitt 233 abgestützt, sodass darüber die Verbindungsteile 2, 3 sicher und zuverlässig aneinandergehalten sind.

An den Eingriffsvorsprüngen 240, 241 sind Gleitschrägen 244, 245 geformt, die schräg zur Höhenrichtung H geneigt sind und ein Abgleiten des zweiten Verbindungsteils 3 entgegen einer Eingriffsrichtung Y bewirken, wenn die Verbindungsteile 2, 3 entlang der Schließrichtung X aneinander angesetzt werden.

Die Aussparung 231 ist seitlich durch bogenförmige Begrenzungswandungen 236 begrenzt, die gemeinsam einen Blockierabschnitt des ersten Verbindungsteils 2 verwirklichen und senkrecht zu einem Boden der Aussparung 231 und zudem zur Bodenfläche 230 ausgerichtet sind. Die Begrenzungswandungen 236 erstrecken sich kreisbogenförmig um eine zentrale Achse B der Aussparung 231, die entlang einer Normalenrichtung N der Bodenfläche 230 gerichtet ist.

Zwischen den Begrenzungswandungen 236 ist eine Auflaufschräge 235 geformt, die rückwärtig des Stützabschnitts 233 an der Aussparung 231 angeordnet ist und eine Gleitfläche bereitstellt, um das Eingleiten des Blockierelements 303 in die Aussparung 231 und auch das Lösen des Blockierelements 303 aus der Aussparung 231 zu erleichtern.

Die Bodenfläche 230 erstreckt sich eben entlang einer zur Normalenrichtung N senkrechten Ebene.

Das zweite Verbindungsteil 3 ist, wie dies aus den Explosionsansicht gemäß Fig. 1A, 1B, fest mit einer zugeordneten Baugruppe in Form eines Gurts 4 verbunden. Das zweite Verbindungsteil 3 weist einen Grundkörper 30 auf, mit dem der Gurt 4 fest durch eine Naht 5 verbunden ist.

Der Grundkörper 30 kann beispielsweise einteilig und integral durch Kunststoffspritzgießen geformt sein.

Der Basisabschnitt 300 weist eine kreiszylindrische Grundform auf und bildet an einer (bei Herstellen der Verbindung) dem ersten Verbindungsteil 2 zugewandten Seite eine Basisfläche 302 aus, die eben erstreckt ist und bei Ansetzen des zweiten Verbindungsteils 3 an das erste Verbindungsteil 2 flächig mit der Bodenfläche 230 in der Aufnahmeöffnung 23 in Anlage gelangt.

Von der Basisfläche 302 steht ein zum kreiszylindrischen Basisabschnitt 300 konzentrisches, im Querschnitt kreisförmiges Blockierelement 303 vor, das zum Eingreifen in die Aussparung 231 an der Bodenfläche 230 des Grundkörpers 20 des ersten Verbindungsteils 2 dient.

Innerhalb des Blockierelements 303 ist eine Befestigungsöffnung 35 geformt, die zum Aufnehmen der Magneteinrichtung 31 zum Beispiel in Form eines Permanentmagneten des zweiten Verbindungsteils 3 dient und innerhalb derer die Magneteinrichtung 31 befestigt ist.

Der Basisabschnitt 300 bildet eine Eingriffseinrichtung 34 des zweiten Verbindungsteils 3 mit einem Eingriffsabschnitt 340 aus, der zum Zusammenwirken mit den Eingriffsvorsprüngen 240, 241 der Eingriffseinrichtung 24 des ersten Verbindungsteils 2 dient und bei Herstellen der Verbindung unter die Eingriffsvorsprünge 240, 241 taucht, sodass eine formschlüssige oder kraftformschlüssige Verbindung zwischen den Verbindungsteilen 2, 3 hergestellt wird.

Der Eingriffsabschnitt 340 ist bei dem dargestellten Ausführungsbeispiel durch einen umlaufenden Rand des Basisabschnitts 300 geformt, der radial gegenüber einem Befestigungsabschnitt 301 vorsteht und somit einen Hinterschnitt ausbildet, über den der Eingriffsabschnitt 340 mit den ebenfalls Hinterschnitte ausbildenden Eingriffsvorsprüngen 240, 241 des ersten Verbindungsteils 2 in Eingriff gebracht werden kann, um die Verbindungsteile 2, 3 miteinander zu verbinden.

Das Ansetzen der Verbindungsteile 2, 3 aneinander erfolgt generell entlang der Schließrichtung X, entlang derer die Magneteinrichtungen 21, 31 magnetisch anziehend zusammenwirken und die Verbindungsteile 2, 3 somit magnetisch anziehend zueinander hinziehen. Die Verbindungsteile 2, 3 können hierbei händisch aneinander angenähert werden, wobei ab einer gewissen Annäherung die magnetische Anziehungskraft die Verbindungsteile 2, 3 selbsttätig in Eingriff zieht und somit ein Herstellen der Verbindung der Verbindungsvorrichtung 1 bewirkt. Ein unpräzises Ansetzen der Verbindungsteile 2, 3 aneinander ist somit ausreichend, wobei das Herstellen der Verbindung dann weitestgehend selbsttätig erfolgt.

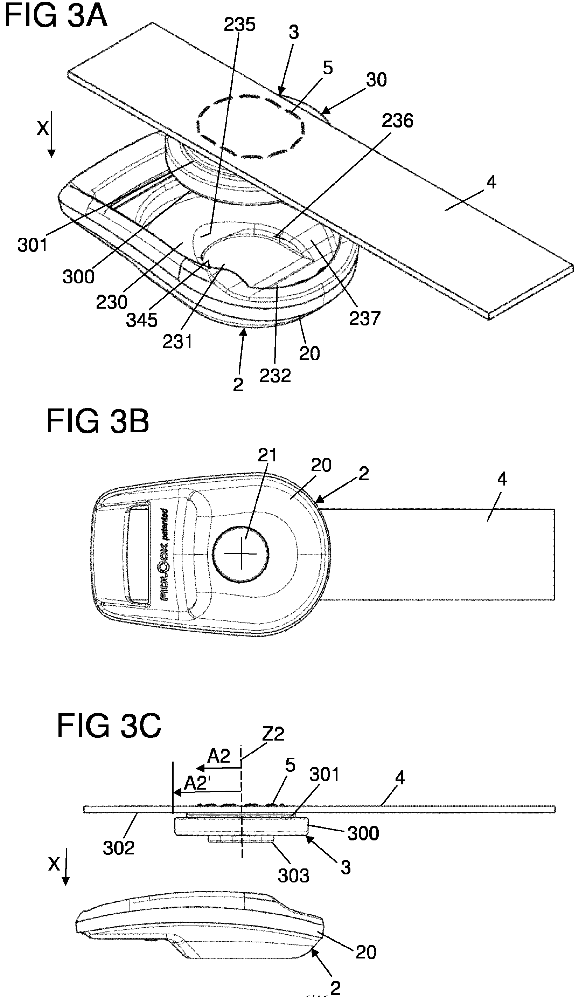

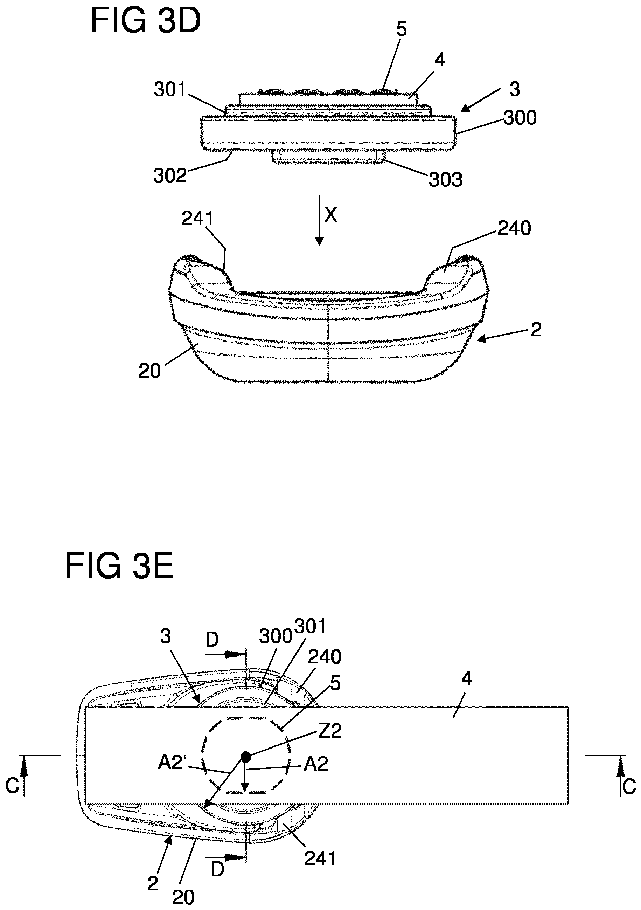

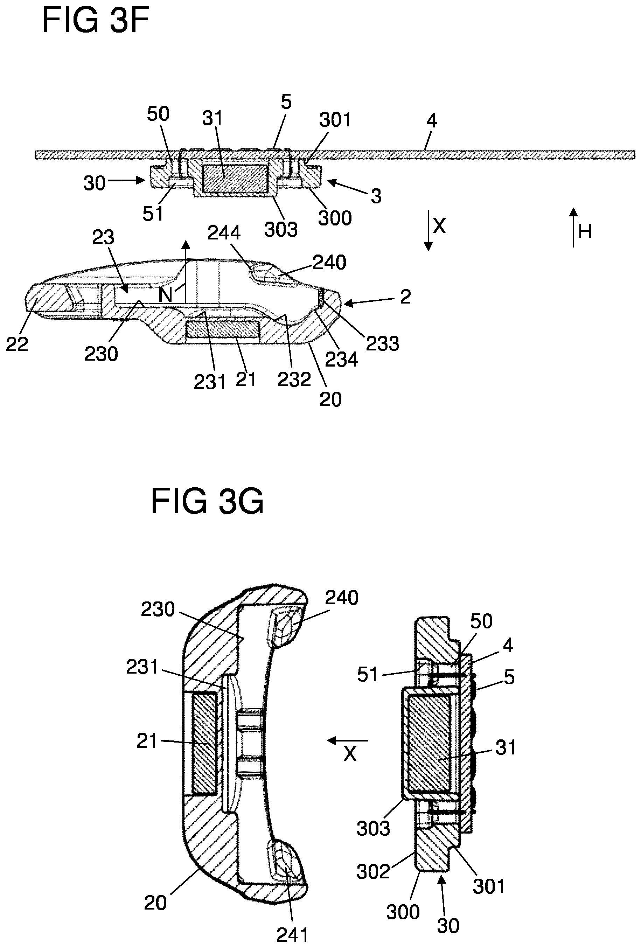

Werden die Verbindungsteile 2, 3 einander angenähert, wie dies aus Fig. 3A-3Gersichtlich ist, so gelangt der Basisabschnitt 300 des Grundkörpers 30 des zweiten Verbindungsteils 3 entlang der Schließrichtung X von oben beispielsweise in Anlage mit den Eingriffsvorsprüngen 240, 241. Aufgrund der an den Eingriffsvorsprüngen 240, 241 geformten, geneigten Gleitschrägen 244, 245 gleitet der Basisabschnitt 300 an den Eingriffsvorsprüngen 240, 241 ab, wobei der Basisabschnitt 300 mit einer hinteren Kante 304 mit der Bodenfläche 230 in der Aufnahmeöffnung 23 des ersten Verbindungsteils 2 in Anlage gelangen kann und dadurch in geführter Weise entlang der Bodenfläche 230 gleitet, ohne dass das Blockierelement sich verfrüht verhakt.

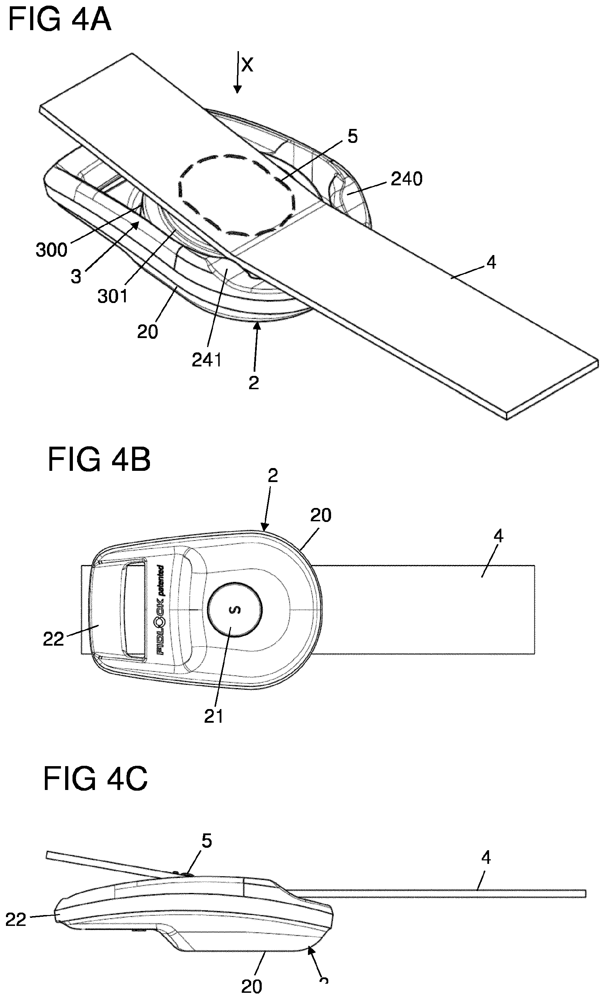

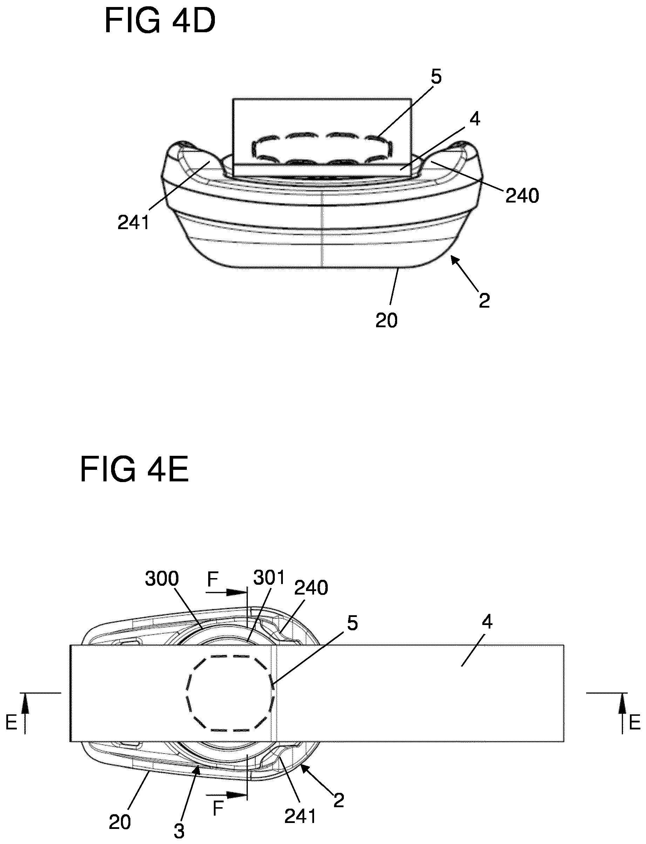

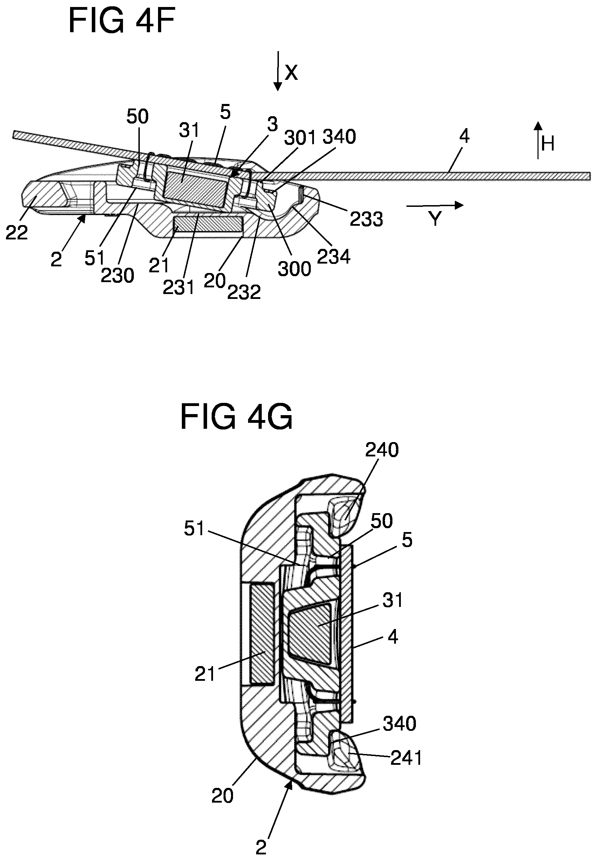

Ist der Basisabschnitt 300 an den Eingriffsvorsprüngen 240, 241 abgeglitten und hat der Basisabschnitt 300 somit die Eingriffsvorsprünge 240, 241 in die Schließrichtung X passiert, so gleitet der an dem umlaufenden Rand des Basisabschnitts 300 geformte Eingriffsabschnitt 340 nunmehr unterstützt durch die magnetische Anziehung der Magneteinrichtungen 21, 31 in eine Eingriffsrichtung Y in Eingriff mit den Eingriffsvorsprüngen 240, 241, wie dies aus Fig. 4A-4G ersichtlich ist. Diese Bewegung entlang (näherungsweise) der Eingriffsrichtung Y erfolgt in magnetisch unterstützter Weise, wobei zusätzlich eine (über den Gurt 4 eingeleitete) Lastkraft das Ineingriffbringen unterstützen kann.

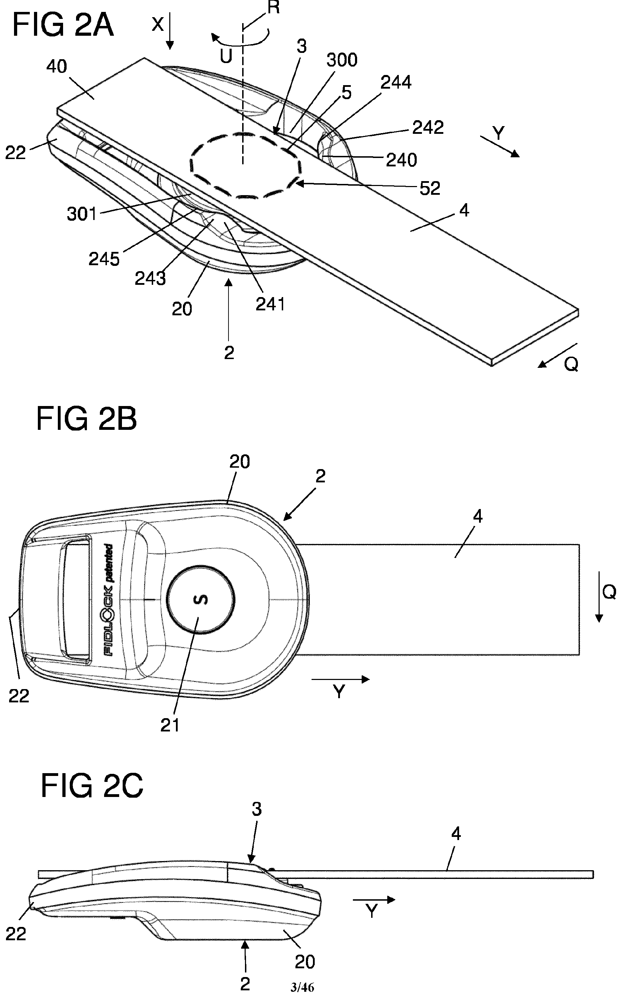

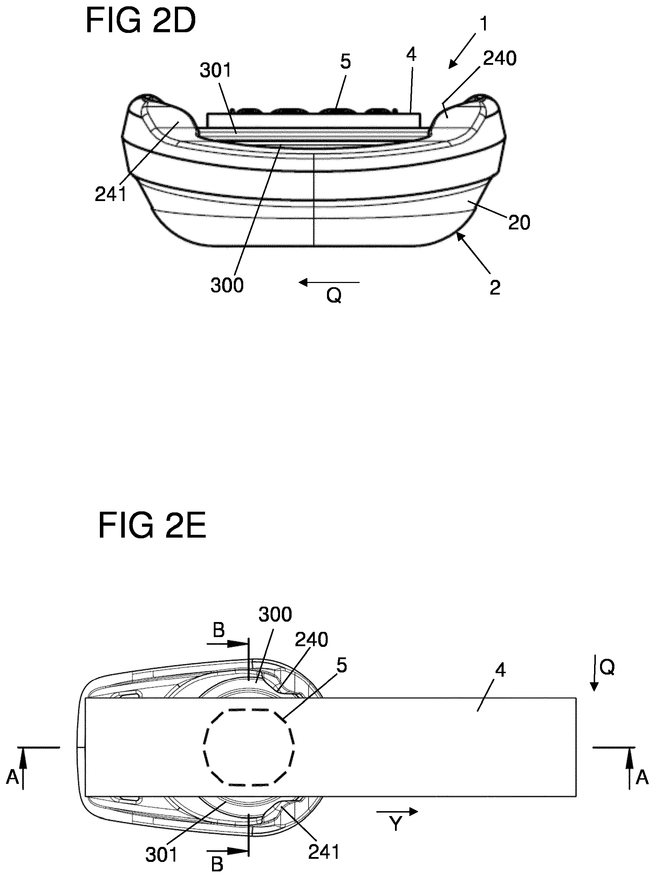

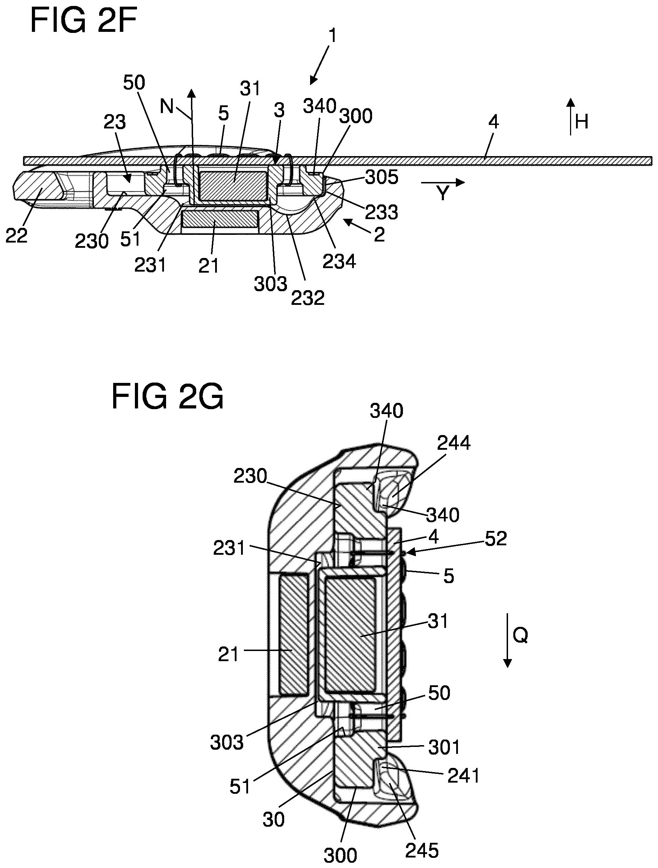

Wenn der Eingriffsabschnitt 340 sich in die Eingriffsrichtung Y in Eingriff mit den Eingriffsvorsprüngen 240, 241 bewegt, gleitet das Blockierelement 303 in die Aussparung 231 in der Aufnahmeöffnung 23 des ersten Verbindungsteils 2 ein, wie dies im Übergang von Fig. 4A-4G hin zu Fig. 2A-2G (darstellend die Verbindungsvorrichtung 2 in der verbundenen Stellung) ersichtlich ist.

In der in Fig. 2A-2G ersichtlichen, verbundenen Stellung liegt das Blockierelement 303 in der Aussparung 231 ein, und der Basisabschnitt 300 liegt mit der daran geformten Basisfläche 302 flächig an der Bodenfläche 230 innerhalb der Aufnahmeöffnung 23 des ersten Verbindungsteils 2 an.

In der verbundenen Stellung ist der Basisabschnitt 300 mit einem (vorderen) Kantenabschnitt 305 dem Stützabschnitt 233 zugewandt und liegt abstützend an dem Stützabschnitt 233 an. Wird über den Gurt 4 eine Kraft in das zweite Verbindungsteil 3 eingeleitet, so wird diese Kraft durch die abstützende Anlage des Basisabschnitts 300 an dem Stützabschnitt 233 aufgenommen und abgeleitet.

Der Stützabschnitt 233 ist bogenförmig um die Schließrichtung X gekrümmt, entsprechend der Krümmung des kreiszylindrischen Basisabschnitts 300, sodass eine Anlage entlang einer bogenförmigen Stützlinie oder -fläche zwischen dem Kantenabschnitt 305 an dem Basisabschnitt 300 und dem Stützabschnitt 233 besteht.

Der Stützabschnitt 233 ist dabei mit einem mittigen Abschnitt, betrachtet entlang der Querrichtung Q, zwischen den Eingriffsvorsprüngen 240, 241 angeordnet und an dem mittigen Abschnitt entlang der Eingriffsrichtung Y zu den Eingriffsvorsprüngen 240, 241 beabstandet. Der Stützabschnitt 233 erstreckt sich bogenförmig bis unter die Eingriffsvorsprünge 240, 241 und darüber hinaus, sodass eine flächige Abstützung für den Basisabschnitt 300 mittig zwischen den Eingriffsvorsprüngen 240, 241 und auch unmittelbar im Bereich der Eingriffsvorsprünge 240, 241 geschaffen wird.

In der verbundenen Stellung ist der Gurt 4 an dem Verbindungsteil 3 in etwa auf der Höhe der Eingriffsvorsprünge 240, 241 an dem Verbindungsteil 2 oder unterhalb der Eingriffsvorsprünge 240, 241 angeordnet. Dies bewirkt, dass über den Gurt 4 eingeleitete Gurtkräfte das Verbindungsteil 3 in der Aufnahmeöffnung 23 nicht verkippen können bzw. nur ein geringes Kippmoment erzeugen können, wobei die Eingriffsvorsprünge 240, 241 die Stellung des Verbindungsteils 3 an dem Verbindungsteil 2 insbesondere entlang der Höhenrichtung H sichern.

In der verbundenen Stellung und bei Lastwirkungen zwischen den Verbindungsteilen 2, 3 liegt der Gurt 4 zwischen den erhabenen Abschnitten 242, 243 ein und ist somit zwischen den Eingriffsvorsprüngen 240, 241 angeordnet, sodass die Eingriffsvorsprünge 240, 241 bei einer Krafteinleitung über den Gurt 4 eine zum Gurt 4 symmetrische Abstützung schaffen.

In der verbundenen Stellung wirken die Magneteinrichtungen 21, 31 magnetisch anziehend zusammen und halten die Verbindungsteile 2, 3 somit in der verbundenen Stellung.

Aufgrund des Eingriffs des Blockierelements 303 in die Aussparung 231 ist zudem ein tangentiales Verschieben der Verbindungsteile 2, 3 entgegen der Eingriffsrichtung Y zueinander blockiert. Das Blockierelement 303 liegt in der verbundenen Stellung so in der Aussparung 231 ein, dass das Blockierelement 303 zwischen den den Blockierabschnitt verwirklichenden Begrenzungswandungen 236 aufgenommen und mit den bogenförmigen Begrenzungswandungen 236 in blockierender Anlage ist, sodass das Blockierelement 303 entgegen der Eingriffsrichtung Y nicht zu den Begrenzungswandungen 236 bewegt werden kann.

Aufgrund der rotationssymmetrischen Form des Blockierelements 303 und der kreiszylindrischen Form des Basisabschnitts 300 kann das Verbindungsteil 3 in der verbundenen Stellung entlang einer Umfangsrichtung U (siehe Fig. 2A) um eine Rotationsachse R innerhalb der Aufnahmeöffnung 23 des Verbindungsteils 2 um einen beliebigen Winkel verdreht werden, bei Beibehaltung des verbindenden Eingriffs zwischen den Verbindungsteilen 2, 3 und auch der Blockierung des Blockierelements 303 in der Aussparung 231.

Diese Verdrehbarkeit ermöglicht zudem ein Ansetzen der Verbindungsteile 2, 3 in beliebiger Drehstellung aneinander, wobei bei Belastung über den Gurt 4 sich die Verbindungsteile 2, 3 so zueinander ausrichten, dass der Gurt 4 zwischen den Eingriffsvorsprüngen 240, 241 zu liegen kommt und somit das Verbindungsteil 3 symmetrisch an dem Verbindungsteil 2 abgestützt ist. Aufgrund der Verdrehbarkeit können die Verbindungsteile 2, 3 lagetolerant aneinander angesetzt werden, was das Herstellen der Verbindung einfach und komfortabel macht.

Wie dies aus Fig. 4A-4G ersichtlich ist, taucht der Basisabschnitt 300 mit einem vorderen Kantenabschnitt 305 beim Eingleiten unter die Eingriffsvorsprünge 240, 241 in die Eintauchöffnung 232 ein, die sowohl zur Bodenfläche 230 als auch zur Aussparung 231 vertieft ausgebildet ist. Durch das Eintauchen des Kantenabschnitts 305 in die Eintauchöffnung 232 kann das Blockierelement 303 in die Aussparung 231 eingleiten und der Eingriff des am Basisabschnitt 300 geformten Eingriffsabschnitts 340 mit den Eingriffsvorsprüngen 240, 241 hergestellt werden. Außerdem kann so der Winkelbereich einer an dem Betätigungsabschnitt 40 (Lasche) anliegenden Öffnungskraft vergrößert werden und ein Verklemmen des Kantenabschnitts 305 beim Öffnen verhindert werden.

In der verbundenen Stellung liegt der vordere Kantenabschnitt 305 des Basisabschnitts 300 dann auf einem Formschlussabschnitt in Form einer zwischen der Eintauchöffnung 232 und dem Stützabschnitt 233 geformten, auf der Höhe der Bodenfläche 230 gelegenen Stufe 234 auf. Durch Anlage des Basisabschnitts 230 an der Stufen 234 wird das Verbindungsteil 3 zusätzlich entgegen einem Verkippen zu dem Verbindungsteil 2 abgestützt.

Der Formschlussabschnitt kann alternativ auch zum Beispiel durch eine Einkerbung oder dergleichen an dem Stützabschnitt 233 geformt sein, in die der Basisabschnitt 300 mit dem Kantenabschnitt 305 eingreift und dadurch an dem Stützabschnitt 233 gegen ein Verkippen abgestützt ist, das mit einer Bewegung des Kantenabschnitts 305 an dem Stützabschnitt 233 in die Schließrichtung X nach unten einhergeht.

Durch den Formschlussabschnitt in Form der Stufe 234 wird in der verbundenen Stellung insbesondere einem Verkippen bei einer Belastung an dem Gurt 4 entgegengewirkt. So liegt das zweite Verbindungsteil 3 mit seinem Grundkörper 30 in der verbundenen Stellung mit einem ersten Bereich, gebildet durch den (mit Bezug auf die Eingriffsrichtung Y) hinteren Bereich, auf der Bodenfläche 230 des Grundkörpers 20 des ersten Verbindungsteils 2 auf. In einem zweiten, in die Eingriffsrichtung Y anschließenden Bereich, gebildet durch den Bereich oberhalb der Eintauchöffnung 232, liegt der zweite Grundkörper 30 des zweiten Verbindungsteils 3 demgegenüber nicht an dem ersten Grundkörper 20 des ersten Verbindungsteils 2 an. Mit einem in die Eingriffsrichtung Y an den zweiten Bereich anschließenden, dritten Bereich, gebildet durch den vorderen Kantenabschnitt 305 des Basisabschnitts 300, liegt der zweite Grundkörper 30 auf der Stufe 234 auf, sodass in der verbundenen Stellung eine Abstützung nach Art einer ZweiPunkt-Auflage geschaffen ist, mit einem dazwischen geschaffenen Freiraum im Bereich der Eintauchöffnung 232.

In belasteter Stellung wird der Basisabschnitt 300 mit dem vorderen Kantenabschnitt 305 gegen den Stützabschnitt 233 belastet und somit selbstverstärkend in Auflage mit der Stufe 234 gehalten.

Sollen die Verbindungsteile 2, 3 voneinander getrennt werden, läuft der Bewegungsablauf im Wesentlichen umgekehrt ab. Insbesondere kann ein Nutzer zum Trennen der Verbindungsteile 2, 3 an einem Betätigungsabschnitt in Form einer Lasche 40 (gebildet durch einen überstehenden Abschnitt des Gurts 4) auf einer hinteren, den Eingriffsvorsprüngen 240, 241 abgewandten Seite des Verbindungsteils 3 angreifen, dadurch das Verbindungsteil 3 an seinem hinteren Ende von der Bodenfläche 230 abheben und somit das Verbindungsteil 3 aus der verbundenen Stellung derart zu dem Verbindungsteil 2 verkippen, dass der Basisabschnitt 300 mit dem vorderen Kantenabschnitt 305 von der Stufe 234 abgleitet und das Blockierelement 303 aus der Aussparung 231 gehoben wird, wie dies aus Fig. 5A-5G ersichtlich ist. Auf diese Weise ist die Blockierung entgegen der Eingriffsrichtung Y zwischen den Verbindungsteilen 2, 3 aufgehoben, sodass das Verbindungsteil 3 entgegen der Eingriffsrichtung Y außer Eingriff von dem Verbindungsteil 2 gezogen werden kann und die Verbindungsteile 2, 3 somit voneinander gelöst werden können.

Das Verkippen erfolgt in einer Kippebene, die zur Bodenfläche 230 senkrecht gerichtet ist, nämlich durch die Schließrichtung X und die Eingriffsrichtung Y aufgespannt ist. Das Verkippen erfolgt hierbei näherungsweise um eine Kippachse K (siehe Fig. 5F) derart, dass das Verbindungsteil 3 eine Schwenkbewegung in der zur Kippachse K senkrechten Kippebene ausführt und somit das Blockierelement 303 aus der Aussparung 231 herausgehoben wird, sodass die Verbindungsteile 2, 3 entgegen der Eingriffsrichtung Y zueinander bewegt und damit voneinander getrennt werden können.

Soll, insbesondere bei unbelasteter Verbindungsvorrichtung 1, die Verbindung der Verbindungsteile 2, 3 gelöst werden, so werden die Verbindungsteile 2, 3 zueinander verkippt und insbesondere auch entgegen der Eingriffsrichtung Y zueinander bewegt, sodass der (den dritten Bereich ausbildende) vordere Kantenabschnitt 305 des Basisabschnitts 300 von der Stufe 234 abgleitet und in den Bereich der Eintauchöffnung 232 eintaucht. Der durch die Stufe 234 geschaffene Formschlussabschnitt wirkt einem Verkippen somit nicht (mehr) entgegen, sodass die Verbindungsteile 2, 3 komfortabel und einfach bei Verkippen über den Betätigungsabschnitt 40 voneinander getrennt werden können.

Das zweite Verbindungsteil 3 kann bei dem dargestellten Ausführungsbeispiel in einer (beliebigen) verdrehten Stellung an das erste Verbindungsteil 2 angesetzt werden, und in beliebiger Drehstellung kann der Eingriffsabschnitt 340 des zweiten Verbindungsteils 3 mit den Eingriffsvorsprüngen 240, 241 des ersten Verbindungsteils 2 in Eingriff gebracht werden. In der verbundenen Stellung ist das zweite Verbindungsteil 3 relativ zum ersten Verbindungsteil 2 unter Beibehaltung des Eingriffs des Eingriffsabschnitts 340 mit den Eingriffsvorsprüngen 240, 241 und unter Eingriff des Blockierelements 303 in die Aussparung 231 entlang einer Umfangsrichtung U um die Rotationsachse R drehbar.

Unter Last, wenn in der verbundenen Stellung der Verbindungsvorrichtung 1 Gurtkräfte zwischen den Gurten 4, 5 wirken, liegt der Gurt 4 zwischen den Eingriffsvorsprüngen 240, 241 ein, wie dies aus Fig. 2A-2G ersichtlich ist. Die Eingriffsvorsprünge 240, 241 sind in diesem Fall seitlich des Gurts 4 angeordnet, sodass der Gurt 4 zwischen den Eingriffsvorsprüngen 240, 241 (betrachtet entlang der von Eingriffsvorsprung 240 zu Eingriffsvorsprung 241 weisenden Querrichtung Q) hindurch erstreckt ist.

Ist das zweite Verbindungsteil 3 demgegenüber entlang der Umfangsrichtung U um die Rotationsachse R zu dem ersten Verbindungsteil 2 verdreht, so kann der Gurt 4 sich über einen der Eingriffsvorsprünge 240, 241 hinweg erstrecken, unter flexibler, biegeschlaffer Verformung des Gurts 4. Beim Verdrehen gleitet der Gurt 4 (abhängig von der Drehrichtung) auf einen der Eingriffsvorsprünge 240, 241 auf und wird dadurch verformt, sodass der Gurt 4 über den jeweiligen Eingriffsvorsprung 240, 241 hinweg bewegt werden kann.

Bei dem dargestellten Ausführungsbeispiel ist das zweite Verbindungsteil 3 über eine Naht 5 mit einer zugeordneten Baugruppe in Form des Gurtes 4 verbunden und somit mit dem Gurt 4 vernäht.

Wie dies aus der Explosionsansicht gemäß Fig. 1A ersichtlich ist, weist der Grundkörper 30 des Verbindungsteils 3 mit dem Befestigungsabschnitt 301 hin zu dem Gurt 4 und bildet eine äußere Seite aus, mit der der Befestigungsabschnitt 301 und somit der Grundkörper 30 an dem Gurt 4 anliegt. Die dem Gurt 4 zugewandte äußere Seite des Befestigungsabschnitts 301 erstreckt sich entlang einer planen, zur Schließrichtung X senkrechten Ebene, entlang derer der Gurt 4 mit dem Grundkörper 30 in Verbindung bringbar und in bestimmungsgemäß konfiguriertem Zustand an dem Grundkörper 30 befestigt ist.

An dem Grundkörper 30 sind Nahtlöcher 50 geformt, die sich durch den Grundkörper 30 hindurcherstrecken. Die Nahtlöcher 50 sind an der äußeren Seite des Befestigungsabschnitts 101 (näherungsweise) entlang einer Kreislinie aneinander angereiht und bilden eine Abfolge von Nahtlöchern 50 aus, die sich um eine Befestigungsöffnung 35, in der die Magneteinrichtung 31 des Verbindungsteils 3 aufgenommen ist, herum erstreckt.

Wie dies aus Fig. 1B ersichtlich ist, ist an dem Basisabschnitt 300 an einer dem Verbindungsteil 2 zugewandten, inneren Seite eine Nut 51 geformt, in der die Nahtlöcher 50 münden. Die Nut 51 erstreckt sich um das zentral an dem Grundkörper 30 geformte Blockierelement 303 herum, innerhalb dessen die Befestigungsöffnung 35 geformt ist, in der die Magneteinrichtung 31 aufgenommen ist.

Die Nut 51 ist als Vertiefung an der Basisfläche 302 des Basisabschnitts 300 des Grundkörpers 30 geformt und folgt der Abfolge der Nahtlöcher 50 an der inneren Seite des Grundkörpers 30.

Die Naht 5 wird durch einen Nähfaden gebildet, der zum Vernähen des Verbindungsteils 3 mit dem Gurt 4 durch den Gurt 4 und die Nahtlöcher 50 hindurchgeführt wird, beispielsweise unter Verwendung einer CNC-Nähmaschine. Durch die Naht 5 kann der Gurt 4 somit über die Nahtlöcher 50 mit dem Grundkörper 30 des Verbindungsteils 3 vernäht werden und dadurch fest mit dem Verbindungsteil 3 verbunden werden.

Die Anordnung von Nahtlöchern 50 bildet einen Nähbereich 52 aus, an dem die Naht 5 hergestellt werden kann, um den Gurt 4 mit dem Verbindungsteil 3 zu vernähen. Wie dies in Fig. 3C und 3E in Zusammenschau mit Fig. 3B eingezeichnet ist, weist der durch die Abfolge der Nahtlöcher 50 definierte Nähbereich 52 einen Abstand A2 zu einem Zentrum Z2 der Magneteinrichtung 31 des Verbindungsteils 3 auf, der kleiner ist als der Abstand A2' des umlaufenden Eingriffsabschnitts 340 zu dem Zentrum Z2 der Magneteinrichtung 31. Die Naht 5 ist somit, nach Verbindung des Gurts 4 mit dem Verbindungsteil 3, näher an der Magneteinrichtung 31 gelegen als der Eingriffsabschnitt 340.

Wie dies aus Fig. 3E ersichtlich ist, wird der Abstand A2 zwischen dem Zentrum Z2 der Magneteinrichtung 31 und dem Nähbereich 52 an dem (radialen) Ort, an dem die Naht 5 hergestellt ist, entlang der durch die äußere Seite des Befestigungsabschnitts 301 definierten, zur Schließrichtung X senkrechten Ebene gemessen. Der Abstand A2' wird demgegenüber zwischen dem Zentrum Z2 der Magneteinrichtung 31 und einer äußeren Kante des Eingriffsabschnitts 340 gemessen. Der Abstand A2 ist kleiner als der Abstand A2', sodass der Nähbereich 52 mit der daran angeordneten Naht 5 näher an der Magneteinrichtung 31 gelegen ist als der Eingriffsabschnitt 340.

Die Naht 5 wird somit innerhalb des Grundkörpers 30 des Verbindungsteils 3 geformt, in einem zentralen Bereich um die Magneteinrichtung 31. Die Naht 5 erstreckt sich dadurch über eine vergleichsweise kleine Flächenausdehnung und trägt nicht wesentlich zum Bauraum des Verbindungsteils 3 bei.

Es ergibt sich ein vorteilhafter Kraftfluss, bei dem eine Kraft über den Gurt 4 zentral in das Verbindungsteil 3 und durch den Eingriff des Eingriffsabschnitts 340 mit den Eingriffsvorsprüngen 240, 241 in das Verbindungsteil 2 eingeleitet wird.

Bei dem dargestellten Ausführungsbeispiel ist das Verbindungsteil 3 mit dem Grundkörper 30 rotationssymmetrisch geformt. Die Magneteinrichtung 31 ist zentral an dem Grundkörper 30 angeordnet, sodass das Zentrum Z2 der Magneteinrichtung 31 mit der Rotationsachse R (siehe Fig. 2A) zusammenfällt.

Das Zentrum Z2 entspricht dem Schwerpunkt der Magneteinrichtung 31, projiziert auf die durch die äußere Seite des Befestigungsabschnitts 301 definierte Ebene.

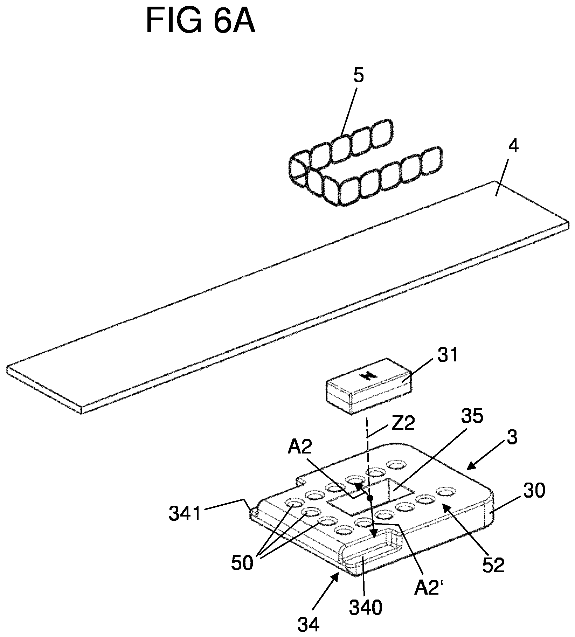

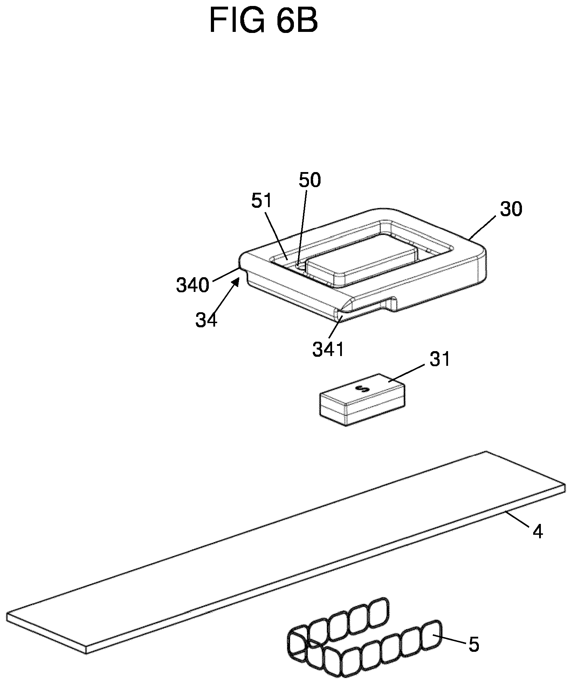

Fig. 6A, 6B zeigen ein weiteres Ausführungsbeispiel eines Verbindungsteils 3, das zum Verwirklichen einer Verbindungsvorrichtung mit einem weiteren Verbindungsteil verbunden werden kann.

Im Unterschied zu dem Ausführungsbeispiel nach Fig. 1A, 1B bis 5A-5G ist bei dem Ausführungsbeispiel gemäß Fig. 6A, 6B der Grundkörper 30 des Verbindungsteils 3 nicht rotationssymmetrisch geformt, sondern weist (betrachtet entlang einer Ebene, die durch eine mit einer zugeordneten Baugruppe 4 in Verbindung bringbare, äußere Seite definiert ist) eine rechteckige Form auf. An voneinander weg gewandten, äußeren Kanten bildet der Grundkörper 30 zwei Eingriffsabschnitte 340, 341 aus, die hinterschnitten sind und somit mit zugeordneten Eingriffsvorsprüngen 240, 241 eines zugeordneten Verbindungsteils 2 in Eingriff gebracht werden können.

Bei dem dargestellten Ausführungsbeispiel ist an dem Grundkörper 30 an der der Baugruppe 4 zugewandten, äußeren Seite eine Anordnung von Nahtlöchern 50 geformt, die aneinander angereiht sind. Die Aneinanderreihung der Nahtlöcher 50 folgt einem Polygonzug, bestehend aus drei geraden Linien, die unter einem Winkel 90° aneinander anschließen und somit zueinander abgewinkelt sind.

Die Nahtlöcher 50 sind um eine zentrale Befestigungsöffnung 35, in der die Magneteinrichtung 31 aufgenommen ist, angeordnet, wie dies aus Fig. 6A ersichtlich ist.

Analog wie bei dem Ausführungsbeispiel gemäß Fig. 1A, 1B bis 5A-5G sind zumindest einige der Nahtlöcher 50 näher an der zentralen Magneteinrichtung 31 angeordnet als die Eingriffsabschnitte 340, 341 und weisen entsprechend einen Abstand A2 zu dem Zentrum Z2 der Magneteinrichtung 31 auf, der kleiner ist als der Abstand A2' der Eingriffsabschnitte 340, 341 zu dem Zentrum Z2 der Magneteinrichtung 31, wie dies in Fig. 6A eingezeichnet ist.

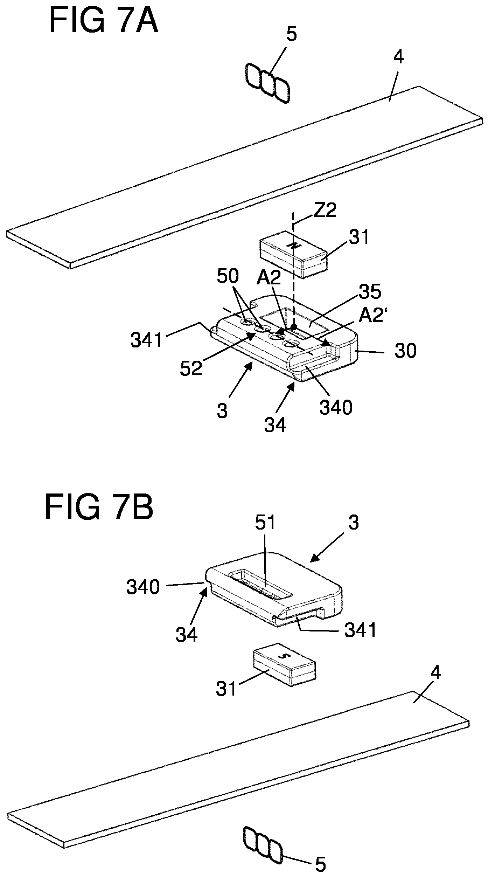

Bei einem anderen, in Fig. 7A, 7B dargestellten Ausführungsbeispiel eines Verbindungsteils 3, das mit einem zugeordneten, weiteren Verbindungsteil einer Verbindungsvorrichtung in Eingriff gebracht werden kann, sind (analog wie bei dem Ausführungsbeispiel gemäß Fig. 6A, 6B) an einem Grundkörper 30 an voneinander weg weisenden, äußeren Kanten Eingriffsabschnitte 340, 341 geformt.

Zwischen den Eingriffsabschnitten 340, 341 ist hierbei eine Anordnung von Nahtlöchern 50 geformt, die entlang einer der Baugruppe 4 zugewandten, äußeren Seite aneinander angereiht sind und einen Nähbereich 52 ausbilden, der zumindest zum Teil näher an der Magneteinrichtung 31 des Verbindungsteils 3 gelegen ist als die Eingriffsabschnitte 340, 341.

Die Nahtlöcher 50 sind entlang einer geraden Linie aneinander angereiht. An den Nahtlöchern 50 kann die Naht 5 angebracht werden, um die Baugruppe 4 mit dem Verbindungsteil 3 zu vernähen.

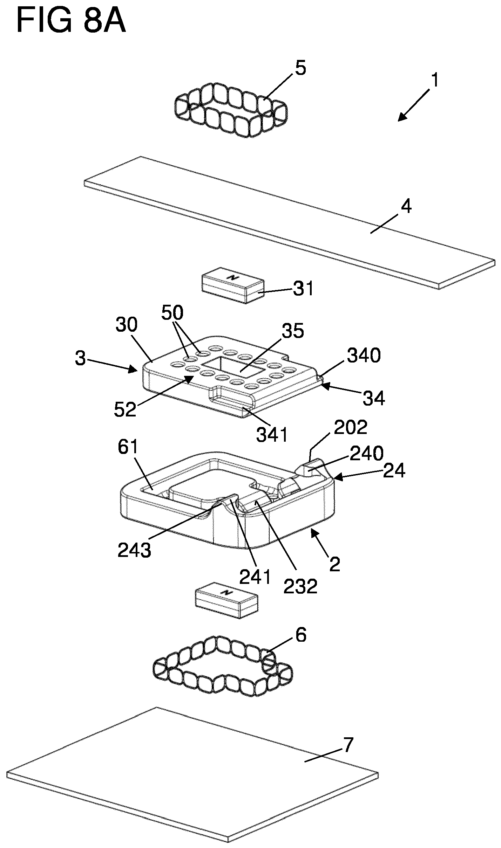

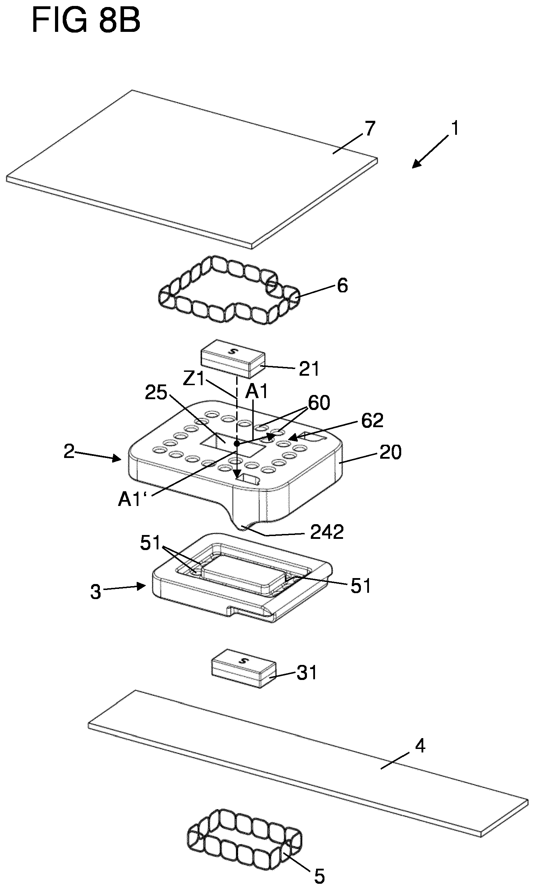

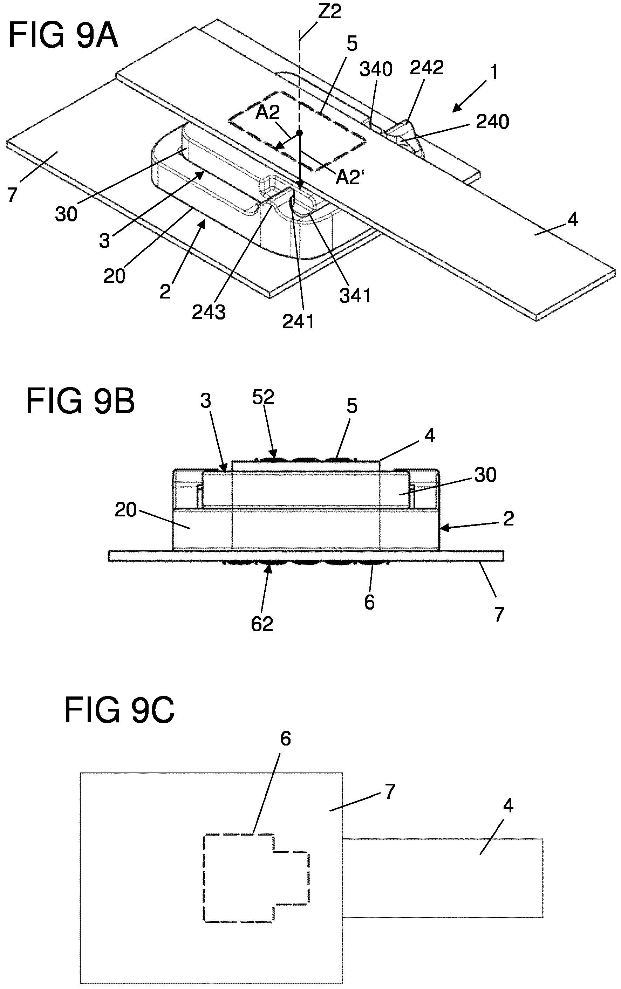

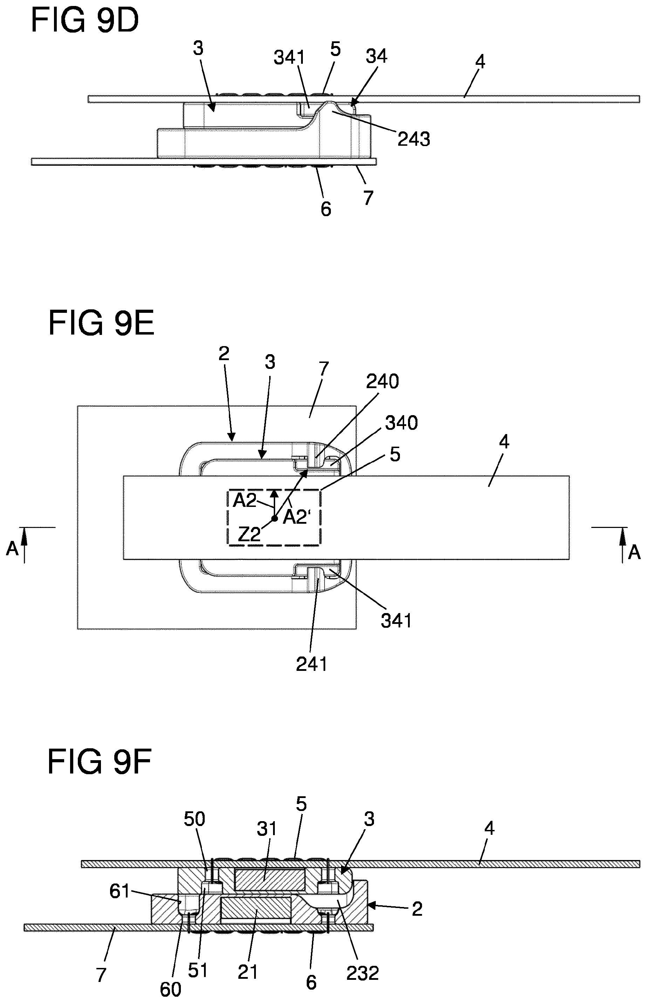

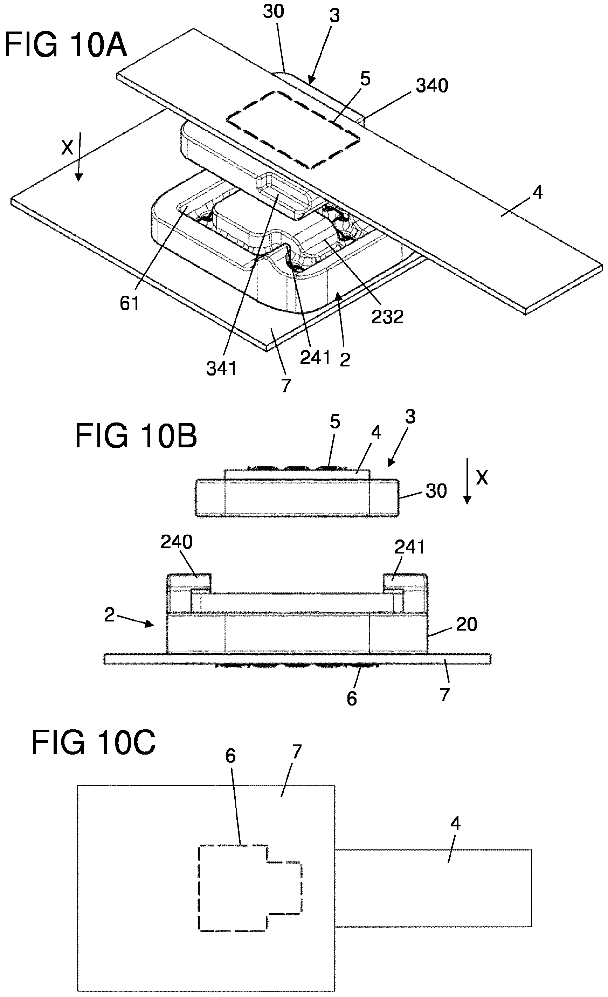

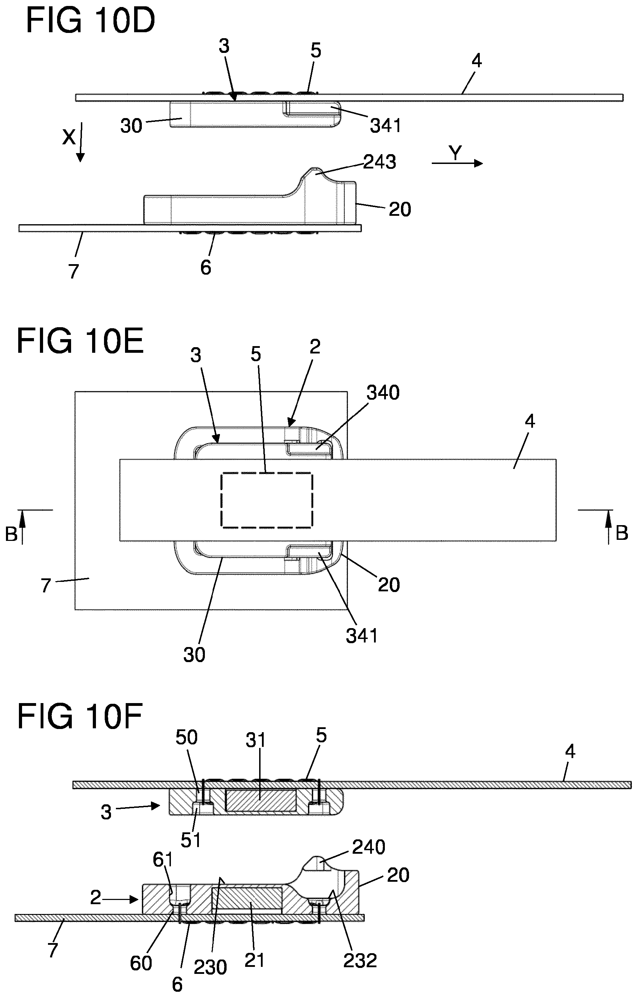

Fig. 8A, 8B bis 10A-10F zeigen ein Ausführungsbeispiel einer Verbindungsvorrichtung 1 unter Verwendung des Verbindungsteils 3 gemäß Fig. 6A, 6B, das mit einem zugeordneten Verbindungsteil 2 in Verbindung gebracht werden kann, um die Verbindungsvorrichtung 1 zu schließen. Fig. 9A-9F zeigen die Verbindungsvorrichtung 1 entsprechend in der verbundenen Stellung der Verbindungsteile 2, 3.

An dem Verbindungsteil 3 sind an voneinander abgelegenen, nach außen weisenden Kanten des Grundkörpers 30 Eingriffsabschnitte 340, 341 geformt, die mit Bezug auf die Schließrichtung X hinterschnitten sind, indem ein jeweils an die Eingriffsabschnitte 340, 341 anschließender Abschnitt des Grundkörpers 30 zurückspringt und somit einen Raum hinter dem jeweiligen Eingriffsabschnitt 340, 341 freigibt. Über die Eingriffsabschnitte 340, 341 kann das Verbindungsteil 3 mit Eingriffsvorsprüngen 240, 241 an erhabenen Abschnitten 242, 243 eines Grundkörpers 20 des Verbindungsteils 2 in Eingriff gebracht werden, wie dies aus Fig. 9A-9F ersichtlich ist.

In der verbundenen Stellung sind die Verbindungsteile 2, 3 magnetisch über die Magneteinrichtungen 21, 31 und zudem durch den Eingriff der Eingriffsabschnitte 340, 341 mit den Eingriffsvorsprüngen 240, 241 entlang der Schließrichtung X und zudem entlang einer zur Schließrichtung X quer gerichteten Richtung zueinander festgelegt.

Mit Blick auf den Schließvorgang und auch mit Blick auf den Öffnungsvorgang sowie den Halt in der verbundenen Stellung ist das Ausführungsbeispiel gemäß Fig. 8A, 8B bis 10A-10F funktional ähnlich dem Ausführungsbeispiel gemäß Fig. 1A, 1B bis 5A-5G, sodass auch auf die obigen Ausführungen zu dem Ausführungsbeispiel gemäß Fig. 1A, 1B bis 5A-5G verwiesen werden soll.

Im Unterschied zu dem Ausführungsbeispiel gemäß Fig. 1A, 1B bis 5A-5G ist das Verbindungsteil 3 mit dem Grundkörper 30 nicht rotationssymmetrisch geformt und bildet statt eines umlaufenden Eingriffsabschnitts zwei voneinander räumlich getrennte Eingriffsabschnitte 340, 341 aus. Entsprechend können die Verbindungsteile 2, 3 in der verbundenen Stellung nicht zueinander verdreht werden, sondern sind lagefest zueinander gehalten.

Bei dem dargestellten Ausführungsbeispiel ist das Verbindungsteil 3 über eine Naht 5 mit dem Gurt 4 verbunden. An dem Grundkörper 30 ist eine Anordnung von Nahtlöchern 50 geschaffen, die sich um eine Befestigungsöffnung 35, in der die Magneteinrichtung 31 aufgenommen ist, herum erstreckt. Zumindest einige der Nahtlöcher 50 sind hierbei näher an der Magnetrichtung 31 gelegen als die Eingriffsabschnitte 340, 341 an den äußeren Kanten des Grundkörpers 30, wie dies aus Fig. 8A in Zusammenschau mit Fig. 9A und 9E ersichtlich ist.

Insbesondere weisen zumindest einige der Nahtlöcher 50 einen Abstand A2 zu dem Zentrum Z2 der Magneteinrichtung 31 auf, der kleiner ist als der Abstand A2' der Eingriffseinrichtungen 340, 341 zu dem Zentrum Z2 der Magneteinrichtung 31.

Zudem ist bei dem Ausführungsbeispiel gemäß Fig. 8A, 8B bis 10A-10F auch das Verbindungsteil 2 mit einer zugeordneten Baugruppe 7, zum Beispiel in Form eines flächigen Stoffabschnitts, vernäht. Hierzu weist der Grundkörper 20 des Verbindungsteils 2 eine Anordnung von Nahtlöchern 60 auf, die an einer der Baugruppe 7 zugewandten, äußeren Seite des Grundkörpers 20 des Verbindungsteils 2 um eine Befestigungsöffnung 25, in der die Magneteinrichtung 21 aufgenommen ist, entlang einer durch die äußere Seite definierten Ebene aneinander angereiht sind, wie dies aus Fig. 8B ersichtlich ist.

Die Nahtlöcher 60 erstrecken sich durch den Grundkörper 20 hindurch und münden in einer Nut 61 an einer dem Verbindungsteil 3 zugewandten, inneren Seite des Verbindungsteils 2.

Die Nahtlöcher 60 bilden einen Nähbereich 62 aus, über den die Naht 6 hergestellt werden kann und über den die Baugruppe 7 somit mit dem Verbindungsteil 3 vernäht werden kann.

Zumindest einige der Nahtlöcher 60 weisen hierbei einen Abstand A1 relativ zu einem Zentrum Z1 der Magneteinrichtung 21 auf, der kleiner ist als ein Abstand A1' zwischen dem Zentrum Z1 der Magneteinrichtung 21 und den Eingriffsvorsprüngen 240, 241, wie dies in Fig. 8B eingezeichnet ist. Zumindest einige der Nahtlöcher 60 sind dadurch näher an der Magneteinrichtung 21 gelegen als die Eingriffsvorsprünge 240, 241.

Bei dem Ausführungsbeispiel gemäß Fig. 8A, 8B bis 10A-10F sind somit beide Verbindungsteile 2, 3 jeweils mit einer zugeordneten Baugruppe 4, 7 vernäht, wobei das Vernähen jeweils über einen Nähbereich 52, 62 erfolgt, der in naher Lagebeziehung zu der Magneteinrichtung 21, 31 angeordnet ist.

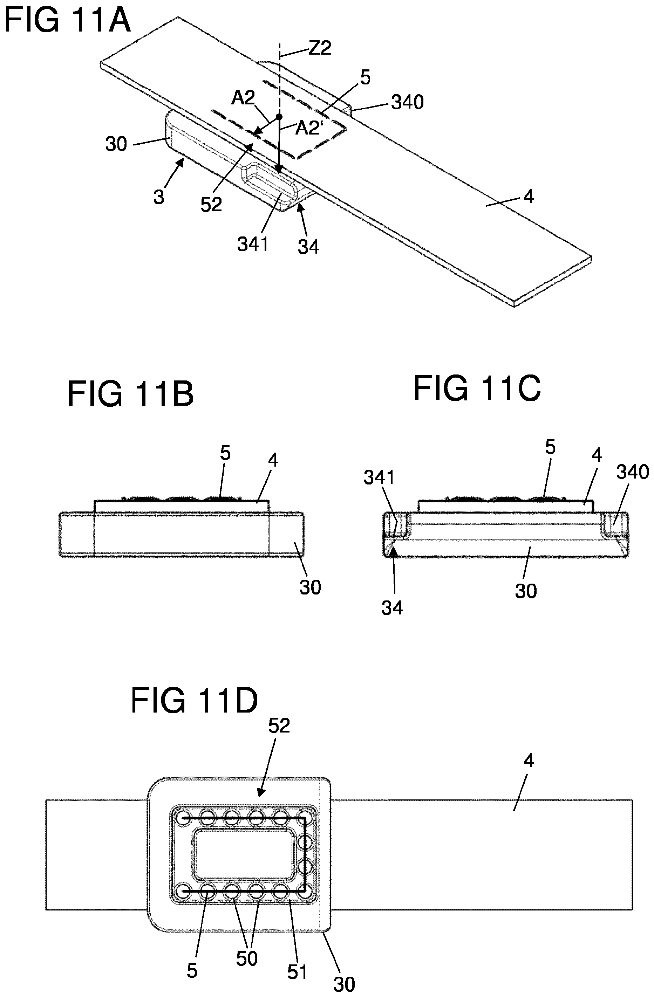

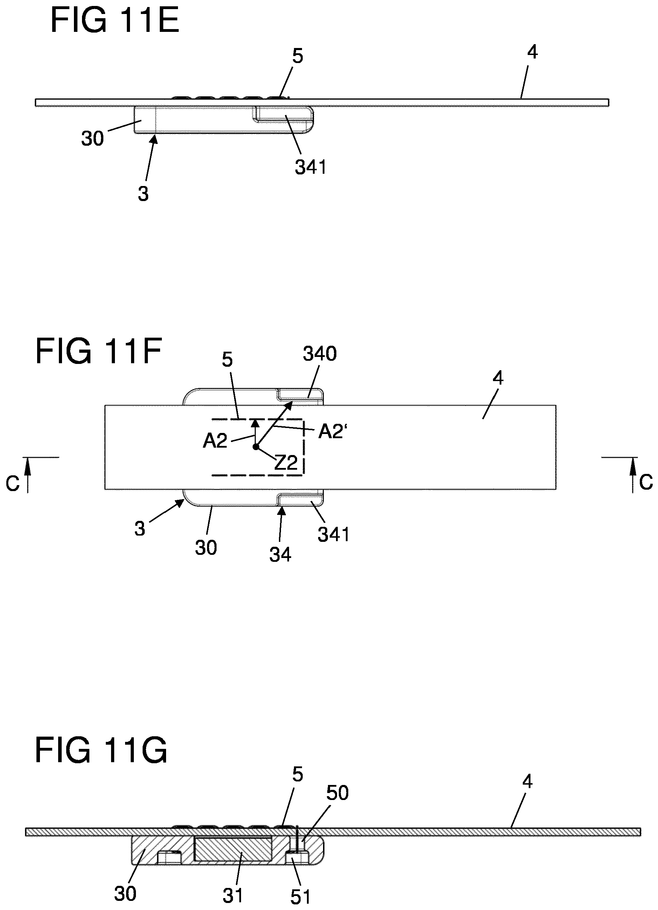

Fig. 11A-11G zeigen weitere Ansichten des Ausführungsbeispiels gemäß Fig. 6A, 6B. Das Verbindungsteil 3 ist zusammen mit dem Verbindungsteil 2 gemäß Fig. 8A, 8B bis 10A-10F verwendbar.

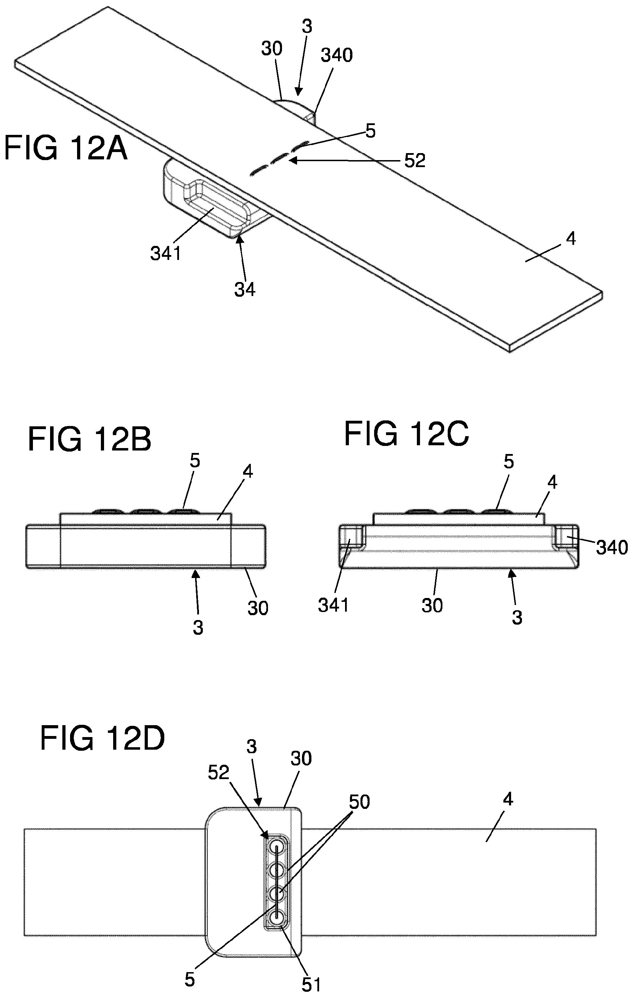

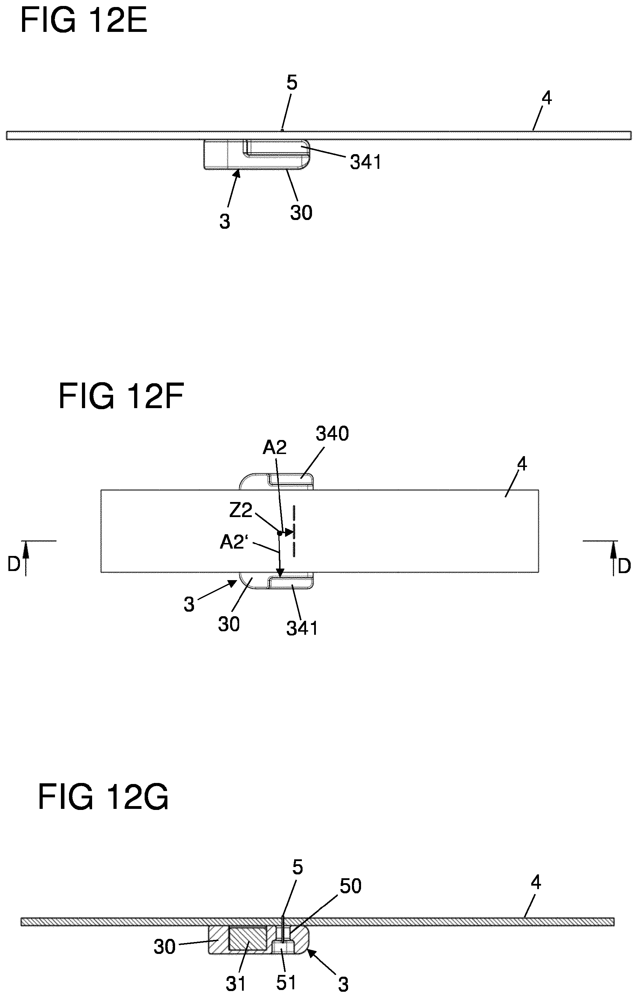

Fig. 12A-12G zeigen weitere Ansichten des Ausführungsbeispiels gemäß Fig. 7A, 7B. Das Verbindungsteil 3 ist an dem Verbindungsteil 2 gemäß Fig. 8A, 8B bis 10A-10F verwendbar.

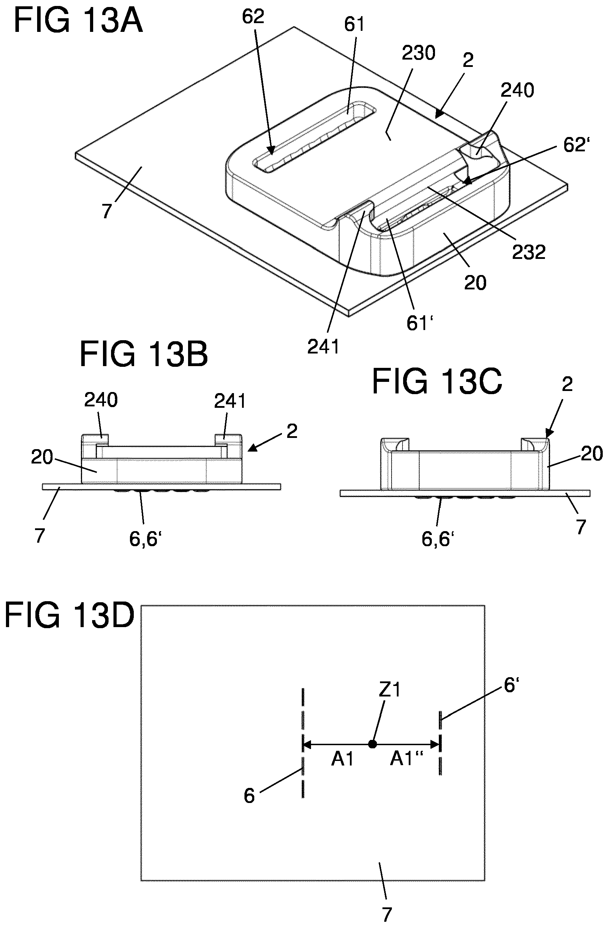

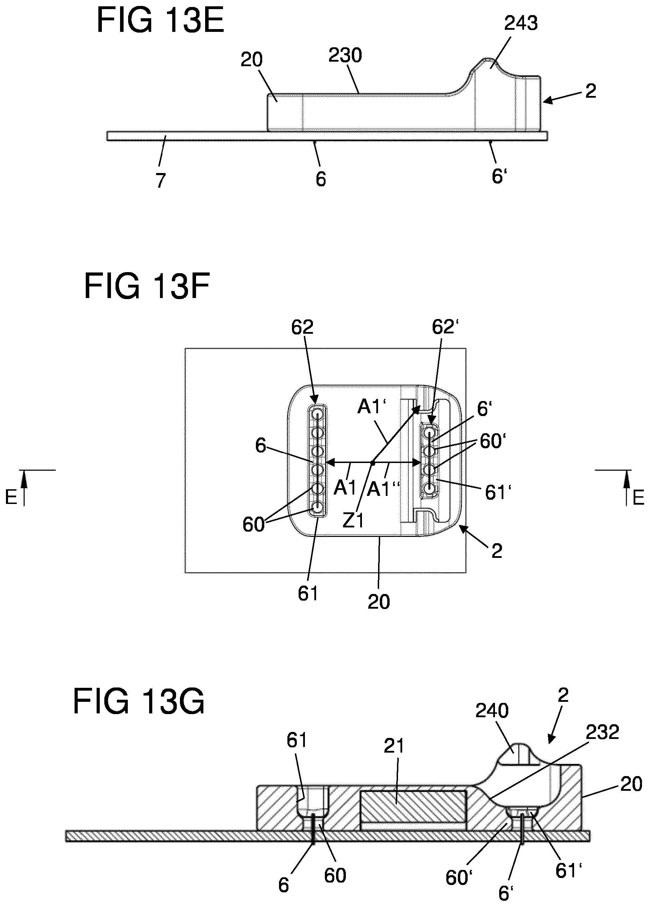

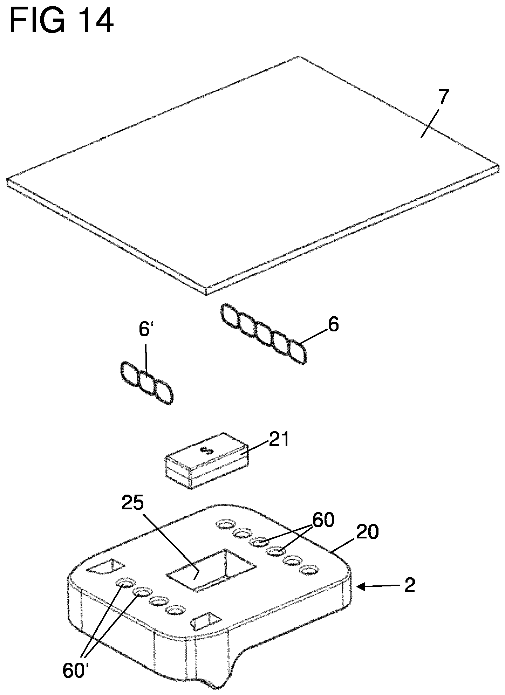

Fig. 13A-13G und 14 zeigen Ansichten des Verbindungsteils 2 in einer Abwandlung des Ausführungsbeispiels gemäß Fig. 8A, 8B bis 10A-10F. Strukturell, insbesondere mit Blick auf die Ausgestaltung der Eingriffsvorsprünge 240, 241, ist das Verbindungsteil 2 gleich dem Ausführungsbeispiel gemäß Fig. 8A, 8B bis 10A-10F ausgestaltet. Das Ausführungsbeispiel gemäß Fig. 13A-13G und 14 unterscheidet sich jedoch von dem Ausführungsbeispiel gemäß Fig. 8A, 8B bis 10A-10F dadurch, dass kein durchgängiger Nähbereich an dem Grundkörper 20 geschaffen ist, sondern Nahtlöcher 60, 60' entlang von zwei parallel zueinander erstreckten, geraden Linien aneinander angereiht sind, wie dies aus der Explosionsansicht gemäß Fig. 14 ersichtlich ist. Es werden somit zwei Nahtbereiche 62, 62' zum Anbringen je einer Naht 6, 6' an dem Verbindungsteil 2 geschaffen.

Die Nahtlöcher 60, 60' münden jeweils in einer zugeordneten Nut 61, 61' an einer dem anderen Verbindungsteil 3 zugewandten, inneren Seite des Verbindungsteils 2.

Für jeden der Nähbereiche 62, 62' gilt, dass zumindest einige der Nahtlöcher 60, 60' näher an der zentralen Magneteinrichtung 21 des Verbindungsteils 2 angeordnet sind als die Eingriffsvorsprünge 240, 241 und entsprechend einen Abstand A1, A1" zu dem Zentrum Z1 der Magneteinrichtung 21 aufweisen, der kleiner ist als der Abstand A1' der Eingriffsvorsprünge 240, 241 zu dem Zentrum Z1 der Magneteinrichtung 21, wie dies in Fig. 13D und 13F eingezeichnet ist.

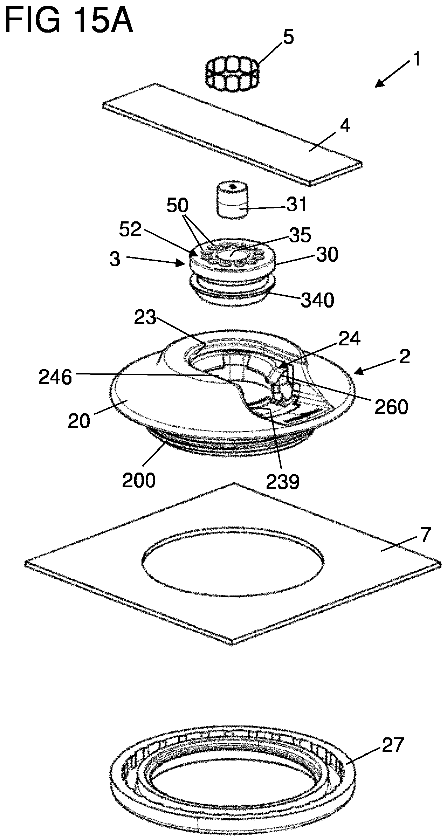

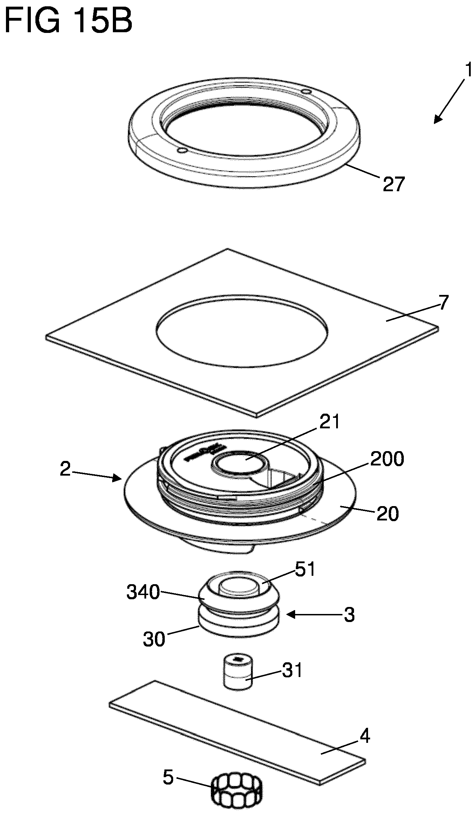

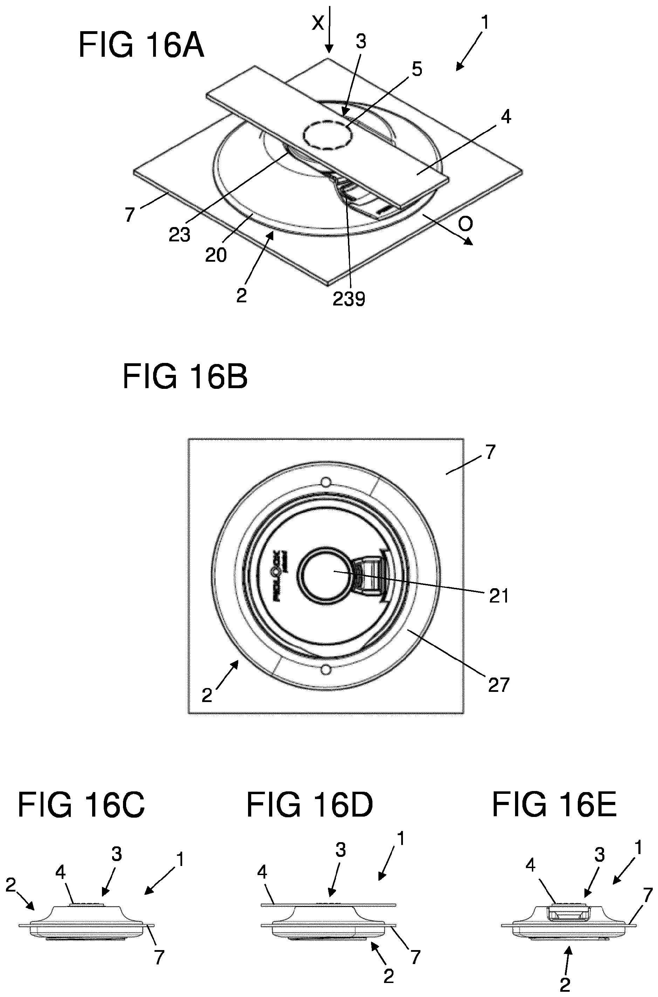

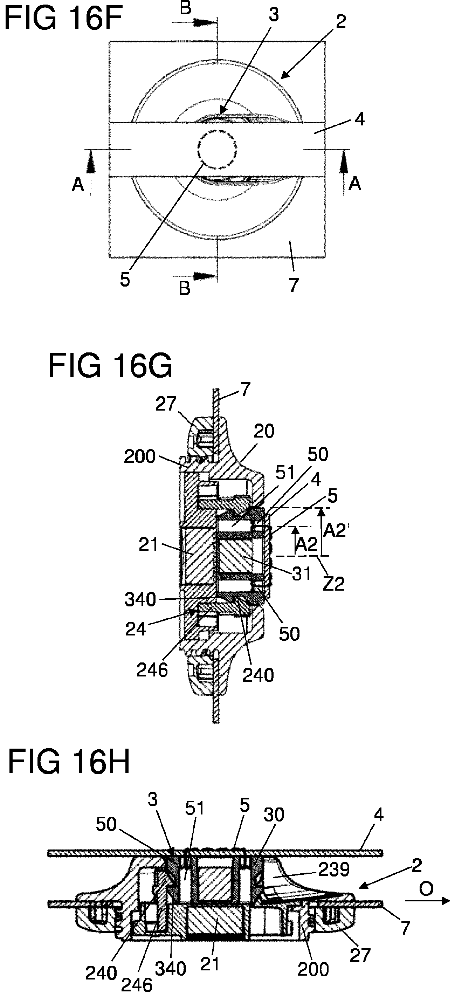

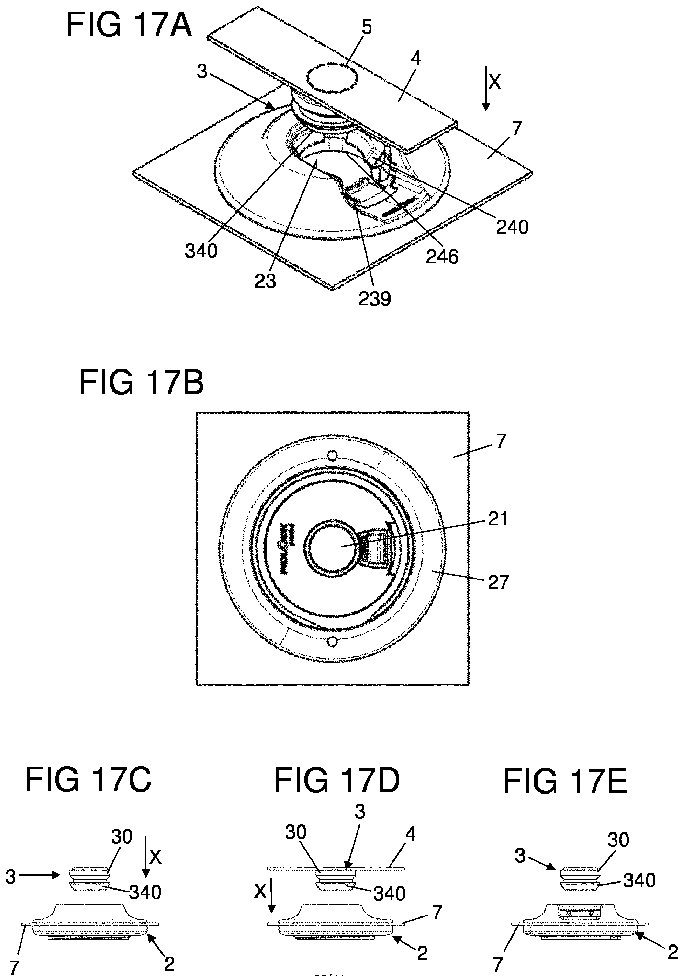

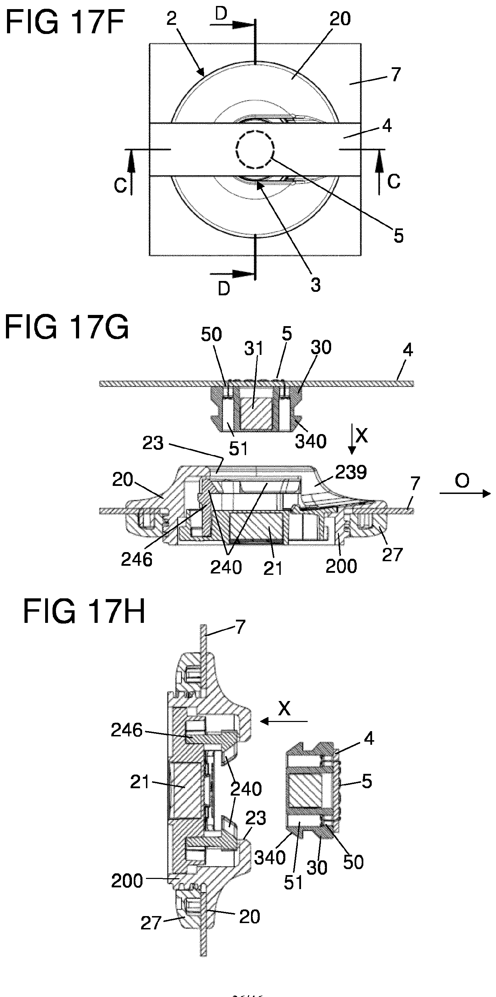

Fig. 15A, 15B bis 17A-17H zeigen ein weiteres Ausführungsbeispiel einer Verbindungsvorrichtung 1, bei der Verbindungsteile 2, 3 entlang einer Schließrichtung X aneinander angesetzt werden können. In einer verbundenen Stellung, dargestellt in Fig. 16A-16H, sind die Verbindungsteile 2, 3 miteinander verbunden.

Die Verbindungsteile 2, 3 weisen jeweils einen Grundkörper 20, 30 auf, an dem eine Magneteinrichtung 21, 31 angeordnet ist. Die Magneteinrichtungen 21, 31 wirken entlang der Schließrichtung X magnetisch anziehend zusammen und ziehen die Verbindungsteile 2, 3 zum Unterstützen des Ansetzens somit zueinander hin.

Bei dem dargestellten Ausführungsbeispiel ist an dem Grundkörper 30 des Verbindungsteils 3 ein Eingriffsabschnitt 340 geformt, der radial nach außen vorspringt, an dem zapfenförmigen Grundkörper 30 umläuft und mit Bezug auf die Schließrichtung X hinterschnitten ist. Entsprechend schließt an den Eingriffsabschnitt 340 ein Abschnitt an, der gegenüber dem Eingriffsabschnitt 340 radial nach innen zurückspringt, sodass der Eingriffsabschnitt 340 mit zugeordneten Eingriffsvorsprüngen 240 auf Seiten des Verbindungsteils 2 in Eingriff gebracht werden kann, wie dies aus Fig. 16G ersichtlich ist.

Bei dem dargestellten Ausführungsbeispiel ist an dem Grundkörper 20 des Verbindungsteils 2 ein elastisch federndes Federverrieglungselement 246 angeordnet, das Eingriffsvorsprünge 240 trägt.

Das Federverriegelungselement 246 weist die Form eines C-Rings auf, der in einer zur Schließrichtung X senkrechten Ebene elastisch geweitet werden kann, sodass der Eingriffsabschnitt 340 am Grundkörper 30 des Verbindungsteils 3 in die Schließrichtung X mit dem Federverriegelungselement 246 in Eingriff gebracht werden kann.

Das Federverriegelungselement 246 bildet eine Eingriffseinrichtung 24 aus, indem an dem Federverriegelungselement 246 Eingriffsvorsprünge 240 geformt sind, die radial nach innen vorspringen und mit dem Eingriffsabschnitt 340 des Verbindungsteils 3 in Eingriff gebracht werden können. An jedem Schenkel des durch den C-Ring ausgebildeten Federverriegelungselements 240 ist hierbei ein Eingriffsvorsprung 240 geformt. Ein weiterer, dritter Eingriffsvorsprung 240 ist an einem mittleren Abstand zwischen den Schenkeln geformt.

Zum Schließen der Verbindungsvorrichtung 1 werden die Verbindungsteile 2, 3 entlang der Schließrichtung X aneinander angesetzt, sodass das Verbindungsteil 3 mit dem Eingriffsabschnitt 340 in Eingriff mit dem Federverrieglungselement 246 des Verbindungsteils 2 gelangt. Das Federverriegelungselement 246 wird beim Einsetzen radial aufgeweitet, bis der Eingriffsabschnitt 340 die Eingriffsvorsprünge 240 passiert hat und das Federverriegelungselement 246 mit den Eingriffsvorsprüngen 240 in Eingriff mit dem Eingriffsabschnitt 340 schnappt.

Das Ansetzen erfolgt unter magnetischer Anziehung der Magneteinrichtungen 21, 31, sodass die Verbindungsteile 2, 3 zueinander hin gezogen werden und bei Annäherung der Verbindungsteile 2, 3 der Eingriffsabschnitt 340 vorzugsweise selbsttätig in Eingriff mit dem Federverriegelungselement 246 gezogen wird.

In der verbundenen Stellung gemäß Fig. 16A-16H umgreift das Federverriegelungselement 246 den Grundkörper 30 des Verbindungsteils 3. Durch den Eingriff des Eingriffsabschnitts 340 mit den Eingriffsvorsprüngen 240 sind die Verbindungsteile 2, 3 entlang der Schließrichtung X zueinander festgelegt.

Zum Öffnen der Verbindungsvorrichtung 1 kann das Verbindungsteil 3 in eine Öffnungsrichtung O relativ zu dem Verbindungsteil 3 bewegt werden, um auf diese Weise den Eingriffsabschnitt 340 in die Öffnungsrichtung O außer Eingriff von dem Federverriegelungselement 246 zu bewegen. Das Verbindungsteil 3 wird somit aus dem Federverriegelungselement 246 durch die seitliche Öffnung des C-Rings herausgeschoben, sodass der Eingriffsabschnitt 340 außer Eingriff von den Eingriffsvorsprüngen 240 an dem Federverriegelungselement 246 gelangt und die Verbindungsteile 2, 3 somit voneinander getrennt werden.

Bei dem dargestellten Ausführungsbeispiel ist das Verbindungsteil 3 mit einer zugeordneten Baugruppe 4 in Form eines Gurts durch eine Naht 5 verbunden. An dem Grundkörper 30 sind hierbei Nahtlöcher 50 zur Ausbildung eines Näherbereichs 52 angeordnet, die um die Schließrichtung X aneinander angereiht sind.

Die Abfolge der Nahtlöcher 50 erstreckt sich um eine Befestigungsöffnung 35, in der die Magneteinrichtung 31 in dem Grundkörper 30 aufgenommen ist, herum.

Wie dies in Fig. 16G eingezeichnet ist, sind die Nahtlöcher 50 näher an der Magneteinrichtung 31 gelegen als der Eingriffsabschnitt 340, indem die Nahtlöcher 50 auf einem radialen Abstand A2 zu einem Zentrum Z2 der Magneteinrichtung 31 angeordnet sind, der kleiner ist als ein radialer Abstand A2' des Eingriffsabschnitts 340 zu dem Zentrum Z2 der Magneteinrichtung 31.

Bei dem dargestellten Ausführungsbeispiel ist das Verbindungsteil 2 über einen auf einen Gewindeabschnitt 200 aufgeschraubten Schraubring 27 mit einer zugeordneten Baugruppe 7 verbunden. Auch das Verbindungsteil 2 kann, in einer Ausgestaltung, mit der zugeordneten Baugruppe 7 vernäht sein.

Bei dem Ausführungsbeispiel gemäß Fig. 1A, 1B bis 5A-5G ist der Grundkörper 30 des Verbindungsteils 3 zumindest näherungsweise rotationssymmetrisch geformt. Dies ist jedoch nicht zwingend. Insbesondere kann der Eingriffsabschnitt 340 des Verbindungsteils 3 auch nicht rotationssymmetrisch geformt sein.

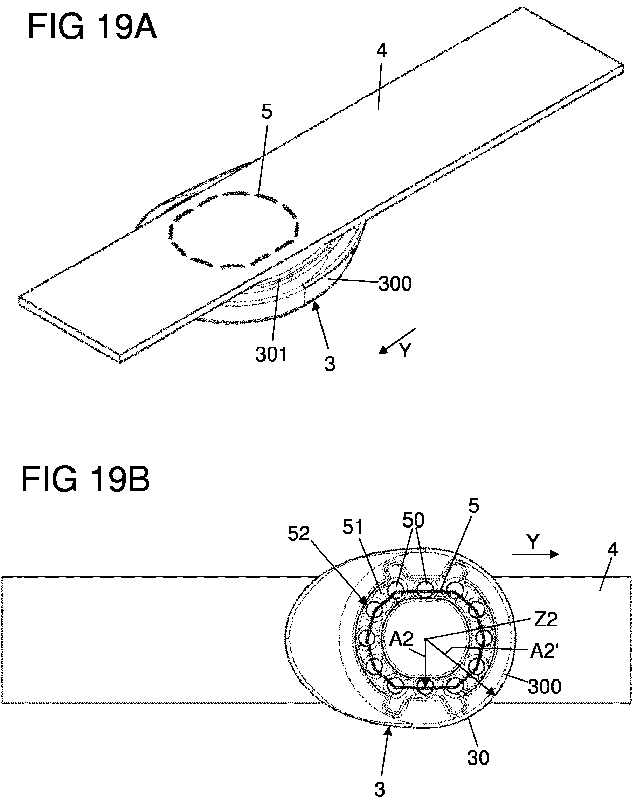

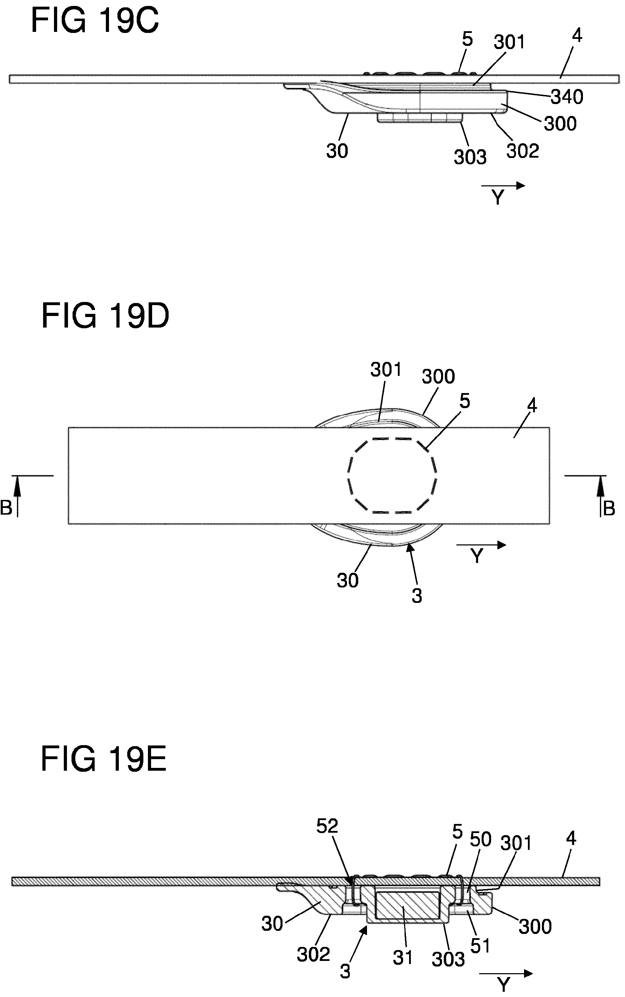

So ist bei einem in Fig. 19A-19E dargestellten Ausführungsbeispiel ein Eingriffsabschnitt 340 nicht umlaufend an einem Basisabschnitt 300 des Verbindungsteils 3 geformt. Der hinterschnittene Eingriffsabschnitt 340 ist insbesondere im Bereich einer in eine Eingriffsrichtung Y weisenden Stirnseite geformt, nicht aber an einem entgegen der Eingriffsrichtung Y weisenden hinteren Abschnitt.

Wiederum ist das Verbindungsteil 3 mit einer zugeordneten Baugruppe 4 vernäht, wobei der Nähbereich 52 näher an der zentralen Magneteinrichtung 31 gelegen ist als der stirnseitige Eingriffsabschnitt 340.

Das Verbindungsteil gemäß Fig. 19A bis 19E kann mit dem Verbindungsteil 2 gemäß Fig. 1A, 1B bis 5A-5G in Eingriff gebracht werden.

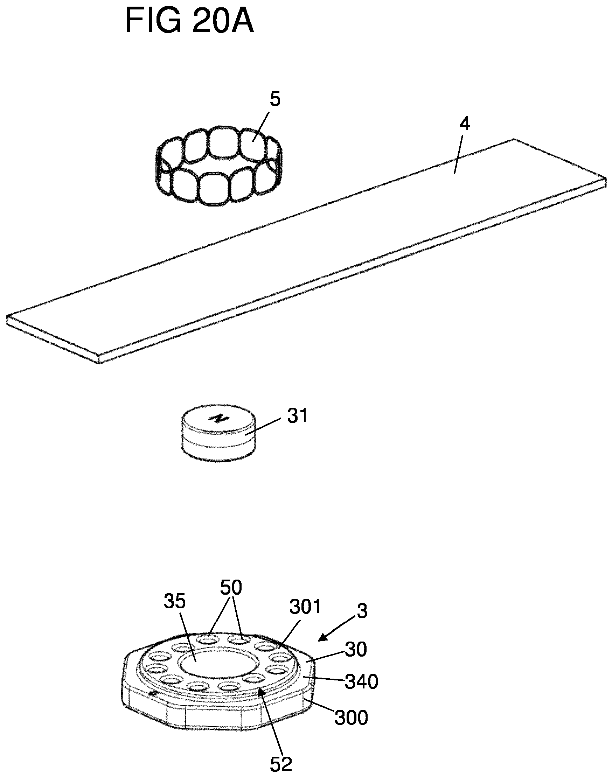

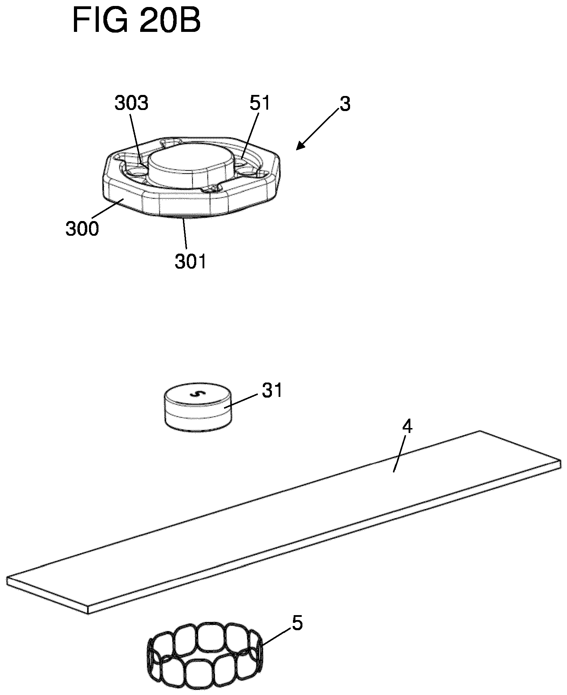

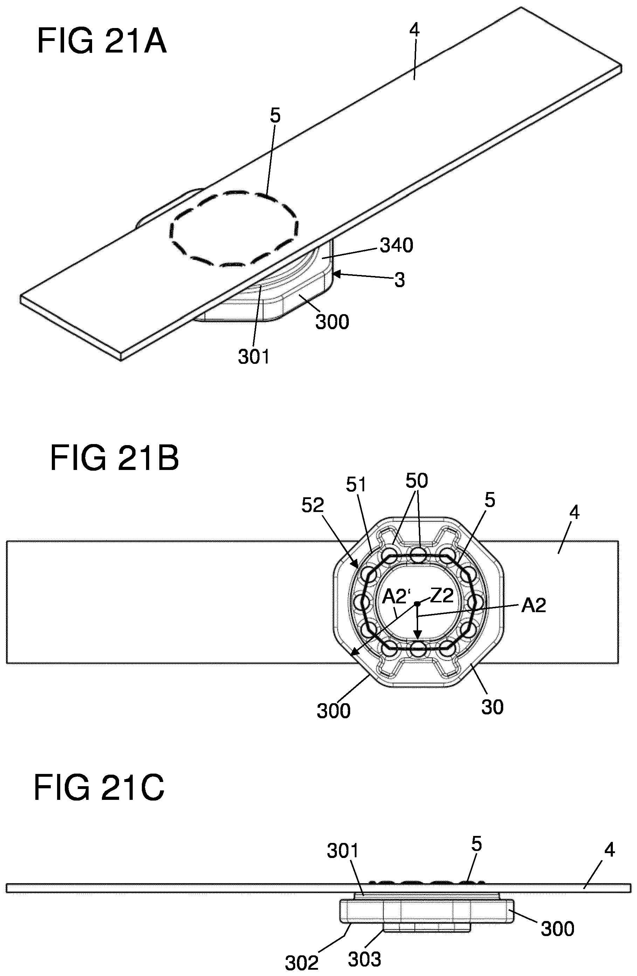

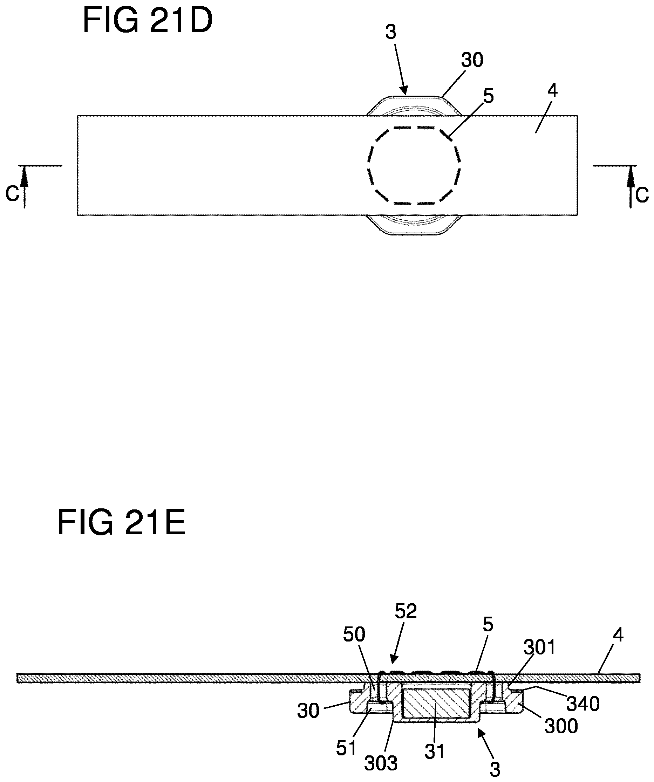

Bei einem anderen, in Fig. 20A, 20B und 21A-21E dargestellten Ausführungsbeispiel ist der Grundkörper 30 des Verbindungsteils 3 mehreckig geformt und folgt an einer umgebenden Außenkontur einem sechseckigen Polygonzug. Wiederum ist das Verbindungsteil 3 mit einer zugeordneten Baugruppe 4 über eine Naht 5 vernäht, wobei ein Nähbereich 52 näher an der zentralen Magneteinrichtung 31 gelegen ist als ein durch die mehreckige Außenkontur geformter Eingriffsabschnitt 340, indem der Nähbereich 52 einen Abstand A2 zu einem Zentrum Z2 der Magneteinrichtung 31 aufweist, der kleiner ist als ein Abstand A2' zwischen dem Zentrum Z2 und dem äußeren Eingriffsabschnitt 340, wie dies in Fig. 21B eingezeichnet ist.

Das Verbindungsteil 3 gemäß Fig. 20A, 20B und 21A-21E kann zur Verwirklichung einer Verbindungsvorrichtung 1 zum Beispiel zusammen mit einem Verbindungsteil ähnlich dem in Fig. 1A, 1B bis 5A-5G dargestellten Verbindungsteil 2 verwendet werden.

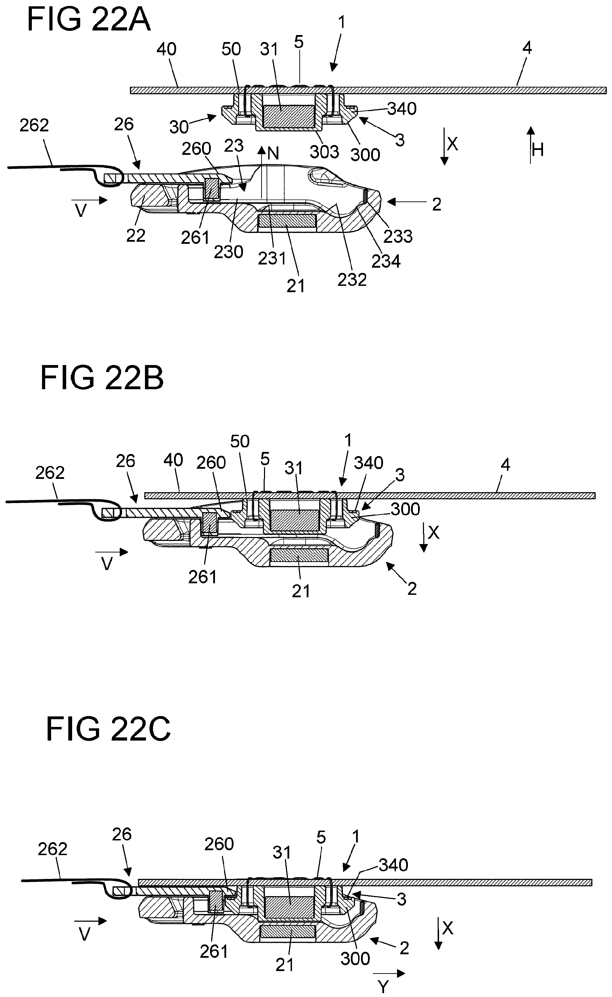

Fig. 22A-22C zeigen Schnittansichten eines weiteren Ausführungsbeispiels einer Verbindungsvorrichtung 1, die Verbindungsteile 2, 3 aufweist.

Die Verbindungsvorrichtung 1 gemäß Fig. 22A-22C entspricht funktional weitestgehend dem Ausführungsbeispiel gemäß Fig. 1A, 1B bis 5A-5G. Im Unterschied zu dem Ausführungsbeispiel gemäß Fig. 1A, 1B bis 5A-5G ist bei dem Ausführungsbeispiel gemäß Fig. 22A-22C an dem ersten Verbindungsteil 2 zusätzlich ein Riegelelement 26 angeordnet, das einen Eingriffsvorsprung 260 ausbildet, der dazu ausgestaltet ist, in der verbundenen Stellung der Verbindungsteile 2, 3 mit dem umlaufend an dem Basisabschnitt 300 des zweiten Verbindungsteils 3 geformten Eingriffsabschnitt 340 formschlüssig zusammenzuwirken.

Das Riegelelement 26 ist entlang einer quer zur Schließrichtung X gerichteten Verriegelungsrichtung V bewegbar an dem Grundkörper 20 des ersten Verschlussteils 2 angeordnet, sodass das Riegelelement 26 entlang der Verriegelungsrichtung V relativ zu dem Grundkörper 20 bewegt werden kann, um den Eingriffsvorsprung 260 in Eingriff oder außer Eingriff von dem Eingriffsabschnitt 340 an der Basis 300 des Grundkörpers 30 des ersten Verbindungsteils 3 zu bringen.

Bei dem dargestellten Ausführungsbeispiel ist an dem Riegelelement 26 eine dritte Magneteinrichtung 261 angeordnet, die dazu ausgestaltet ist, magnetisch mit der zweiten Magneteinrichtung 31 des zweiten Verbindungsteils 3 zusammenzuwirken. Werden die Verbindungsteile 2, 3 entlang der Schließrichtung X aneinander angesetzt, so ziehen sich die Magneteinrichtungen 261, 31 magnetisch gegenseitig an, sodass das Riegelelement 26 in Richtung eines Eingriffs des Eingriffsvorsprungs 260 mit dem Eingriffsabschnitt 340 belastet ist.

Beim Ansetzen der Verbindungsteile 2, 3 aneinander läuft die Basis 300 mit einer daran geformten Auflaufschräge auf eine Auflaufschräge an dem Eingriffsvorsprung 260 auf, sodass das Riegelelement 26 beim Ansetzen der Verbindungsteile 2, 3 zunächst entgegen der Verriegelungsrichtung V beiseite gedrängt wird, wie dies aus Fig. 22B ersichtlich ist. Hat das zweite Verbindungsteil 3 mit der Basis 300 den Eingriffsvorsprung 260 passiert, so wird das Riegelelement 26 mit dem daran angeordneten Eingriffsvorsprung 260 in die Verriegelungsrichtung V aufgrund der magnetischen Anziehung zwischen den Magneteinrichtungen 261, 31 in Eingriff mit dem Eingriffsabschnitt 340 an der Basis 300 gezogen, wie dies aus Fig. 22C ersichtlich ist.

Soll die Verbindungsvorrichtung 1 geöffnet werden, kann ein Nutzer über eine Betätigungslasche 262 das Riegelelement 26 entgegen der Verriegelungsrichtung V verstellen, um auf diese Weise den Eingriff des Eingriffsvorsprungs 260 mit dem Eingriffsabschnitt 340 aufzuheben, sodass die Verbindungsteile 2, 3 voneinander getrennt werden können.

Bei dem Ausführungsbeispiel gemäß Fig. 22A-22C kann vorgesehen sein, dass die dritte Magneteinrichtung 261 des Riegelelements 26 magnetisch abstoßend mit der ersten Magneteinrichtung 21 des ersten Verbindungsteils 2 zusammenwirkt, sodass bei geöffneter Verbindungsvorrichtung 1 das Riegelelement 26 in einer entgegen der Verriegelungsrichtung V zurückgezogenen, entriegelten Stellung gehalten wird. Dies kann das Ansetzen der Verbindungsteile 2, 3 aneinander erleichtern. Bei Ansetzen der Verbindungsteile 2, 3 aneinander übersteigt ab einem gewissen Punkt die magnetische Anziehungskraft zwischen der dritten Magneteinrichtung 261 und der zweiten Magneteinrichtung 31 die magnetische Abstoßung zwischen der dritten Magneteinrichtung 261 und der ersten Magneteinrichtung 21. Sind die Verbindungsteile 2, 3 aneinander angesetzt worden, so wird das Riegelelement 26 somit aufgrund der magnetischen Anziehung in Eingriff mit dem Eingriffsabschnitt 340 gezogen, sodass die Verbindungsteile 2, 3 relativ zueinander verriegelt werden.

Abgesehen von dem Vorsehen des Riegelelements 26 ist das Ausführungsbeispiel gemäß Fig. 22A-22C funktional gleich dem Ausführungsbeispiel gemäß Fig. 1A, 1B bis 5A-5G, sodass auf die Erläuterungen zum Ausführungsbeispiel gemäß Fig. 1A, 1B bis 5A-5G verwiesen werden soll. Insbesondere ist auch bei dem Ausführungsbeispiel gemäß Fig. 22A-22C das zweite Verbindungsteil 3 über eine Naht 5 mit einer zugeordneten Baugruppe 4 in Form eines Gurts verbunden.

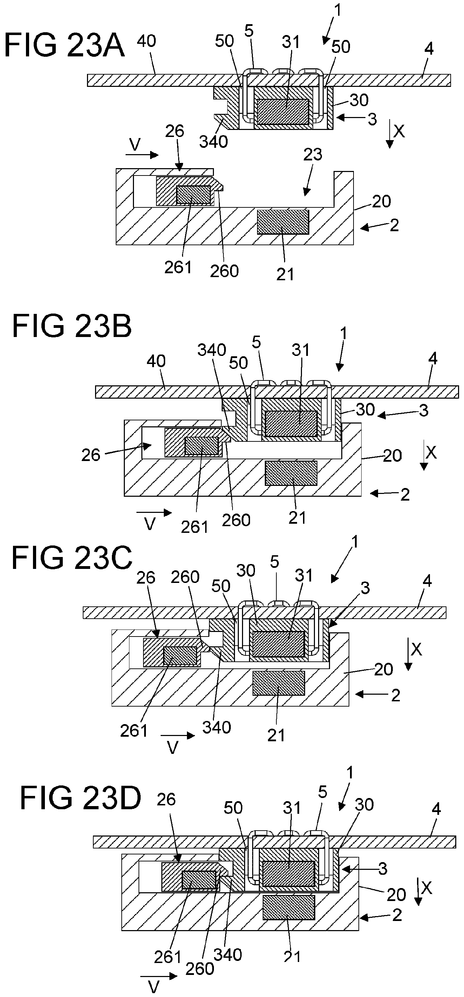

Bei einem weiteren, in Fig. 23A-23D dargestellten Ausführungsbeispiel weist eine Verbindungsvorrichtung 1 zwei Verbindungsteile 2, 3 auf, die entlang einer Schließrichtung X aneinander angesetzt werden können. Ein erstes Verbindungsteil 2 weist einen ersten Grundkörper 20 auf, der eine Aufnahmeöffnung 23 ausbildet, in die das zweite Verbindungsteil 3 mit einem zweiten Grundkörper 30 entlang der Schließrichtung X eingesetzt werden kann, um die Verbindungsteile 2, 3 miteinander zu verbinden.

Ein jedes Verbindungsteil 2, 3 weist eine Magneteinrichtung 21, 31 auf, die magnetisch anziehend zusammenwirken, sodass das Ansetzen der Verbindungsteile 2, 3 aneinander magnetisch unterstützt wird.

Analog wie dies vorangehend beschrieben ist, ist bei dem Ausführungsbeispiel gemäß Fig. 23A-23D das zweite Verbindungsteil 3 über eine Naht 5 fest mit einer zugeordneten Baugruppe in Form eines Gurts 4 verbunden. An dem zweiten Grundkörper 30 sind hierzu Nahtlöcher 50 geformt, durch die hindurch sich ein Nahtfaden erstreckt. Die Nahtlöcher 50 sind an dem ersten Grundkörper 50 aneinander angereiht und bilden eine Abfolge von Nahtlöchern 50 aus, die sich um die Magneteinrichtung 31 des Verbindungsteils 3 herum erstrecken, analog wie dies vorangehend anhand des Ausführungsbeispiels gemäß Fig. 1A, 1B bis 5A-5G beschrieben worden ist.

An dem Verbindungsteil 2 ist ein Riegelelement 26 angeordnet, das entlang einer quer zur Schließrichtung X weisenden Verriegelungsrichtung V verschiebbar an dem Grundkörper 20 geführt ist und einen Eingriffsvorsprung 260 trägt. Das Riegelelement 26 weist zudem eine dritte Magneteinrichtung 261 auf, die magnetisch anziehend mit der Magneteinrichtung 31 des Verbindungsteils 3 zusammenwirkt, wenn die Verbindungsteile 2, 3 aneinander angesetzt werden.

Die Verbindungsvorrichtung 1 wird geschlossen, indem die Verbindungsteile 2, 3 entlang der Schließrichtung X aneinander angenähert werden und das Verbindungsteil 3 mit dem Grundkörper 30 in die Aufnahmeöffnung 23 des Grundkörpers 20 des Verbindungsteils 2 eingesetzt wird, wie dies in der Abfolge von Fig. 23A hin zu Fig. 23D ersichtlich ist. Dies erfolgt magnetisch unterstützt durch die magnetische Anziehung der Magneteinrichtungen 21, 31 der Verbindungsteile 2, 3.

Beim Ansetzen der Verbindungsteile 2, 3 aneinander passiert das Verbindungsteil 3 mit einem daran geformten Eingriffsabschnitt 340 den Eingriffsvorsprung 260 des Riegelelements 26, wie dies aus Fig. 23B und 23C ersichtlich ist. Hat der Eingriffsabschnitt 340 den Eingriffsvorsprung 260 passiert, so gelangt das Riegelelement 26 über den Eingriffsvorsprung 260 aufgrund der magnetischen Anziehung zwischen den Magneteinrichtungen 261, 31 selbsttätig in Eingriff mit dem Eingriffsabschnitt 340.

Zum Öffnen der Verbindungsvorrichtung 1 kann das Riegelelement 26, zum Beispiel durch Nutzerbetätigung, entgegen der Verriegelungsrichtung V an dem Grundkörper 20 verschoben werden, sodass der Eingriff zwischen dem Eingriffsvorsprung 260 und dem Eingriffsabschnitt 340 aufgehoben wird und die Verbindungsteile 2, 3 voneinander abgenommen werden können.

Auch bei dem Ausführungsbeispiel gemäß Fig. 23A-23D können die Magneteinrichtung 261 des Riegelelements 26 und die Magneteinrichtung 21 des ersten Verbindungsteils 2 sich magnetisch abstoßend gegenüberstehen. Bei geöffneter Verbindungsvorrichtung 1 wird in diesem Fall das Riegelelement 26 in einer entgegen der Verriegelungsrichtung V zurückgesetzten, entriegelten Stellung an dem Grundkörper 20 gehalten, was das Ansetzen der Verbindungsteile 2, 3 erleichtern kann. Bei Ansetzen der Verbindungsteile 2, 3 aneinander übersteigt ab einem gewissen Punkt die magnetische Anziehungskraft zwischen der dritten Magneteinrichtung 261 und der zweiten Magneteinrichtung 31 die magnetische Abstoßung zwischen der dritten Magneteinrichtung 261 und der ersten Magneteinrichtung 21. Sind die Verbindungsteile 2, 3 aneinander angesetzt worden, so wird das Riegelelement 26 somit aufgrund der magnetischen Anziehung in Eingriff mit dem Eingriffsabschnitt 340 gezogen, sodass die Verbindungsteile 2, 3 relativ zueinander verriegelt werden.

Eine Verbindungsvorrichtung 1 der beschriebenen Art kann beispielsweise an einer Tasche oder einem Rucksack verwendet werden. Die Verbindungsvorrichtung 1 kann hierbei zum Verbinden von Gurtenden, zum Verbinden von Gurten mit einem Taschenkörper oder zum Schließen eines Deckels einer Tasche oder eines Rucksacks oder zum Anbringen eines Gegenstands an der Tasche oder dem Rucksack dienen.

Die Verbindungsvorrichtung 1 kann als Verschluss für einen Schuh, als Verschluss für Taschen an einem textilen Gegenstand, zum Beispiel einer Jacke oder Weste, oder als Verschluss für eine medizinische Bandage dienen.

Die Verbindungsvorrichtung 1 kann als Verschluss für eine Bauchtasche oder für einen Werkzeuggurt dienen.

Ebenso kann die Verbindungsvorrichtung 1 als Halterung für Gegenstände, insbesondere von Werkzeugen oder Objekten, zum Beispiel einem elektronischen Gerät, einem Licht oder dergleichen, an einem Gürtel, insbesondere einem Werkzeuggürtel dienen.

Die Verbindungsvorrichtung 1 kann als Verschluss für einen Gurt an einem Musikinstrument, zum Beispiel einer Gitarre, dienen.

Die Verbindungsvorrichtung 1 kann zum Beispiel zum Befestigen eines Gurts an einem Fahrrad, zum Beispiel an einem Gepäckträger oder einem Korb an einem Fahrrad, dienen.

Die Verbindungsvorrichtung 1 kann zudem als Verschluss für einen Helm dienen.

Die Verbindungsvorrichtung 1 kann einen Gurtverschluss zum Verschnüren eines Gegenstands, zum Beispiel einer Matte, bereitstellen.

Die Verbindungsvorrichtung 1 kann darüber hinaus einen Verschluss für ein Gurtsystem zum Verstauen von Gepäck in einem Fahrzeug, zum Beispiel einem Pkw, zur Verfügung stellen.

Die Verbindungsvorrichtung 1 kann als Verschluss für ein Verstellsystem im Innenraum eines Fahrzeugs zur Verfügung stellen, zum Beispiel für ein Sonnenrollo.

Die Verbindungsvorrichtung 1 kann eine Halterung für Gegenstände an einer Ablage, zum Beispiel für Schlüsselanhänger an einer Schlüsselablage, zur Verfügung stellen.

Verbindungsvorrichtungen 1 können als Halterung für einen Fotoapparat, zum Beispiel zum Verbinden des Fotoapparats mit Gurten, dienen.

Eine Verbindungsvorrichtung 1 kann als Verschluss für eine Armbanduhr oder ein Armband dienen.

Bei allen genannten Anwendungen löst die Rotierbarkeit der Verbindungsteile 2, 3 wichtige Aspekte der Anforderung der jeweiligen Anwendung. Herkömmliche Steckverschlüsse, wie sie häufig für derartige Anwendung verwendet werden, sind nicht rotierbar.

Andere Anwendungsmöglichkeiten sind denkbar und möglich.

Insbesondere kann eine Verbindungsvorrichtung der beschriebenen Art nicht nur als Gurtbandverschluss zum Verbinden von Grundenden oder als Objektbefestigungseinrichtung verwendet werden. Eine Verbindungsvorrichtung der beschriebenen Art kann zum Verbinden ganz beliebiger Baugruppen miteinander eingesetzt werden.

### Bezugszeichenliste

- 1: Verbindungsvorrichtung
- 2: Verbindungsteil (Female-Teil)
- 20: Grundkörper
- 200: Gewindeabschnitt
- 21: Magneteinrichtung
- 22: Gurtbandaufnahme
- 23: Aufnahmeöffnung
- 230: Bodenfläche
- 231: Aussparung
- 232: Eintauchöffnung
- 233: Stützabschnitt
- 234: Stufe
- 235: Auflaufschräge
- 236: Blockierabschnitt (Begrenzungswandung)
- 237: Übergangsfläche
- 239: Öffnung
- 24: Eingriffseinrichtung
- 240, 241: Eingriffsvorsprung
- 242, 243: Erhabener Abschnitt
- 244, 245: Gleitschräge
- 246: Federverriegelungselement (C-Ring)
- 25: Befestigungsöffnung
- 26: Riegelelement
- 260: Verriegelungsabschnitt
- 261: Magneteinrichtung
- 262: Betätigungslasche
- 27: Schraubring
- 3: Verbindungsteil (Male-Teil)
- 30: Grundkörper
- 300: Basisabschnitt
- 301: Befestigungsabschnitt
- 302: Basisfläche
- 303: Blockierelement (Bund)
- 304: Kante
- 305: Kantenabschnitt
- 306: Eingriffsvorsprung
- 31: Magneteinrichtung
- 34: Eingriffseinrichtung
- 340, 340: Eingriffsabschnitt
- 35: Befestigungsöffnung
- 4: Stoffteil (Gurt)
- 40: Betätigungsabschnitt
- 5: Naht
- 50: Nahtloch
- 51: Nut
- 52: Nähbereich
- 6, 6': Naht
- 60, 60': Nahtloch
- 61, 61': Nut
- 62, 62': Nähbereich
- 7: Stoffteil (Stoff)
- A1, A1': Abstand
- A2, A2', A2": Abstand
- H: Höhenrichtung
- K: Kippachse
- N: Normalenrichtung
- O: Öffnungsrichtung
- Q: Querrichtung
- R: Rotationsachse
- U: Umfangsrichtung
- V: Verriegelungsrichtung
- X: Schließrichtung
- Y: Eingriffsrichtung
- Z1, Z2: Zentrum

## Patentansprüche

1. Verbindungsvorrichtung (1), mit
einem einer ersten Baugruppe (7) zugeordneten, ersten Verbindungsteil (2), das einen ersten Grundkörper (20) und eine Eingriffseinrichtung (24, 26) mit zumindest einem Eingriffsvorsprung (240, 241, 260) aufweist, und
einem einer zweiten Baugruppe (4) zugeordneten, an das erste Verbindungsteil (2) ansetzbaren, zweiten Verbindungsteil (3), das einen zweiten Grundkörper (30) mit zumindest einem starr an dem zweiten Grundkörper (30) angeordneten Eingriffsabschnitt (340, 341) aufweist, wobei der zumindest eine Eingriffsabschnitt (340, 341) mit der Eingriffseinrichtung (24, 26) des ersten Verbindungsteils (2) in Eingriff bringbar ist, sodass in einer verbundenen Stellung das erste Verbindungsteil (2) und das zweite Verbindungsteil (3) aneinander gehalten sind,
wobei das erste Verbindungsteil (2) eine erste Magneteinrichtung (21) und das zweite Verbindungsteil (3) eine zweite Magneteinrichtung (31) aufweisen, wobei die erste Magneteinrichtung (21) und die zweite Magneteinrichtung (31) zum Unterstützen des Ansetzens des ersten Verbindungsteils (2) und des zweiten Verbindungsteils (3) aneinander magnetisch anziehend zusammenwirken,
**dadurch gekennzeichnet, dass** der erste Grundkörper (20) einen ersten Nähbereich (62, 62') zum Herstellen einer ersten Naht (6, 6') zur Verbindung mit der ersten Baugruppe (7) aufweist, wobei der erste Nähbereich (62, 62') entlang einer ersten Ebene erstreckt ist und, betrachtet entlang der ersten Ebene, zumindest in einem Abschnitt einen kleineren Abstand (A1) zu der ersten Magneteinrichtung (21) aufweist als der zumindest eine Eingriffsvorsprung (240, 241, 260),
und/oder dass der zweite Grundkörper (30) einen zweiten Nähbereich (52) zum Herstellen einer zweiten Naht (5) zur Verbindung mit der zweiten Baugruppe (4) aufweist, wobei der zweite Nähbereich (52) entlang einer zweiten Ebene erstreckt ist und, betrachtet entlang der zweiten Ebene, zumindest in einem Abschnitt einen kleineren Abstand (A2) zu der zweiten Magneteinrichtung (31) aufweist als der zumindest eine Eingriffsabschnitt (340, 341).

2. Verbindungsvorrichtung nach Anspruch 1, **dadurch gekennzeichnet, dass** der erste Grundkörper (20) eine erste Anordnung von Nahtlöchern (60, 60') zum Herstellen der ersten Naht (6, 6') zur Verbindung mit der ersten Baugruppe (7) aufweist, wobei die Nahtlöcher (60, 60') der ersten Anordnung von Nahtlöchern (60, 60') entlang der ersten Ebene aneinander angereiht sind und zumindest einige der Nahtlöcher (60, 60') der ersten Anordnung von Nahtlöchern (60, 60'), betrachtet entlang der ersten Ebene, einen kleineren Abstand (A1) zu der ersten Magneteinrichtung (21) aufweisen als der zumindest eine Eingriffsvorsprung (240, 241, 260),
und/oder dass der zweite Grundkörper (30) eine zweite Anordnung von Nahtlöchern (50) zum Herstellen der zweiten Naht (5) zur Verbindung mit der zweiten Baugruppe (4) aufweist, wobei die Nahtlöcher (50) der zweiten Anordnung von Nahtlöchern (50) entlang der zweiten Ebene aneinander angereiht sind und zumindest einige der Nahtlöcher (50) der zweiten Anordnung von Nahtlöchern (50), betrachtet entlang der zweiten Ebene, einen kleineren Abstand (A2) zu der zweiten Magneteinrichtung (31) aufweisen als der zumindest eine Eingriffsabschnitt (340, 341).

3. Verbindungsvorrichtung nach Anspruch 2, **dadurch gekennzeichnet,**
**dass** der erste Nähbereich (62, 62') entlang zumindest einer geraden oder gekrümmten Linie erstreckt ist und/oder dass der zweite Nähbereich (52) entlang zumindest einer geraden oder gekrümmten Linie erstreckt ist,
und/oder dass der erste Nähbereich (62, 62') entlang mehrerer zueinander unter einem Winkel angeordneter Linien erstreckt ist und/oder dass der zweite Nähbereich (52) entlang mehrerer zueinander unter einem Winkel angeordneter Linien aneinander erstreckt ist.

4. Verbindungsvorrichtung nach Anspruch 2 oder 3, **dadurch gekennzeichnet,**
**dass** in dem ersten Nähbereich (62, 62') Nahtlöcher (60, 60') zum Herstellen einer umfänglich geschlossenen, ersten Naht (6) aneinander angereiht sind und/oder dass in dem zweiten Nähbereich (52) Nahtlöcher (50) zum Herstellen einer umfänglich geschlossenen, zweiten Naht (5) aneinander angereiht sind,
und/oder dass der erste Nähbereich (62, 62'), betrachtet entlang der ersten Ebene, umfänglich um die erste Magneteinrichtung (21) erstreckt ist und/oder dass der zweite Nähbereich (52), betrachtet entlang der zweiten Ebene, umfänglich um die zweite Magneteinrichtung (31) erstreckt ist.

5. Verbindungsvorrichtung nach einem der Ansprüche 2 bis 4, **dadurch gekennzeichnet, dass** der erste Grundkörper (20) mit einer entlang der ersten Ebene erstreckten, ersten äußeren Seite an die erste Baugruppe (7) ansetzbar ist, wobei der erste Nähbereich (62, 62') an der ersten äußeren Seite erstreckt ist, und/oder dass der zweite Grundkörper (30) mit einer entlang der zweiten Ebene erstreckten, zweiten äußeren Seite an die zweite Baugruppe (4) ansetzbar ist, wobei der zweite Nähbereich (52) an der zweiten äußeren Seite erstreckt ist,
wobei insbesondere der erste Grundkörper (20) an einer der ersten äußeren Seite abgewandten, ersten inneren Seite eine erste Nut (61, 61') aufweist, in der Nahtlöcher (60, 60') des ersten Nähbereichs (62, 62') münden, und/oder dass der zweite Grundkörper (30) an einer der zweiten äußeren Seite abgewandten, zweiten inneren Seite eine zweite Nut (51) aufweist, in der Nahtlöcher (50) des zweiten Nähbereichs (52) münden,
wobei insbesondere die erste Nut (61, 61') an der ersten inneren Seite umfänglich um die erste Magneteinrichtung (21) erstreckt ist und/oder dass die zweite Nut (51) an der zweiten inneren Seite umfänglich um die zweite Magneteinrichtung (31) erstreckt ist.

6. Verbindungsvorrichtung nach einem der vorangehenden Ansprüche, **dadurch gekennzeichnet,**
**dass** der zumindest eine Eingriffsabschnitt (340, 341) durch einen Randabschnitt geformt ist, der entlang einer parallel oder schräg zur zweiten Ebene gerichteten Richtung nach außen weist und entlang der Richtung mit dem zumindest einen Eingriffsvorsprung (240, 241, 260) in Eingriff bringbar ist,
und/oder dass der zumindest eine Eingriffsabschnitt (340, 341) des zweiten Verbindungsteils (3), betrachtet entlang der zweiten Ebene, gegenüber einem weiteren Abschnitt des zweiten Grundkörpers (30) nach außen vorspringt,
und/oder dass der zumindest eine Eingriffsabschnitt (340, 341) des zweiten Verbindungsteils (3), betrachtet entlang der zweiten Ebene, umfänglich an dem zweiten Grundkörper (30) umläuft.

7. Verbindungsvorrichtung nach einem der vorangehenden Ansprüche, **dadurch gekennzeichnet, dass** der zweite Grundkörper (30) zwei an voneinander weg weisenden Kanten geformte Eingriffsabschnitte (340, 341) aufweist.

8. Verbindungsvorrichtung nach einem der Ansprüche 1 bis 7, **dadurch gekennzeichnet, dass** der zumindest eine Eingriffsvorsprung (240, 241, 260) des ersten Verbindungsteils (2) starr an dem ersten Grundkörper (20) geformt ist.

9. Verbindungsvorrichtung nach Anspruch 8, **dadurch gekennzeichnet, dass** der zumindest eine Eingriffsabschnitt (340, 341) entlang einer parallel oder schräg zur ersten Ebene weisenden Eingriffsrichtung (Y) mit dem zumindest einen Eingriffsvorsprung (240, 241, 260) des ersten Verbindungsteils (2) in Eingriff bringbar ist.

10. Verbindungsvorrichtung nach Anspruch 9, **dadurch gekennzeichnet, dass** das erste Verbindungsteil (2) einen starr an dem ersten Grundkörper (20) angeordneten Blockierabschnitt (236, 238) aufweist, der ausgebildet ist, in der verbundenen Stellung mit dem zweiten Verbindungsteil (3) zusammenzuwirken, um den Eingriff des zumindest einen Eingriffsabschnitts (340, 341) mit dem zumindest einen Eingriffsvorsprung (240, 241,260) entgegen der Eingriffsrichtung (Y) zu blockieren,
wobei insbesondere das zweite Verbindungsteil (3) zu dem ersten Verbindungsteil (2) verkippbar ist, um zum Trennen des ersten Verbindungsteils (2) und des zweiten Verbindungsteils (3) voneinander die Blockierung entgegen der Eingriffsrichtung (Y) aufzuheben und ein Außereingriffbringen des zumindest einen Eingriffsabschnitts (340, 341) und des zumindest einen Eingriffsvorsprungs (240, 241, 260) zu ermöglichen,
wobei insbesondere das zweite Verbindungsteil (3) zum Verkippen relativ zu dem ersten Verbindungsteil (2) an einer von dem zumindest einen Eingriffsvorsprung (240, 241, 260) abgewandten Seite von dem ersten Verbindungsteil (2) abhebbar ist.

11. Verbindungsvorrichtung nach einem der Ansprüche 1 bis 7, **dadurch gekennzeichnet, dass** der zumindest eine Eingriffsvorsprung (240, 241, 260) des ersten Verbindungsteils (2) an einem an dem ersten Grundkörper (20) angeordneten, federelastisch verformbaren Federverriegelungselement (246) angeordnet ist.

12. Verbindungsvorrichtung nach Anspruch 11, **dadurch gekennzeichnet,**
**dass** das Federverriegelungselement (246) durch einen entlang der ersten Ebene elastisch verformbaren C-Ring geformt ist,
und/oder dass das erste Verbindungsteil (2) und das zweite Verbindungsteil (39) entlang einer Schließrichtung (X) aneinander ansetzbar sind, um den zumindest einen Eingriffsabschnitt (340, 341) des zweiten Verbindungsteils (3) entlang der Schließrichtung (X) mit dem Federverriegelungselement (246) in Eingriff zu bringen, wobei der zumindest eine Eingriffsabschnitt (340, 341) des zweiten Verbindungsteils (3) durch Bewegung entlang einer quer oder schräg zur Schließrichtung (X) weisenden Öffnungsrichtung (O) außer Eingriff von dem Federverriegelungselement (246) bringbar ist, um das erste Verbindungsteil (2) und das zweite Verbindungsteil (3) zum Öffnen der Verbindungsvorrichtung (1) voneinander zu trennen.

13. Verbindungsvorrichtung nach einem der Ansprüche 1 bis 7, **dadurch gekennzeichnet, dass** der zumindest eine Eingriffsvorsprung (240, 241, 260) des ersten Verbindungsteils (2) bewegbar an dem ersten Grundkörper (20) angeordnet ist,
wobei insbesondere der zumindest eine Eingriffsvorsprung (240, 241, 260) des ersten Verbindungsteils (2) entlang einer Verriegelungsrichtung (V) relativ zu dem ersten Grundkörper (20) bewegbar ist und entlang der Verriegelungsrichtung (V) mit dem zumindest einen Eingriffsabschnitt (340, 341) in Eingriff bringbar ist,
wobei insbesondere das erste Verbindungsteil (2) ein entlang der Verriegelungsrichtung (V) an dem ersten Grundkörper (20) bewegbares Riegelelement (26) aufweist, an dem der zumindest eine Eingriffsvorsprung (240, 241, 260) angeordnet ist,
wobei insbesondere das Riegelelement (26) eine dritte Magneteinrichtung (261) aufweist, die dazu ausgestaltet ist, magnetisch anziehend mit der zweiten Magneteinrichtung (31) des zweiten Verbindungsteils (3) zusammenzuwirken, um den zumindest einen Eingriffsvorsprung (240, 241, 260) entlang der Verriegelungsrichtung (V) in Eingriff mit dem zumindest einen Eingriffsabschnitt (340, 341) zu bringen.

14. Verbindungsvorrichtung nach einem der vorangehenden Ansprüche, **dadurch gekennzeichnet, dass** das zweite Verbindungsteil (3) in der verbundenen Stellung um eine zur ersten Ebene senkrechte Richtung zu dem ersten Verbindungsteil (2) verdrehbar ist.

15. System, mit
einer ersten Baugruppe (7),
einer zweiten Baugruppe (4), und
einer Verbindungsvorrichtung (1) nach einem der vorangehenden Ansprüche,
**dadurch gekennzeichnet, dass** der erste Grundkörper (20) des ersten Verbindungsteils (2) durch eine erste Naht (6, 6') an dem ersten Nähbereich (62, 62') mit der ersten Baugruppe (7) vernäht ist,
und/oder dass der zweite Grundkörper (30) des zweiten Verbindungsteils (3) durch eine zweite Naht (5) an dem zweiten Nähbereich (52) mit der zweiten Baugruppe (4) vernäht ist.

16. System nach Anspruch 15, **dadurch gekennzeichnet, dass** die erste Naht (6, 6'), betrachtet entlang der ersten Ebene, zumindest in einem Abschnitt einen kleineren Abstand (A1) zu der ersten Magneteinrichtung (21) aufweist als der zumindest eine Eingriffsvorsprung (240, 241, 260)
und/oder dass die zweite Naht (5), betrachtet entlang der zweiten Ebene, zumindest in einem Abschnitt einen kleineren Abstand (A2) zu der zweiten Magneteinrichtung (31) aufweist als der zumindest eine Eingriffsabschnitt (340, 341).

## Claims

1. Connecting device (1), comprising
a first connecting part (2) which is associated with a first assembly (7) and which comprises a first base body (20) and an engagement device (24, 26) with at least one engagement projection (240, 241, 260), and
a second connecting part (3) which is associated with a second assembly (4), can be attached to the first connecting part (2) and comprises a second base body (30) with at least one engagement portion (340, 341) arranged rigidly on the second base body (30), wherein the at least one engagement portion (340, 341) can be brought into engagement with the engagement device (24, 26) of the first connecting part (2) so that the first connecting part (2) and the second connecting part (3) are held against one another in a connected position,
wherein the first connecting part (2) comprises a first magnetic device (21) and the second connecting part (3) comprises a second magnetic device (31), wherein the first magnetic device (21) and the second magnetic device (31) cooperate in a magnetically attracting manner to support the attachment of the first connecting part (2) and the second connecting part (3) to each other,
**characterized in that** the first base body (20) comprises a first sewing region (62, 62') for producing a first seam (6, 6') for connection to the first assembly (7), wherein the first sewing region (62, 62') extends along a first plane and, viewed along the first plane, has a smaller distance (A1) from the first magnetic device (21) than the at least one engagement projection (240, 241, 260), at least in one section,
and/or **in that** the second base body (30) comprises a second sewing region (52) for producing a second seam (5) for connection to the second assembly (4), wherein the second sewing region (52) extends along a second plane and, viewed along the second plane, has a smaller distance (A2) from the second magnetic device (31) than the at least one engagement portion (340, 341), at least in one section.

2. Connecting device according to claim 1, **characterized in that**
the first base body (20) comprises a first arrangement of seam holes (60, 60') for producing the first seam (6, 6') for connection to the first assembly (7), wherein the seam holes (60, 60') of the first arrangement of seam holes (60, 60') are arranged in a row along the first plane and at least some of the seam holes (60, 60') of the first arrangement of seam holes (60, 60'), viewed along the first plane, are aligned with each other, 60') are arranged in a row along the first plane and at least some of the seam holes (60, 60') of the first arrangement of seam holes (60, 60'), viewed along the first plane, have a smaller distance (A1) from the first magnetic device (21) than the at least one engagement projection (240, 241, 260),
and/or **in that** the second base body (30) has a second arrangement of seam holes (50) for producing the second seam (5) for connection to the second assembly (4), wherein the seam holes (50) of the second arrangement of seam holes (50) are arranged in a row along the second plane and at least some of the seam holes (50) of the second arrangement of seam holes (50), viewed along the second plane, have a smaller distance (A2) from the second magnetic device (31) than the at least one engagement portion (340, 341).

3. Connecting device according to claim 2, **characterized in that**
the first sewing region (62, 62') extends along at least one straight or curved line and/or **in that** the second sewing region (52) extends along at least one straight or curved line,
and/or the first sewing region (62, 62') extends along a plurality of lines arranged at an angle to one another and/or **in that** the second sewing region (52) extends along a plurality of lines arranged at an angle to one another.

4. Connecting device according to claim 2 or 3, **characterized in that**
in the first sewing region (62, 62'), seam holes (60, 60') for producing a circumferentially closed, first seam (6) are arranged in a row and/or **in that** in the second sewing region (52), seam holes (50) for producing a circumferentially closed, second seam (5) are arranged in a row,
and/or the first sewing region (62, 62'), viewed along the first plane, extends circumferentially around the first magnetic device (21) and/or **in that** the second sewing region (52), viewed along the second plane, extends circumferentially around the second magnetic device (31).

5. Connecting device according to any one of claims 2 to 4, **characterized in that** a first outer side, extending along the first plane, of the first base body (20) can be attached to the first assembly (7), wherein the first sewing region (62, 62') extends on the first outer side, and/or **in that** a second outer side, extending along the second plane, of the second base body (30) can be attached to the second assembly (4), wherein the second sewing region (52) extends on the second outer side,
wherein in particular the first base body (20) comprises, on a first inner side facing away from the first outer side, a first groove (61, 61'), in which seam holes (60, 60') of the first sewing region (62, 62') open out, and/or **in that** the second base body (30) comprises, on a second inner side facing away from the second outer side, a second groove (51), in which seam holes (50) of the second sewing region (52) open out,
wherein in particular the first groove (61, 61') on the first inner side extends circumferentially around the first magnetic device (21) and/or **in that** the second groove (51) on the second inner side extends circumferentially around the second magnetic device (31).

6. Connecting device according to any one of the preceding claims, **characterized in that**
the at least one engagement portion (340, 341) is formed by an edge portion which faces outwards along a direction parallel or oblique to the second plane and is engageable along the direction with the at least one engagement projection (240, 241, 260),
and/or the at least one engagement portion (340, 341) of the second connecting part (3), viewed along the second plane, projects outwards with respect to a further section of the second base body (30)
and/or the at least one engagement portion (340, 341) of the second connecting part (3), viewed along the second plane, extends circumferentially around the second base body (30).

7. Connecting device according to any one of the preceding claims, **characterized in that** the second base body (30) comprises two engagement portions (340, 341) formed at edges facing away from each other.

8. Connecting device according to any one of claims 1 to 7, **characterized in that** the at least one engagement projection (240, 241, 260) of the first connecting part (2) is rigidly formed on the first base body (20).

9. Connecting device according to claim 8, **characterized in that** the at least one engagement portion (340, 341) can be brought into engagement with the at least one engagement projection (240, 241, 260) of the first connecting part (2) along an engagement direction (Y) extending parallel or obliquely to the first plane.

10. Connecting device according to claim 9, **characterized in that** the first connecting part (2) comprises a blocking portion (236, 238) which is arranged rigidly on the first base body (20) and is designed to interact with the second connecting part (3) in the connected position in order to block the engagement of the at least one engagement portion (340, 341) with the at least one engagement projection (240, 241, 260) against the direction of engagement (Y),
wherein in particular the second connecting part (3) can be tilted relative to the first connecting part (2) in order to release the blocking against the direction of engagement (Y) in order to separate the first connecting part (2) and the second connecting part (3) from one another and to enable the at least one engagement portion (340, 341) and the at least one engagement projection (240, 241, 260) to be disengaged,
wherein in particular the second connecting part (3) can be lifted off the first connecting part (2) for tilting relative to the first connecting part (2) on a side facing away from the at least one engagement projection (240, 241, 260).

11. Connecting device according to any one of claims 1 to 7, **characterized in that** the at least one engagement projection (240, 241, 260) of the first connecting part (2) is arranged on a resiliently-deformable spring locking member (246) arranged on the first base body (20).

12. Connecting device according to claim 11, **characterized in that**
the spring locking member (246) is formed by a C-ring elastically deformable along the first plane,
and/or the first connecting part (2) and the second connecting part (39) are attachable to each other along a closing direction (X) in order to bring the at least one engagement portion (340, 341) of the second connecting part (3) into engagement with the spring locking member (246) along the closing direction (X), wherein the at least one engagement portion (340, 341) of the second connecting part (3) can be disengaged from the spring locking member (246) by movement along an opening direction (O) extending transversely or obliquely to the closing direction (X) in order to separate the first connecting part (2) and the second connecting part (3) from one another for opening the connecting device (1).

13. Connecting device according to any one of claims 1 to 7, **characterized in that** the at least one engagement projection (240, 241, 260) of the first connecting part (2) is movably arranged on the first base body (20),
wherein in particular the at least one engagement projection (240, 241, 260) of the first connecting part (2) is movable along a locking direction (V) relative to the first base body (20) and can be brought into engagement with the at least one engagement portion (340, 341) along the locking direction (V),
wherein in particular the first connecting part (2) comprises a locking member (26) which can be moved along the locking direction (V) on the first base body (20) and on which the at least one engagement projection (240, 241, 260) is arranged,
wherein in particular the locking member (26) comprises a third magnetic device (261) which is designed to interact in a magnetically attracting manner with the second magnetic device (31) of the second connecting part (3) in order to bring the at least one engagement projection (240, 241, 260) into engagement with the at least one engagement portion (340, 341) along the locking direction (V).

14. Connecting device according to any one of the preceding claims, **characterized in that** the second connecting part (3) can be rotated in the connected position about a direction perpendicular to the first plane relative to the first connecting part (2).

15. System, comprising
a first assembly (7),
a second assembly (4), and
a connecting device (1) according to any one of the preceding claims, **characterized in that** the first base body (20) of the first connecting part (2) is sewn to the first assembly (7) by a first seam (6, 6') at the first sewing region (62, 62'),
and/or **in that** the second base body (30) of the second connecting part (3) is sewn to the second assembly (4) by a second seam (5) at the second sewing region (52).

16. System according to claim 15, **characterized in that** the first seam (6, 6'), viewed along the first plane, has a smaller distance (A1) from the first magnetic device (21) than the at least one engagement projection (240, 241, 260), at least in one section,
and/or that the second seam (5), viewed along the second plane, has a smaller distance (A2) from the second magnetic device (31) than the at least one engagement portion (340, 341), at least in one section.

## Revendications

1. Dispositif de liaison (1), avec
une première partie de liaison (2) associée à un premier ensemble (7), qui présente un premier corps de base (20) et un système de prise (24, 26) avec au moins une saillie de prise (240, 241, 260), et
une deuxième partie de liaison (3) associée à un deuxième ensemble (4), pouvant être mise en place sur la première partie de liaison (2), qui présente un deuxième corps de base (30) avec au moins une section de prise (340, 341) disposée de manière rigide sur le deuxième corps de base (30), dans lequel l'au moins une section de prise (340, 341) peut être amenée en prise avec le système de prise (24, 26) de la première partie de liaison (2), de telle sorte que dans une position reliée, la première partie de liaison (2) et la deuxième partie de liaison (3) sont maintenues l'une sur l'autre,
dans lequel la première partie de liaison (2) présente un premier système magnétique (21) et la deuxième partie de liaison (3) un deuxième système magnétique (31), dans lequel le premier système magnétique (21) et le deuxième système magnétique (31) pour soutenir la mise en place de la première partie de liaison (2) et de la deuxième partie de liaison (3) l'une sur l'autre coopèrent par attraction magnétique,
**caractérisé en ce que** le premier corps de base (20) présente une première zone de couture (62, 62') pour réaliser une première couture (6, 6') pour la liaison avec le premier ensemble (7), dans lequel la première zone de couture (62, 62') s'étend le long d'un premier plan et, vue le long du premier plan, présente au moins dans une section une distance (A1) plus petite par rapport au premier dispositif magnétique (21) que celle de l'au moins une saillie de prise (240, 241, 260),
et/ou que le deuxième corps de base (30) présente une deuxième zone de couture (52) pour la réalisation d'une deuxième couture (5) pour la liaison avec le deuxième ensemble (4), dans lequel la deuxième zone de couture (52) s'étend le long d'un deuxième plan et, vue le long du deuxième plan, présente au moins dans une section une distance (A2) plus petite par rapport au deuxième dispositif magnétique (31) que celle de l'au moins une section de prise (340, 341).

2. Dispositif de liaison selon la revendication 1, **caractérisé en ce que** le premier corps de base (20) présente un premier ensemble de trous de couture (60, 60') pour réaliser la première couture (6, 6') pour la liaison avec le premier ensemble (7), dans lequel les trous de couture (60, 60') du premier ensemble de trous de couture (60, 60') sont alignés les uns contre les autres le long du premier plan et au moins certains des trous de couture (60, 60') du premier ensemble de trous de couture (60, 60'), vus le long du premier niveau, présentent une distance (A1) plus petite par rapport au premier dispositif magnétique (21) que l'au moins une saillie de prise (240, 241, 260),
et/ou que le deuxième corps de base (30) présente un deuxième ensemble de trous de couture (50) pour réaliser la deuxième couture (5) pour la liaison avec le deuxième ensemble (4), dans lequel les trous de couture (50) du deuxième ensemble de trous de couture (50) sont alignés les uns contre les autres le long du deuxième niveau et au moins certains des trous de couture (50) du deuxième ensemble de trous de couture (50), vus le long du deuxième niveau, présentant une distance (A2) plus petite par rapport au deuxième dispositif magnétique (31) que l'au moins une section de prise (340, 341).

3. Dispositif de liaison selon la revendication 2, **caractérisé en ce**
**que** la première zone de couture (62, 62') s'étend le long d'au moins une ligne droite ou courbe et/ou que la deuxième zone de couture (52) s'étend le long d'au moins une ligne droite ou courbe,
et/ou que la première zone de couture (62, 62') s'étend le long de plusieurs lignes disposées les unes par rapport aux autres à un angle et/ou que la deuxième zone de couture (52) s'étend le long de plusieurs lignes disposées les unes par rapport aux autres à un angle.

4. Dispositif de liaison selon la revendication 2 ou 3, **caractérisé en ce**
**que** dans la première zone de couture (62, 62'), des trous de couture (60, 60') sont alignés les uns contre les autres pour la réalisation d'une première couture (6) fermée sur la circonférence et/ou que dans la deuxième zone de couture (52), des trous de couture (50) sont alignés les uns contre les autres pour la réalisation d'une deuxième couture (5) fermée sur la circonférence,
et/ou que la première zone de couture (62, 62'), vue le long du premier niveau, s'étend sur la circonférence autour du premier dispositif magnétique (21) et/ou que la deuxième zone de couture (52), vue le long du deuxième niveau, s'étend sur la circonférence autour du deuxième dispositif magnétique (31).

5. Dispositif de liaison selon l'une quelconque des revendications 2 à 4, **caractérisé en ce que** le premier corps de base (20) peut être mis en place sur le premier ensemble (7) avec un premier côté extérieur s'étendant le long du premier plan, dans lequel la première zone de couture (62, 62') s'étend sur le premier côté extérieur, et/ou que le deuxième corps de base (30) avec un deuxième côté extérieur s'étendant le long du deuxième plan peut être mis en place sur le deuxième ensemble (4), dans lequel la deuxième zone de couture (52) s'étend sur le deuxième côté extérieur,
dans lequel, en particulier, le premier corps de base (20) présente une première rainure (61, 61') sur un premier côté intérieur opposé au premier côté extérieur, dans laquelle débouchent les trous de couture (60, 60') de la première zone de couture (62, 62'), et/ou que le deuxième corps de base (30) présente une deuxième rainure (51) sur un deuxième côté intérieur opposé au deuxième côté extérieur, dans laquelle débouchent des trous de couture (50) de la deuxième zone de couture (52),
dans lequel, en particulier, la première rainure (61, 61') sur le premier côté intérieur s'étend sur la circonférence autour du premier dispositif magnétique (21) et/ou que la deuxième rainure (51) sur le deuxième côté intérieur s'étend sur la circonférence autour du deuxième dispositif magnétique (31).

6. Dispositif de liaison selon l'une quelconque des revendications précédentes, **caractérisé en ce**
**que** l'au moins une section de prise (340, 341) est formée par une section de bord, qui pointe vers l'extérieur le long d'une direction parallèle ou oblique au deuxième plan et peut être amenée en prise le long de la direction avec l'au moins une saillie de prise (240, 241, 260),
et/ou que l'au moins une section de prise (340, 341) de la deuxième partie de liaison (3), vue le long du deuxième plan, fait saillie vers l'extérieur par rapport à une autre section du deuxième corps de base (30),
et/ou que l'au moins une section de prise (340, 341) de la deuxième partie de liaison (3), vue le long du deuxième plan, tourne circonférentiellement sur le deuxième corps de base (30).

7. Dispositif de liaison selon l'une quelconque des revendications précédentes, **caractérisé en ce que** le deuxième corps de base (30) présente deux sections de prise (340, 341) formées sur des arêtes s'écartant l'une de l'autre.

8. Dispositif de liaison selon l'une quelconque des revendications 1 à 7, **caractérisé en ce que** l'au moins une saillie de prise (240, 241, 260) de la première partie de liaison (2) est formée de manière rigide sur le premier corps de base (20).

9. Dispositif de liaison selon la revendication 8, **caractérisé en ce que** l'au moins une section de prise (340, 341) peut être amenée en prise le long d'une direction de prise (Y) parallèle ou oblique au premier plan avec l'au moins une saillie de prise (240, 241, 260) de la première partie de liaison (2).

10. Dispositif de liaison selon la revendication 9, **caractérisé en ce que** la première partie de liaison (2) présente une section de blocage (236, 238) disposée de manière rigide sur le premier corps de base (20), qui est réalisée pour coopérer dans la position reliée avec la deuxième partie de liaison (3) pour bloquer la prise de l'au moins une section de prise (340, 341) avec l'au moins une saillie de prise (240, 241,260) dans le sens opposé à la direction de prise (Y),
dans lequel, en particulier, la deuxième partie de liaison (3) peut être basculée par rapport à la première partie de liaison (2) pour annuler le blocage dans le sens opposé à la direction de prise (Y) pour séparer la première partie de liaison (2) et la deuxième pièce de liaison (3) l'une de l'autre et pour permettre une mise hors prise de l'au moins une section de prise (340, 341) et de l'au moins une saillie de prise (240, 241, 260),
dans lequel, en particulier, la deuxième partie de liaison (3) peut être soulevée de la première partie de liaison (2) pour être basculée par rapport à la première partie de liaison (2) sur un côté opposé à l'au moins une saillie de prise (240, 241, 260).

11. Dispositif de liaison selon l'une quelconque des revendications 1 à 7, **caractérisé en ce que** l'au moins une saillie de prise (240, 241, 260) de la première partie de liaison (2) est disposée sur un élément de verrouillage à ressort (246), élastiquement déformable, disposé sur le premier corps de base (20).

12. Dispositif de liaison selon la revendication 11, **caractérisé en ce**
**que** l'élément de verrouillage à ressort (246) est formé par un anneau en C élastiquement déformable le long du premier plan,
et/ou que la première partie de liaison (2) et la deuxième partie de liaison (39) le long d'une direction de fermeture (X) peuvent être mises en place l'une contre l'autre pour amener en prise l'au moins une section de prise (340, 341) de la deuxième partie de liaison (3) le long de la direction de fermeture (X) avec l'élément de verrouillage à ressort (246), dans lequel l'au moins une section de prise (340, 341) de la deuxième partie de liaison (3) peut être amenée hors prise de l'élément de verrouillage à ressort (246) par un déplacement le long d'une direction d'ouverture (O) transversale ou oblique par rapport à la direction de fermeture (X) pour séparer la première partie de liaison (2) et la deuxième partie de liaison (3) l'une de l'autre pour ouvrir le dispositif de liaison (1).

13. Dispositif de liaison selon l'une quelconque des revendications 1 à 7, **caractérisé en ce que** l'au moins une saillie de prise (240, 241, 260) de la première partie de liaison (2) est disposée de manière mobile sur le premier corps de base (20),
dans lequel en particulier l'au moins une saillie de prise (240, 241, 260) de la première partie de liaison (2) le long d'une direction de verrouillage (V) peut être déplacée par rapport au premier corps de base (20) peut être amenée en prise avec l'au moins une section de prise (340, 341) le long de la direction de verrouillage (V),
dans lequel, en particulier, la première partie de liaison (2) présente un élément de verrouillage (26) pouvant être déplacé sur le premier corps de base (20) le long de la direction de verrouillage (V), sur lequel l'au moins une saillie de prise (240, 241, 260) est disposée,
dans lequel en particulier l'élément de verrouillage (26) présente un troisième dispositif magnétique (261) qui est configuré pour coopérer par attraction magnétique avec le deuxième dispositif magnétique (31) de la deuxième partie de liaison (3) pour amener l'au moins une saillie de prise (240, 241, 260) le long de la direction de verrouillage (V) en prise avec l'au moins une section de prise (340, 341).

14. Dispositif de liaison selon l'une quelconque des revendications précédentes, **caractérisé en ce que** la deuxième partie de liaison (3) peut être tournée dans la position reliée autour d'une direction perpendiculaire au premier plan par rapport à la première partie de liaison (2).

15. Système, avec
un premier ensemble (7),
un deuxième ensemble (4), et
un dispositif de liaison (1) selon l'une quelconque des revendications précédentes,
**caractérisé en ce que** le premier corps de base (20) de la première partie de liaison (2) est cousu au premier ensemble (7) par une première couture (6, 6') sur la première zone de couture (62, 62'),
et/ou que le deuxième corps de base (30) de la deuxième partie de liaison (3) est cousu au deuxième ensemble (4) par une deuxième couture (5) sur la deuxième zone de couture (52).

16. Système selon la revendication 15, **caractérisé en ce que** la première couture (6, 6'), vue le long du premier plan, présente au moins dans une section une distance (A1) plus petite par rapport au premier dispositif magnétique (21) que celle de l'au moins une saillie de prise (240, 241, 260)
et/ou que la deuxième couture (5), vue le long du deuxième plan, présente au moins dans une section une distance (A2) plus petite par rapport au deuxième dispositif magnétique (31) que celle de l'au moins une section de prise (340, 341).
